(19) Europäisches Patentamt
European Patent Office
Office européen des brevets

(11) EP 1 560 158 A1

(12) **EUROPEAN PATENT APPLICATION**
published in accordance with Art. 158(3) EPC

(43) Date of publication:
**03.08.2005 Bulletin 2005/31**

(21) Application number: **03808904.1**

(22) Date of filing: **17.10.2003**

(51) Int Cl.[7]: **G06N 5/00**

(86) International application number:
**PCT/JP2003/013327**

(87) International publication number:
**WO 2004/036497 (29.04.2004 Gazette 2004/18)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **18.10.2002 JP 2002305041**

(71) Applicant: **Japan Science and Technology Agency**
**Kawaguchi-shi, Saitama 332-0012 (JP)**

(72) Inventor: **FUJIWARA, Yuzuru**
**Tsukuba-shi, Ibaraki 305-0025 (JP)**

(74) Representative: **Leppard, Andrew John**
**D Young & Co**
**120 Holborn**
**London EC1N 2DY (GB)**

(54) **LEARNING/THINKING MACHINE AND LEARNING/THINKING METHOD BASED ON STRUCTURED KNOWLEDGE, COMPUTER SYSTEM, AND INFORMATION GENERATION METHOD**

(57) The present invention is to provide a learning machine capable of expressing/accumulating concept and semantic relation by understanding semantic relation of information as a relation between concepts after characteristics, semantic relation and structure of information and the like have been analyzed. The present invention is intended to realize a thinking machine in which information is inclusively collected and stored as knowledge structured based on the semantic relation of the collected information, information is generated by predetermined inference so as to have a new semantic relation in response to an inquiry or request and which can decide an optimal solution to an inquiry and the like by evaluating/deciding new generated information.

*FIG. 1*

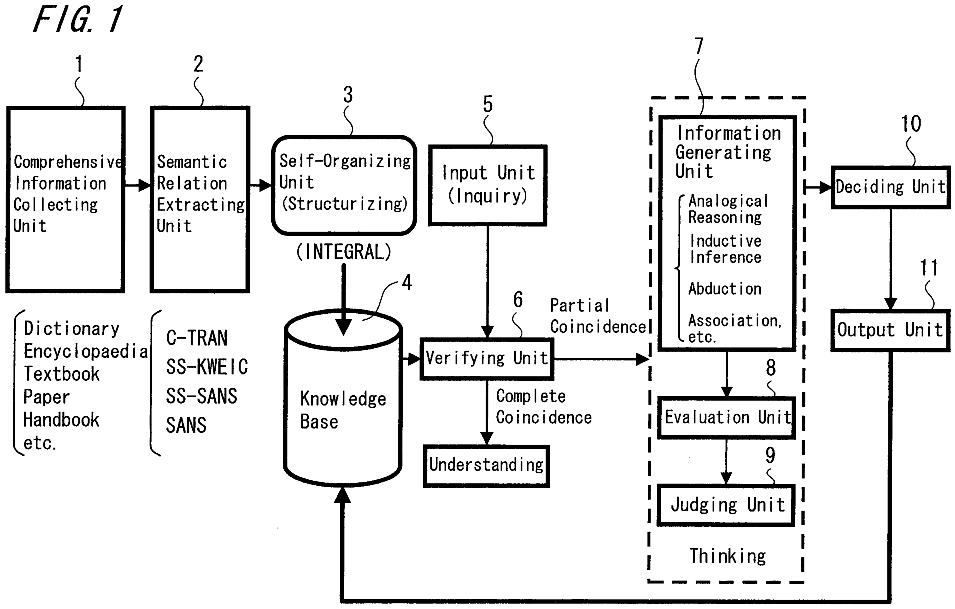




Printed by Jouve, 75001 PARIS (FR)

## Description

### TECHNICAL FIELD

The present invention relates to a thinking machine based on learned knowledge, that is, a computer. Particularly, the present invention relates to a thinking machine capable of not only understanding meaning of words but also realizing intelligent functions such as generation of new information, analogical reasoning, inductive inference, abduction, association, evaluation, judgment and decision-making by systematically rearranging meaning of words and by structuring knowledge.

### BACKGROUND ART

A computer now available is what might be called a "Turing machine" and its limits are known well. That is, the Turing machine is a machine operable under the leadership of incorporated rules and works in accordance with programs inputted by a man. In other words, this conventional type machine is a machine focusing code processing such as numerical computation, deductive inference and retrieval. When a man inputs data into this conventional machine, this machine makes processing based upon incorporated programs and outputs predetermined results.

To overcome the limits of closed world (Closed World) of this turning machine, the Turing machine should be designed so as to operate under the leadership of rule but it should be designed so as to operate under the leadership of knowledge like a man's brain. The reason for this becomes self-evident from the comparison of a Turing theory and a brain function. The Turing machine is able to neither generate new information (or knowledge) nor to think over based on accumulated knowledge to obtain necessary results in the same way as a man does.

Although knowledge memory structures and semantic representation systems have been so far studied and proposed in order to break down the limits of this Turing machine, an adequate theory therefor has not yet been established and an example of a specific machine has not yet been created.

The inventor of the present invention has already proposed a system capable of formulating a model of a conceptual memory structure to sufficiently structure the semantic relationships based upon the formulated model of the conceptual memory structure by analyzing characteristics of information, semantic relationships and structures and has applied it to expert fields such as materials, chemistry and computer and information science. Then, the inventor of the present invention has confirmed effectiveness of such system and has reported this effectiveness to the related science society (see cited non-patent reference 1).

Also, an abduction apparatus and an abduction method have been proposed to verify an abduction inferred from the accumulated knowledge and to self-organize the information accumulated as the knowledge (see cited patent reference 1).

[Cited non-patent reference 1]:

Journal of the Japan Society of Information and Knowledge: General Remarks Vol. 9, No. 1, pp. 13 to 22, 1999 "PRESENT STATE AND PROSPECT OF BASICS OF INFORMATICS"

[Cited patent reference 1]:

Official Gazette of Japanese laid-open patent application No. 2002-132506

### DISCLOSURE OF THE INVENTION

Herein, information is referred to as "recognized contents about substance which becomes an object to be recognized or thought" and it contains all of information which will be referred to as information in a general sense. Next, while knowledge is sometimes similarly referred to as information in a wide sense, knowledge means information processing in a narrow sense, in particular, a constant formalized knowledge in the field of artificial intelligence. Although knowledge is used as an intermediate sense between a wide sense and a narrow sense, it is used as a word that means "information which is structured in response to a semantic relation".

While development of an information-oriented society becomes increasingly remarkable in accordance with the explosive spread of the Internet, this is caused by the fact that computers are able to process and transmit a large quantity of information at a high speed. Of course, it is needless to say that the remarkable development of the information-oriented society is caused by rapid development of communication technologies and recording technologies.

Present computers, however, are unable to make reasonable idea and creation which are characteristic functions inherent in a man's intellectual activities. In order to realize these functions, it is necessary to go through the processes such as understanding, analogical reasoning, inductive inference, abduction, association, evaluation, judgment and decision of a given problem. However, computers which can make those processing are not available at present. Present computers are able to realize only a part of functions of binary logic and symbolic logic under specific conditions.

On the other hand, various models that can express and describe meaning of information have been considered. For example, in the field of database, there exist models such as an entity-relationship mode (E-R model) and an object-oriented model which can express the real world as a database.

In the field of artificial intelligence, there has been proposed a semantic expression model such as a semantic network and frame. However, since the Turing machine which is mainly engaged in processing based upon programs is much restricted in flexibility and management function of a system realizing a model serving as a system base, the function of the turning machine is insufficient and it is unable to sufficiently express a semantic relationship of information.

The present computers are able to execute operation of the four rules of arithmetic, code verification, that is, numerical analysis, keyword search, deductive inference and the like at a high speed with high accuracy. Even when processing such as more advanced prediction and estimation is carried out, various methods have been considered and put into practical use although they are not perfect. However, other function such as analogical reasoning which is related to semantic processing does not reach the practicable stage. However, since the present computers can express the meaning of information whose semantic relationship was structured by it structure, they can execute semantic processing by navigation, verification and permutation and hence it becomes possible to use the present computers variously in a more advanced fashion by making expression corresponding to the meaning for the semantic processing unlike the case in which the link existing on the Web for making access cannot allow semantic selection.

For example, when a concept relationship is extracted and an inclusion relation between the concepts is structured, a similarity relation that cannot be handled by simple code processing can be handled directly, which becomes very important with respect to the use of information. Also, when a logic relation is structured, a sequential navigation corresponds to a deductive inference and an inverse navigation corresponds to an abduction, respectively, and it becomes possible to generate information by using analogical reasoning, inductive inference and association together with a concept structure. That is, when various meanings that information has are structured, semantic concepts described and expressed by the structure can be handled by the computer. Further, as high-order functions, object understanding, analysis, idea, problem solving and decision making and so on can be realized by compounding these information generation and semantic contents.

Analogical reasoning, deductive inference and abduction and so on which are frequently used in thinking include semantic processing, which are not deterministic processing unlike inductive inference of binary logic and are accompanied with information generation, which therefore could not be realized so far. According to the present invention, the present invention can cope with a sufficient semantic relationship by organizing a semantic relationship between the concepts and it becomes possible to execute processing such as analogical reasoning and information generation. According to this description form, an ordinary semantic relationship including duality, relativity, modality and uncertainty of node and link, which could not be handled by a tree structure, a network structure and a hyper-graph, can be handled explicitly.

In order to realize a high-order thinking function such as analogical reasoning, inductive inference, abduction, association, idea, evaluation, judgment, decision and so on, it is necessary to use a series of associated semantic relationship such as an analogical relationship that cannot be handled only by code processing as a key. Also, since both of a database and a knowledge base has such a fundamental thinking in which some idea and other idea can be distinguished from each other in the object region and a concept has very much overlapping of concept as is seen in a multiple hierarchical structure, it is extremely difficult to describe and express the concept without considering such overlapping of concept in actual practice. Also, a differential expression causes an overlapping of concept inevitably. Further, an analogy has a relationship of a concept having an overlapping and therefore it cannot be handled as a discrete independent concept.

A relation type database mode which is another typical example is widely used as a database management system from a PC and a workstation to a large-scale computer but its function for handling the entity and relation is extremely limited. However, some model is able to directly handle the relation as in the entity - relation type (E - R). However, in the E - R model, since the roles of the entity and the relation are respectively fixed as graphs, when it is intended to handle the relation itself as the entity or vice versa, it surpasses the definition of the graph and therefore it cannot be used.

Also, concept has relativity. That is, although nodes and links have roles different from each other and they are distinguished from each other, it becomes necessary to handle both of them similarly from the standpoint of semantic expression. That is, the relation between the entities and the entity should be made relative. The high-order concept and the low-order concept are not relative and the low-order concept can be produced under the lowest-order concept so that the high-order and the low-order are relative ones which can change depending upon the situations. For example, a relationship between a man and a car is a relationship in which one owns the other. A concept of possession is not limited to the relation but it can become entity as an independent concept. Including the above-mentioned partial overlapping expression such as the similarity, a problem of semantic expression cannot be handled properly by the existing information processing technology based on simple denotation.

When information necessary for research and development is directly used by a research worker and a technical expert, information cannot be sufficiently used practically only by the conventional processing such as keyword retrieval. Therefore, not only numerical value computation and deductive inference but also various functions containing semantic processing should be realized. Accordingly, comprehansive information should be collected, arranged, made readable by computers and analyzed. Also, based upon the information model for sufficiently expressing meaning of information, semantic relation of information should be structured in a self-organizing fashion and information should be arranged into resources so that the meaning of the system can be interpreted.

Then, it is hoped that a thinking-support self-organized type information base system having functions such as problem solving, evaluation and judgment functions from analogical reasoning, inductive inference, abduction and association or a brain-type computer with a learning/thinking function and a computer system using the brain-type computer can be realized.

The present invention intends to realize a high-order thinking function such as meaning understanding, analogical reasoning, inductive inference and hypothetical generation which cannot be realized by the above-described conventional type Turing machine. In particular, it is an object of the present invention to provide a learning machine capable of analyzing information characteristic, semantic relation, structure and the like which are the essence of information and which can understand the semantic relation of information as a relationship between the concepts so that it can express and accumulate meanings that the concept and the relation have. Also, it is an object of the present invention to provide a thinking machine capable of comparing an inputted question with knowledge that have already been accumulated to thereby execute suitable processing such as understanding, generation of necessary information, evaluation, judgment and decision of the generated information and a computer system using such a thinking machine.

To attain the aforementioned objects, in a learning/thinking machine claimed in claim 1, a learning /thinking machine includes the following means. That is, a learning/thinking machine includes a knowledge based composed of:

(1) a means for inclusively collecting information:
(2) a means for extracting a semantic relation from the collected information in accordance with a plurality of analytical rules;
(3) a means for storing therein semantic contents as a knowledge structured so as to sufficiently express said semantic contents based on the extracted semantic relation, a learning/thinking machine based on a structured knowledge comprising:
(4) a means for generating new information by predetermined inference in response to an inquiry or request such that a knowledge structured based on the semantic relation may have new semantic content and relation;
(5) a means for evaluating generated new information;
(6) a means for judging sequencing of the evaluated result;
(7) a means for determining an optima solution based on a judged result;
(8) an input means for receiving an inquiry or request from the outside; and
(9) a verifying means for verifying the inquiry or request from the outside and the knowledge base, wherein if it is determined by the verifying means that the inquiry or request are completely coincident with the knowledge base, then understanding of such coincidence is transmitted to a central unit and if it is determined that the inquiry or request from the outside are partly coincident with the knowledge base, then information is generated by predetermined inference such that the knowledge structured based on the semantic relation may have new semantic relation and content.

A learning/thinking method according the present invention claimed in claim 2 is comprised of:

(1) a knowledge input step for inputting inclusively collected data, information and knowledge;
(2) a knowledge structuring step for analyzing information from said inputted data, information and knowledge, extracting a semantic relation in accordance with a plurality of rules and storing structured knowledge based on the extracted semantic relation;
(3) an information generating step for generating new information by predetermined inference so that the knowledge structured based on the semantic relation has new semantic content and relation;
(4) an evaluation judging step for evaluating the information generated new knowledge by verifying the information generated result and the knowledge base;
(5) a knowledge generating step for accumulating the evaluated/judged result and new information generated knowledge in the knowledge base to increase knowledge; and
(6) an optimal solution deciding step for storing the evaluated/judged result and new information generated knowledge in the knowledge base to increase a knowledge;
the information generating step comprising:
(7) a related node retrieving step for retrieving only a unit in which a related node is stored;
(8) a relating link retrieving step for retrieving only a unit in which a relating link is stored; and
(9) a step for executing inference by using any of at least analogical reasoning, inductive inference, abduction or association based on retrieved result of said related node retrieving step or said relating link retrieving step.

According to a learning/thinking method according to the present invention claimed in claim 3, in a learning/thinking method based on a structured knowledge according to claim 2, the evaluating and judging step comprises:

(1) a step for evaluating new information generated knowledge item by item with reference to the knowledge that has already been stored the knowledge base;
(2) a step for determining whether or not the new generated knowledge satisfies an inquiry request, setting the knowledge as a nominated solution if the knowledge satisfies the request and searching and evaluating other results item by item if the knowledge does not satisfy the request;
(3) a step for sequencing the nominated knowledge with reference to the knowledge base; and
(4) a step for extracting/deciding nominated knowledge whose target necessary condition is optimum from sequenced nominated knowledge.

According to a learning/thinking method based on a structured knowledge according to the present invention claimed in claim 4, a learning/thinking method based on a structured knowledge is characterized in that the knowledge generating step comprises:

(1) a step for determining whether or not new knowledge information generated at the information generating step and which is generated at the evaluating/deciding step as an optimal solution is increased as a new node;
(2) a step for storing the new node in a unit integration memory if it is determined that the new information is increased as the new node;
(3) a step for determining the generated new knowledge is increased as a link regardless of the increase of the node; and
(4) a step for storing the new link in the unit integration memory if it is determined that the generated new knowledge is increased as the new link.

According to the learning/thinking machine and the learning/thinking method of the present invention, by structuring various meaning of information, it is possible to understand the semantic content described and expressed through the semantic structure of information by a computer. As a high-order function, there can be realized analysis, idea, evaluation, problem-solving, decision of intention and the like. Thus, it is possible to realize the learning/thinking machine and the learning/thinking method which can surpass human brain in speed, accuracy and capacity.

Next, a computer system including the above-described learning/thinking machine according to the present invention will be described. In general, when a plurality of the above-mentioned learning/thinking machines (hereinafter referred to as a computer) is used, processed knowledge is stored in a memory and information is processed, a quantity of processing for reading out knowledge from the memory and comparing the knowledge runs into astronomical figures if a quantity of knowledge is larger. For example, when a space having a connection relative to N knowledge (concepts, terms) is represented by a graph, it can be expressed as spaces of N's square number. However, when such space is expressed by a hyper-graph, it may be expressed by spaces of N's square of 2. Further, when it is expressed by a homogenized bipartite graph, it is extended to a vehement space such as spaces of the number of Nth power of 2 in which Nth power of Nth power of 2 are provided recursively.

Having considered a quantity of a man's knowledge, when N becomes the unit of ten thousand (a hundred thousand to one million), since the information processing quantity in these spaces are Nth power (Nth power), such information processing quantity becomes a vehement information processing quantity which is difficult to be processed in actual practice. This is referred to as an NP-complete (NP complete) problem.

An information processing system according to the present invention is to provide a super-brain type computer system in which this NP-complete problem can be solved.

To attain this object, in a computer system claimed in claim 5, a computer system in which a central management computer and a plurality of cell computers are coupled so as to communicate with each other, a computer system is characterized in that:

(1) the central management computer can store all addresses and names of a plurality of cell computer before it is being operated, the central management computer can input questions to all of a plurality of computer and the central management computer can output answers to questions;
(2) all of the cell computers stores therein a knowledge structured so as to indicate each knowledge and its connection destination knowledge and all of the cell computers can access information of a connection destination of a semantic relation of each knowledge;
(3) when a question is inputted, the question is transmitted from the central management computer to a plurality of cell computers, as a presupposing operation, the cell computer is changed to a processing target state or an unsuitable state based on connection information of a semantic relation relative to the question of knowledge each of a plurality of cell computers has; and

a cell computer having no semantic relation to the question is placed in the unsuitable state and transmits information indicative of the unsuitable state to the central management computer and the relating cell computer, only the cell computer having a connection of a semantic relation is placed in the processing target state, only the cell computer in the processing target state continues processing, the central management computer analyzes an answer from the cell computer in the processing target state and understands meaning in response to a question to thereby generate new information and (5) the central management computer converts the generated new information into an output form corresponding to the question and outputs the converted information as an answer.

According to a computer system claimed in claim 6, in a computer system according to claim 5, a computer system is characterized in that:

the central management computer comprises:

(1) a request condition analyzing unit for analyzing a condition of an inputted question when a question is inputted to the input unit;
(2) a request condition processing target cell detecting unit for transmitting a request condition to all cell computers based on the analyzed request condition, receiving a reply of the unsuitable state from an unsuitable cell computer and detecting a processing target cell computer from all of the cell computers except the unsuitable cell computer in response to the request condition;
(3) a retrieval transmitting and receiving unit for continuing to retrieve only the detected processing target cell computer, receiving a retrieval answer from the processing target cell computer and analyzing a retrieved result based on the received retrieval answer;
(4) a semantic understanding/information generating unit for executing semantic understanding and information generation from the analyzed retrieved result to generate new information;
(5) an output information converting unit for converting generated new information into a requested output form;
(6) a cell connection destination address memory unit for storing therein an address of a connection destination cell computer having a semantic connection based on the generated new information in such a manner that the address can be updated sequentially; and
(7) an answer output unit for outputting the generated new information in the requested output form.

According to a computer system claimed in claim 7, in a computer system according to claim 5, a computer system is characterized in that:

a plurality of cell computers comprises:

(1) a request condition processing target judging unit for determining by using decision information indicative of the presence or absence of a connection destination cell computer whether or not its own cell computer becomes a processing target in response to the request condition simultaneously transmitted from the central management computer to all cell computers;
(2) an unsuitable replay/connection destination cell communicating unit for returning an information indicative of an unsuitable state to the central management computer if its own cell computer is unsuitable for the request condition and transmitting information indicative of the processing target state to a connection destination cell computer if its own cell computer becomes a processing target in response to the request condition;
(3) a retrieval receiving unit for receiving retrieval information from the central management computer if its own cell computer becomes the processing target in response to the request condition;
(4) a connection destination judging unit for retrieving other connection destination cell computer which its own cell computer has information connection in response to the request condition and determining by using information of the connection destination cell computer whether or not retrieval based on retrieval information can be executed at every request condition;
(5) a retrieval answer unit for returning an answer of the executed retrieval to said central management computer;
(6) a knowledge memory unit for storing knowledge obtained based on the retrieval information and the answer of retrieval such that the knowledge can be updated sequentially; and
(7) a connection destination cell memory unit for storing a connection destination cell computer corresponding to the obtained knowledge such that the connection destination cell computer can be updated sequentially.

According to a computer system claimed in claim 8, in a computer system according to claim 7, a computer system is characterized in that:

the connection destination judging unit comprises:

(1) a step number N retrieving means for retrieving a path in which said request condition has a structure of a step number N (natural number);

(2) a tree-like path retrieving means for retrieving a path in which the request condition has a tree-like structure; and
(3) a loop-like path retrieving means for retrieving a path in which the request condition has a loop-like path to thereby judge a connection corresponding to the request condition structure.

According to an information generating method claimed in claim 9, in an information generating method using a computer system in which a central management computer and a plurality of cell computers are coupled so as to communicate with each other in which

(1) the central management computer stores therein only addresses of a plurality of cell computers before being operated, the central management computer can input a question to a plurality of cell computer and can output an answer to a question;
(2) each of a plurality of cell computers stores therein each knowledge structured in such a manner as to indicate knowledge and knowledge of its connection destination and also stores therein connection destination information of a semantic relation of each knowledge, an information generating method comprises:
(3) a step in which a question is transmitted from said central management computer to all of a plurality of cell computers when a question is inputted;
(4) a step for changing the state into a processing target state or unsuitable state based upon connection information of a semantic relation relative to the question of a knowledge of each of a plurality of cell computers as presupposing operation;
(5) a step in which a cell computer having no connection of a semantic relation to said question is placed in the unsuitable state to return information indicative of the unsuitable state to the central management computer and only a cell computer having a connection of a semantic relation is placed in the processing target state to return an answer to the central management computer;
(6) a step in which the central management computer continues to output a question to only a cell computer in the processing target state; and
(7) a step for generating new information by analyzing and understanding an answer from the cell computer in the processing target state, converting generated new information into an output form corresponding to a question and outputting converted output as an answer.

According to an information generating method claimed in claim 10, in an information generating method according to claim 9, an information generating method is characterized in that:

the central management computer including:

(1) a step for analyzing a condition of an inputted question by a request condition analyzing unit when a question is inputted to a question input unit;
(2) a step for transmitting the request condition to all cell computers by a request condition processing target cell detecting unit based on the analyzed request condition, receiving an answer indicative of the unsuitable state from an unsuitable cell computer and detecting a cell computer, which becomes a processing target in response to the request condition, from all cell computers excepting the unsuitable cell computer;
(3) a step for continuing to effect the later retrieving operation on the detected processing target cell computer by a retrieval transmitting and receiving unit to receive a retrieval answer from the processing target cell computer;
a step for analyzing the retrieved result by a retrieved result analyzing unit based on the received detected retrieval answer;
(4) a step for understanding meaning and generating information from said analyzed result by the semantic understanding/information generating unit;
(5) a step for converting said generated new information into a requested output form by the output information converting unit;
(6) a step for storing an address of a connection destination cell computer having a semantic connection based on the generated new information such that the address can be updated sequentially; and
(7) a step for outputting the generated new information in the requested output form by the answer output unit.

According to an information processing method claimed in claim 11, in an information processing method according to claim 9, an information generation method is characterized in that:

a plurality of cell computers includes:

(1) a step in which it is determined at a request condition processing target judging unit by using judgment information indicative of presence or absence of a connection destination cell computer in response to request conditions simultaneously transmitted from the central management computer to all cell computers whether or not its own cell computer becomes a processing target;
(2) a step in which an unsuitable state is returned to the central management computer if its own cell computer is unsuitable for the request condition and in which the processing target state is transmitted to the connection destination cell computer by the unsuitable reply/connection destination communicating unit if its own cell computer becomes a processing target for the request condition;

(3) a step for receiving retrieval information from the central management computer by a retrieval receiving portion if its own cell computer become a processing target relative to the request condition;

(4) a step for retrieving other connection destination cell computer which its own cell computer has an information connection in response to the request condition and in which it is determined at a connection destination judging unit by using information of the connection destination cell computer whether or not the retrieval based on the retrieval information can be executed for every request condition;

(5) a step for returning the retrieval answer to the central management computer by a retrieval answer unit;

(6) a step for storing the retrieval information and a knowledge obtained based on an answer of a retrieval in a knowledge memory unit such that they can be updated sequentially; and

(7) a step for storing a connection destination cell computer corresponding to the obtained knowledge in a connection destination cell memory unit such that it can be updated sequentially.

According to an information processing method claimed in claim 12, in an information generating method according to claim 11, an information processing method is characterized in that:

the decision step of the connection destination judging unit includes:

(1) a step for determining whether or not there is a connection destination cell computer at a node number N including its own cell computer in an operation for searching a path having a step number N (natural number) in a connection decision having a request condition structure;

(2) a step for determining based on information indicative of the fact that there is a connection destination cell computer at a node number N that cell computer including its own cell computer having the node number N are placed in the processing target state and in which information is transmitted through the unsuitable reply/connection destination cell communicating unit to the central management computer such that these cell computers are to be moved to the processing target state; and

(3) a step in which it is determined based on information indicative of the fact that there is no connection destination cell computer at the node number N that cell computer including its own cell computer having other node number are placed in the unsuitable state, information is transmitted through the unsuitable reply/connection destination cell communicating unit to the central management computer such that these cell computers are to be moved to the unsuitable state and in which information indicative of the unsuitable state is transmitted to the central management computer.

According to an information processing method claimed in claim 13, in an information generating method according to claim 11, an information generating method is characterized in that:

the decision step of said connection destination judging unit includes:

(1) a step in which when a tree-like path including its own cell computer is retrieved in the operation for retrieving a tree-like path in a connection decision based on a request condition structure, it is determined whether or not a tree-like connection destination cell computer including its own cell computer is placed at the end, it is sequentially determined that cell computers at the end are placed at the end so that it is determined that all of tree-like connection destination cell computer are placed at the end;

(2) a step in which it is determined based on information indicative of the fact that all tree-like connection destination cell computer are placed at the end that cell computers at the end are placed in the processing target state so that it is determined that all tree-like connection destination cell computers are placed at the processing target state and that information is transmitted through the unsuitable reply/connection destination cell communicating unit to the central management computer such that these cell computers are to be moved to the processing target state; and

(4) a step in which it is determined that all remaining loop-like connection destination cell computers except tree-like connection destination cell computers in the processing target state are placed in the unsuitable state so that information is transmitted through the unsuitable reply/connection destination cell communicating unit to the central management computer such that these computers are to be moved to the unsuitable state and that information indicative of the unsuitable state is transmitted to the central management computer.

According to an information processing method claimed in claim 14, in an information generating method according to claim 11, an information generating method is characterized in that:

the decision step of the connection destination judging unit includes:

(1) a step in which when loop-like connection destination cell computer including its own cell computer are retrieved in the operation for retrieving a loop-like path in the connection decision based on the request condition structure, it is determined whether or not tree-like connection destination cell computers including its own cell computer are placed at the end, it is determined that connection destination cell computers at the end also are not belonging to a loop so that it is determined that all tree-like connection destination cell computers also are not belonging to the loop;
(2) a step in which it is determined based on information indicative of the fact that all tree-like connection destination cell computers are placed at the end that cell computers at the end are placed in the unsuitable state;
(3) it is determined that all tree-like connection destination cell computer are placed in the unsuitable state, information is transmitted through the unsuitable reply/connection destination cell communicating unit to the central management computer such that these cell computers are to be moved to the unsuitable state and in which information indicative of the unsuitable state is transmitted to the central management computer;
(4) a step for determining whether or not there is a cell computer including its own cell computer at a node number N (natural number);
a step in which tree-like connection destination cell computer in the unsuitable state are removed, it is determined by further decision of the node number N that remaining loop-like connection destination cell computer having the node number N are placed at the processing target state and information is transmitted through the unsuitable reply/connection destination cell communicating unit to said central management computer so that these cell computers are to be moved to the processing target state; and
(5) a step in which it is determined based on information indicative of the fact that there is no connection destination cell computer at the node number N that cell computers including its own cell computer having other node number are placed in the unsuitable state so that information is transmitted through the unsuitable reply/connection destination cell communicating unit to the central management computer such that these cell computers are to be moved to the unsuitable state and
(6) a step in which information indicative of the unsuitable state is transmitted to the central management computer.

According to the computer system and the information processing method using this computer system of the present invention, the cell computer having no direct or indirect connection to the question is placed in the unsuitable state and only the cell computer having the connection relating to the question is placed in the processing target state, whereby only the cell computer having the semantic connection can execute the thinking operation similarly to the action of human brain cell. Thus, the NP-complete problem can be solved.

BRIEF DESCRIPTION OF DRAWINGS

FIG. 1 is a block diagram showing an overall arrangement of a learning/thinking machine according to the present invention;
FIG. 2 is a functional block diagram showing operations of the inside of the learning/thinking machine according to the present invention more in detail;
FIG. 3 is a diagram used to explain actions of the learning/thinking machine according to the present invention in the classified form of a learning stage and a thinking stage;
FIG. 4 is a flowchart to which reference will be made in explaining actions of the whole of the present invention;
FIG. 5 is a flowchart to which reference will be made in explaining actions of the data/information/knowledge input stage in FIG. 4 in detail;
FIG. 6 is a flowchart to which reference will be made in explaining actions of the knowledge organizing (structuring) stage in FIG. 4 in detail;
FIG. 7 is a flowchart to which reference will be made in explaining actions of the information generating stage in FIG. 4 in detail;
FIG. 8 is a flowchart to which reference will be made in explaining actions of the evaluating/deciding stage in FIG. 4 in detail;
FIG. 9 is a flowchart to which reference will be made in explaining actions of the knowledge generating stage in FIG. 4 in detail;
FIG. 10 is a diagram showing a relationship of "is-a" in the form of a graph;
FIG. 11 is a diagram showing a relationship of "is-a" in the form of a homogenized bipartite model;

FIG. 12 is a diagram used to explain relativity between "concept" and "relationship" by using a term "borrow";

FIG. 13 is a diagram showing an outline of a knowledge self-organizing system based on a semantic relation;

FIG. 14 is diagram used to explain a method of collecting synonym sets by a C-TRAN method shown in FIG. 13;

FIG. 15 is a diagram used to explain an example of extracting a hierarchy/relation relationship by a SS-KWEIC method shown in FIG. 13;

FIG. 16 is a diagram used to explain a procedure for extracting a relation relationship by an SS-SANS method shown in FIG. 13;

FIG. 17 is a block diagram showing an arrangement of a super-brain computer system;

FIG. 18 is a block diagram showing an arrangement of a central management computer in FIG. 17;

FIG. 19 is a block diagram showing an arrangement of a cell computer in FIG. 17;

FIG. 20 is a flowchart to which reference will be made in explaining a request condition processing target cell detection operation;

FIG. 21 is a flowchart to which reference will be made in explaining a request condition processing target decision start operation;

FIG. 22 is a flowchart to which reference will be made in explaining a connection destination cell state communication start operation;

FIG. 23 is a flowchart to which reference will be made in explaining operations for searching a path having a step number N in a connection decision having a request condition structure;

FIG. 24 is a flowchart to which reference will be made in explaining operations for searching a tree-like path in the connection decision having the request condition structure;

FIG. 25 is a flowchart to which reference will be made in explaining operations for searching a loop-like path in the connection decision having the request condition structure;

FIG. 26 is a flowchart to which reference will be made in explaining a connection destination cell memory start operation;

FIG. 27 is a flowchart to which reference will be made in explaining a connection destination retrieval start operation;

FIG. 28 is a flowchart to which reference will be made in explaining operations of a retrieval answer unit;

FIG. 29 is a flowchart to which reference will be made in explaining retrieval transmission and reception operations;

FIG. 30 is a flowchart to which reference will be made in explaining a retrieval result analyzing operation;

FIG. 31 is a flowchart to which reference will be made in explaining meaning understanding/information generating operations; and

FIG. 32 is a flowchart to which reference will be made in explaining output information conversion operations.

BEST MODE FOR CARRYING OUT THE INVENTION

Before explaining the embodiment of the present invention, a theory which becomes a presupposition of the present invention will be described. A method for understanding information as a set of relationship between a concept and a concept to thereby describe a meaning as a structure constructed from the relationship between the concept and the concept can be illustrated by a graph of FIG. 10. That is, a sentence " dog is animal" is obtained by connecting a concept (node) of "dog" and a concept (node) of "animal" with a relationship of "is a" (relation of "is-a" - link: shown by an arrow). Such graphical description has a limit in expressing a semantic relation. The graph method for connecting the concept (node) and the concept (node) with the relationship (link) cannot handle a relationship such as a casual relationship having a relationship of more than three concepts. This is a limit of the graphical description system which can handle only a binomial relation of a conventional type. While it is possible to express a casual relationship by a decision tree, a decision tree is not a graph.

Accordingly, in order to handle not only the binomial relationship but also a polynomial relationship more than a trinomial relationship and also in order to express a meaning of a relation similarly to a meaning of a concept, the inventor of the present application has decided to handle this relationship of "is-a" as one concept equally to "dog" and "animal". That is, as shown in FIG. 11, "is-a" is handled as one concept as seen from the computer. In other words, the inventor of the present application invents that one "is -a" relationship of "dog is animal" is divided into two relations of a relation of "dog" and "is - a" and a relation of "is - a" and "animal". Since the relation can handled as the concept as described above (this is referred to as a "relativity of node and link"), it becomes possible to express a polynomial relationship, a casual relationship, a duality and a relativity as well. That is, according to the above arrangement, it becomes possible to process languages and meanings of sentences by a computer with ease and in detail.

FIG. 12 is a diagram schematically showing a more complex sentence. A portion arranged by a group (A) shown by a narrow solid-line ellipse shows "[borrow] is [debit and credit relation]". Herein, "borrow" and "debit and credit relation" show concepts and "is-a" shows a relationship of the group (A). A group (B) shown by a dotted-line ellipse indicates a sentence of "I borrow car". Although "I" and "car" in this case are concepts, the word "borrow" indicates a relationship between these two concepts. While the word "borrow" becomes either the relation or the concept as seen in this example, this is referred to as a relativity of concept and relation. The inventor of the present application has discovered that, when relation is handled similarly to concept and postpositional particles of Japanese such as "は", "で" and "を" or arrows are put on the link which connects concept and concept, a later semantic processing by the computer can become extremely universal.

The inventor of the present application has named the above-described structure, which can handle concept and relation similarly, as a homogenized bipartite graph model (Homogenized Bipartite Model: HBM) and has already proposed it in the paper that has been introduced previously. By using this homogenized bipartite graph model, it becomes possible to create a concept structure which can support all semantic contents from characteristics of semantic contents of information. Thus, it becomes possible to realize high-order functions such as analogical reasoning, inductive inference and hypothetical generation.

The homogenized bipartite graph model is a structure which follows:

$$E \subseteq 2^{V} \quad (1)$$

$$V = V \cup E \quad (2)$$

$$E = E \cup V \quad (3)$$

$$ó : L \rightarrow V \cup E \quad (4)$$

Herein, V represents a set of nodes indicating concepts of information, E represents a set of links indicating relation of information and L represents a label, that is, a set of expressions. ó indicates that a label (character string) is assigned to node and line, that is, concept and relation.

This homogenized bipartite graph model is an extension of a hyper-graph which can handle a polynomial relationship. In the hyper-graph, the number of links becomes less than V-power of 2 as shown by the equation (1) where V represents the total number of nodes. The homogenized bipartite graph model is a model that an satisfy the equations (2) and (3) at the same time in addition to this equation (1). That is, while the equation (1) which can be also be satisfied by the hyper-graph indicates that link (relation) exists as an arbitrary subset of a set of nodes, the equation (2) indicates that link (relation) can be handled as node (concept) and the equation (3) indicates that node (concept) can be handled as line (relation). The equation (2) corresponds to abstraction or a recursive structure and the equation (3) indicates that a nested-like internal structure can be allowed. Having connected the relations of the equations (2) and (3), it is to be understood that the node and the link are fundamentally relative and thereby homogenized. The equation (4) indicates a correspondence relationship among node, link and expression (term). While the equation (4) indicates whether all expressions are nodes (concepts) or links (relations), this equation may consider an auxiliary expression indicating a role or a position that a certain node (concept) has relative to a link (relation) (auxiliary expression generally corresponds to prepositional particles of Japanese such as "は" and "で") as well. It is possible to express node and link by using arrows instead of "は" and "で".

In order to resource information suitable for management together with semantic understanding of information, it is convenient to structure information into a physical structure relative to bibliographic information, a concept structure relative to a concept relation and a logic structure relative to a logic relation mainly composed of a casual relationship from a standpoint of extracting a semantic relation and from a standpoint of managing information resources. However, having included the semantic processing of information, it is to be understood that the above structuring is not sufficient from the description and understanding standpoints. Thus, it is necessary to organize (structure) the whole of information based upon the semantic relation of information. FIG. 13 is a diagram to which reference will be made in explaining a knowledge self-organizing system based on a semantic relation. The self-organizing means that a concept and a relation are autonomously organized in response to semantic relations housed therein.

Here, it can be considered that self-organizing and structuring are synonyms. Accordingly, a database 40 is created by inclusively collecting information resources such as a glossary having many technical terms, an encyclopedia, a handbook, a journal of papers, a textbook, a technical magazine and the like. Next, equivalence relation, hierarchical relation, various kinds of semantic relations and the like are extracted from the thus inclusively collected information by a C-TRAN method 41, an SS-KWEIC method 42, an SS-SANS method 43 and an SANS method 44. Then, integration is executed based upon respective semantic relations extracted by an INTEGRAL method 45. In this manner, structuring, that is, self-organization of information/knowledge is automatically realized based upon the semantic relations and the semantic relations are collected and accumulated in a knowledge base 46 as self-organize knowledge information.

The methods for extracting these various kinds of relations will be described individually. The C-TRAN method (Constrained Transitive Closure) is a method for extracting an equivalence relation between words, that is, a set of synonyms. For example, this is a method for extracting described a Japanese version and an English version as an equivalence relation by using a collection of the Japanese original words having the English translations on the opposite side page. In the extracting procedure, as shown in FIG. 14, "computer" is described in the collection of the Japanese original words having the English translations on the opposite side page as a translated word of 計算機 in Japanese language. If katakana words of "コンピュータ" is described in "computer" in English language portion, "計算機", "computer", "コンピュータ" are extracted as equivalence relations. In a like manner, if English words of "PC" is described as "コン ピュータ" in Japanese language, then "PC" also is regarded as an equivalence relation and a set of synonyms is broadened in a transitive closure fashion.

Next, a SS-KWEIC method (Semantically Structured Key Word element Index in terminological Context) is a method for obtaining a hierarchical relation (broader term, narrower term) and a relevant relation after a composite word was resolved into fundamental constructive words based upon a constructive rule of a technical term to analyze a mutual relation.

Technical terms have the following characteristics. That is, most of technical terms are a noun; a modifying relation for modifying or limiting the feature and state of radicals of indeclinable parts of speech that can stand as the subject of a sentence of a post-portion by a radical of a pre-portion is frequent; and a word includes a plurality of radicals frequently.

Based upon these characteristics, it is possible to extract the hierarchical relation and the relevant relation by resolving a complex word into fundamental constructive words to analyze the mutual relation in accordance with the constructive rule of the technical term. It is possible to determine based upon the modifying relation in the synthesized word whether the mutual relation is the hierarchical relation or the relevant relation.

FIG. 15 is a diagram showing an example in which the hierarchical/relevant relation is extracted by the SS-KWEIC method. As technical terms which are before being resolved, there are provided "system", "information system", "control system", "weather information system" and "finance information system". The technical terms other than "system" are resolved into two to three words and it is determined based upon the modifying relation whether the mutual relation is the hierarchical relation or the relevant relation. That is, a flow from the higher rank to the lower rank of "system → information system → weather information system" indicates the hierarchical relation and "information system" and "control system"; and "weather information system" and "finance information system" indicate relevant relations.

An SS-SANS method (Semantically Specified Syntactic Analysis) is a method in which a constant syntax, which centers a specific word, is determined, a new equivalent syntax pattern is searched by using a syntax analyzed result and the specific word and syntax are broadened by recursively using such syntax. According to this method, an important logic relation in natural science and the like, in particular, a relevant relation such as a casual relationship can automatically be extracted and structured.

FIG. 16 is a diagram showing a procedure in which a relevant relation is extracted by the SS-SANS method. Now, having considered a sentence "structure is measured by NMR" as an actual sentence, a sentence "structure is ... by NMR" is collected as words corresponding to a specific word "measure" and "analyze" and "decompose" are extracted. Then, sentences "structure is analyzed by NMR" and "structure is decomposed by NMR" are generated as related sentences. When a word corresponding to the specific word "structure" is searched from those newly generated sentences and related words such as "compound", "molecule", "spectrum" are introduced, sentences "compound is analyzed by NMR" and "spectrum is decomposed by NMR" are generated. Further, words relating to the specific word "NMR" are searched based upon these sentences and thereby words such as "infrared rays", "X rays" and "mass analysis" are extracted. As a result, since new semantic relations "spectrum is analyzed by infrared rays" and "compound is measured by mass analysis" are extracted, knowledge is increased without limit. In this example, various relations of "measuring means" and "analysis object" and "processed contents" can be obtained explicitly. A method for forming and accumulating new knowledge by sequentially obtaining specific words and related word from the sentences, that is, a method for obtaining relevant relations between the words by recursively expanding syntaxes and words is the SS-SANS method.

While there are various kinds of casual relations, these kinds are a cause and effect relation which directly leads to the effect, a factor and effect relation which leads to the effect by a combination of several factors and a reason and effect which leads to the effect due to some reason although its necessity is not sufficient. If these relations are structured by the SS-SANS method, then it is possible to realize deductive inference by a simple navigation or search and it is possible to realize analogical reasoning and analogical abduction generation by using the hierarchical structure as well.

An SANS method (Semantic Analysis of Sentences) is a semantic analysis method independent of speciality and which is used to analyze general sentence. This method can demonstrate its effects when it is used after technical terms were accumulated by the C-TRAN method, the SS-KWEIC method and the SS-SANS method.

An INTEGRAL method (Integration of Domain Established Knowledge) is a method for integrating and structuring concepts and the whole of relations semantically extracted by a suitable method such a the C-TRAN method, the SS-KWEIC method, the SS-SANS method and the SANS method.

Based upon the above-mentioned presupposing theory, an embodiment of the present invention will hereinafter be described with reference to the drawings. FIG. 1 is a block diagram showing an embodiment of the present invention.

An comprehansive information collecting unit 1 is a unit for inclusively collecting words from a dictionary, dictionaries, a textbook, a paper, a handbook and the like. A target field of information collected herein is not limited to a particular one but information can be collected while its target area is limited to a medical treatment field, a chemical field and the like. A semantic relation extracting unit 2 may extract semantic relations of various kinds of words and technical terms collected by the comprehansive information collecting unit 1 by using the C-TRAN method, the SS-KWEIC method, the SS-SANS method and the SANS method that have already been described. To be concrete, it may extract the equivalence relation, the hierarchical relation, the casual relationship, the relevant relation and relation between words in other semantic relation.

A self-organizing unit 3 is a unit for integrating and structuring knowledge based upon the semantic relation extracted by the semantic relation extracting unit 2 and the thus integrated and structured knowledge is accumulated in a knowledge base 4. The knowledge base 4 is a unit that is assumed to be a brain of the learning/thinking machine of the present invention, and it is a unit in which learned knowledge or new knowledge generated as a result of thinking is memorized.

An input unit 5 is a unit for inputting new information and a unit for inputting an inquiry "India has a large population and IT promotion is active. Is there any possibility that India will extend its business to Silicon Valley?"

A verifying unit 6 is a unit for extracting relevant information knowledge from the knowledge base 4 in response to the inquiry from the input unit 5 to thereby verify whether or not the inquiry and the extracted information knowledge is coincident with each other. If there is the extracted knowledge information which is completely coincident with the inquiry inputted to the knowledge base 4, the verifying unit transmits a message indicative of understanding to the central unit and outputs its effect to an output apparatus such as a display apparatus, not shown. If they are not completely coincident with each other, that is, if they are partly coincident with each other, then the verifying unit transmits the effect to an information generating unit 7.

The information generating unit 7 is a unit for generating new information by various methods such as analogical reasoning, inductive inference, abduction and association. For example, let it now be assumed that knowledge "Not India but China has a large population, its IT promotion is active and China has extended its business to Silicon Valley" is extracted from the knowledge base 4 as relating information in response to the inquiry "India has a large population and IT promotion is active. Is there any possibility that India will extend its business to Silicon Valley?" Referring to this knowledge, India and China are common in the point that they have a large population and that their IT promotions are active. Then, there is a fact that China has already extended its business to Silicon Valley, and hence an answer to the above-described inquiry becomes "YES". That is, new knowledge "There is a large possibility that India will extend its business to Silicon Valley" is generated. This method is a new information generation based upon analogical reasoning. Central information generation mechanisms are three kinds of analogical reasoning, inductive inference and abduction and special operations such as a combination of the above three kinds, expansion, repetition, modification and transform can be added to the information generation mechanism.

The thus obtained new knowledge is evaluated by an evaluating unit 8. The evaluating unit may evaluate the new knowledge with reference to consistency and relevance between the new knowledge and knowledge stored in the knowledge base 4. For example, it can be evaluated that the newly generated knowledge "There is a large possibility that India will extend its business to Silicon Valley" has a high reliability.

The knowledge evaluated by the evaluating unit 8 is judged by a judging unit 9. If the evaluating unit 8 determines the explicit order of evaluation, then the judging unit 9 may select judgment in accordance with the explicit order. If there are outputted other results of more than two, there is nothing to choose between these results and they have incomparable advantages and disadvantages, then a new valuation basis should be obtained in accordance with a valuation basis or purpose. If they are not important problems, one of them should be selected arbitrarily. It is needless to say that ground of judgment and nominated solution may be enumerated as an output.

The whole of operations of the information generating unit 7, the evaluating unit 8 and the judging unit 9 is thinking. Although knowledge is judged by the judging unit 9, if there is a plurality of proper nominated knowledge, then it becomes difficult to select one from the proper nominated knowledge. A deciding unit 10 decides the proper knowledge when the knowledge should be decided under such state. This is a final decision.

The result decided by the deciding unit 10 is accumulated in the knowledge base 4 as new knowledge through an output unit 11. This means the increase of knowledge.

FIG. 2 is a block diagram showing the embodiment of the present invention more in detail. These blocks indicate functions of respective execution stages of a computer which executes a semantic processing and thinking based on the semantic processing and there are no actual circuits corresponding to these blocks.

A learning/thinking machine according to the embodiment of the present invention comprises an comprehansive information collecting unit 21 for collecting data/information/knowledge and the like from an information source such as a dictionary, a semantic relation extracting and describing unit 22 for extracting and describing a semantic relation of a word obtained from the comprehansive information collecting unit 21, a structuring unit 23 for structuring the semantic relation extracted and described by the semantic relation extracting and describing unit 22 as structured knowledge, a unit integrating and storing unit 24 for integrating and storing the structured knowledge, a semantic connection searching unit 25 for searching whether or not the word or concept extracted and described at the semantic relation extracting and describing unit 22 has a semantic connection with words or concepts in the knowledge base that the computer has already had, a relating unit searching unit 26 for searching the unit more in detail if the word or concept has the semantic connection, an inferring unit 27 for executing analogical reasoning, inductive inference, abduction and the like based on the related knowledge if related knowledge is discovered by the related unit searching unit 26, an information generating unit 28 for generating the result inferred at the inferring unit 27 as new information, a nominated concept extracting unit 29 for extracting several relevant nominated concepts based upon the information from the information generating unit 28, a nominated concept deciding unit 30 for deciding one nominated concept from the nominated concepts extracted at the nominated concept extracting unit 29, a knowledge generating unit 31 for labeling and increasing the concept decided at the nominated concept deciding unit 30 as new knowledge and an outputting unit 32 for displaying or printing out the concept decided by the nominated concept deciding unit 30. Here, the unit denotes a memory area including a node or a label of a link directly coupled to a certain node or a label of a link.

FIG. 3 is a diagram used to explain the block diagram of FIG. 2 and it is a diagram used to explain mainly the functions of the block diagram. That is, this diagram shows conceptually the manner in which the learning/thinking machine of the present invention acts similarly to the process during which a man learns and thinks. A learning portion and a thinking portion are separately shown on this diagram.

First, a semantic relation of inputted information (knowledge) is described. In that case, a node (concept) and a link (relation) are described equally. After concepts were labeled, concepts are classified into hierarchy. Common relating concepts are integrated and stored in the common memory area and different concepts are independently stored in different memory areas.

Next, the process goes to an idea stage which is the first stage of thinking. Relating units are searched in order to search a semantic connection. Then, based upon the relating knowledge, information is generated by inference such as analogical reasoning, inductive inference, abduction and association. In the next evaluation stage, nominated knowledge is selected from the knowledge obtained by the information generation based upon the relating knowledge and the process goes to the next judgment stage. In the judgment stage, an answer is selected from several nominated knowledge and decided. Then, this result becomes an increase of new knowledge and added to the knowledge base (integration/independent memory unit).

Next, the action of the embodiment of the present invention will be described with reference to a flowchart. The learning/thinking machine based on the structured knowledge according to the present invention is what might be called a machine which executes the process during which a man learns knowledge and generate new knowledge based on the learned knowledge. FIGS. 4 to 9 are flowcharts showing the whole of these processes. FIG. 4 shows the whole of the man's learning/thinking processes and shows a stage to input data, information and knowledge (step S1), a stage to structure the inputted knowledge in a self-organizing fashion (step S2), an information generating stage (step S3), an evaluating/judging stage (step S4) and a knowledge generating stage (step S5). The information generating stage (step S3) and the evaluating/judging stage (step S4) can be regarded as a thinking stage altogether.

First, the knowledge input stage will be described with reference to FIG. 5. A semantic relation of the inputted sentence is described (step S11). It is first determined whether or not the inputted knowledge has a relation of "is-a" (step S12). If the inputted knowledge has the relation of "is-a", then the inputted knowledge is described as an inheritance relation (step S13). If the inputted knowledge does not have the relation of "is-a", then it is determined whether or not the inputted knowledge has a relation of "part-of" (step S14). The relation of "part-of" refers to a relation of "include" and "included" such as "stomach is one of the digestive organs". If the inputted knowledge has the relation of "part-of", then it is described as a relation of part - whole (step S15).

Most of concept descriptions have the relation of "is-a" and the relation of "part-of". If the inputted knowledge has neither "is-a" nor "part-of", then it is determined whether or not the inputted knowledge has a binomial relation (step S16). A relation between the concepts in the binomial relation other than "is-a" and "part-of" contains a casual relationship "it rains and I put up umbrella". If the inputted knowledge has other binomial relation, then it is described as the binomial relation (step S17). After judgment of the binomial relation, it is determined whether or not the inputted knowledge has a polynomial relation (S18).

An example of polynomial relation, there is known a casual relationship having two causes and one effect. For example, there can be considered a sentence "when it is raining, if I have umbrella, I put up umbrella". When such sentence (knowledge) is inputted, such inputted knowledge is described as the polynomial relation (step S19).

Next, it is determined whether or not inputted knowledge has a recursive relation (step S110). As inputted information having a recursive relation, there are sentences having recursive expressions "My father and mother are ancestors. Ancestor of ancestor is ancestor". Such knowledge is described as the recursive relation (step S111).

Next, it is determined whether or not inputted knowledge has a nested relation (step S112). The nested relation is a relation of an internal structure. For example, there is a sentence "car is composed of engine, body, door ... and engine is composed of piston, cylinder ..." The sentence expressing this internal structure has the nested relation and described as the nested relation (step S113). While the present invention has been described so far with reference to the thus limited six relations, the present invention is not limited to the descriptions of these relations and it is natural that a modal relation of " ○○may be animal" should be taken into consideration.

The respective descriptions that have been made so far are all set to homogenized descriptions of nodes and links (step S114). It is then determined whether or not labeled information knowledge has a relevant relation with the knowledge stored in the knowledge base (step S115). If the labeled information knowledge has the relevant relation, then it is integrated with the knowledge stored in the knowledge base and stored (step S117). If the labeled information knowledge has no relevant relation and it is knowledge of completely new independent concept (step S116), then it is stored independently (step S118).

FIG. 6 is a flowchart showing a knowledge organizing (structuring) stage. It is determined whether or not inputted word or concept overlaps with the word or knowledge that has already been stored in the knowledge base (step S21). If the inputted word or concept overlaps with the word or concept as a node (concept), then it is determined whether or not the word is a polysemic word (step S22). If the word is the polysemic word, then such word is added with an identification code and additionally stored as another node (step S23). If the word does not overlap with the node or if the word is not the polysemic word even though it overlaps with the node, it is then determined whether or not there is a relating node (step S24). If there is the relating ode, then it is determined whether it is a word of a high-order hierarchy or a word of a low-order hierarchy (step S25). If it is determined that the node is the word of the high-order hierarchy, then such node is added to a high-order close node of the existing relating nodes (step S26). Here, a new hierarchical relation is formed. Next, if it is determined that the node is the word of the low-order hierarchy, then such node becomes the node of the low-order hierarchy of the relating word and hence it is added to the low-order close nodes (step S27). While the relationship between the high-order hierarchy and the low-order hierarchy has been described so far, this method can apply for other relations than the high-order hierarchy and the low-order hierarchy, such as an order relationship of a context and a relationship of master and servant as well.

If the word has no node relation, then it is determined whether or not the inputted word overlaps with the link as a link (step S28). If the word overlaps with the link, then control is ended. If the word does not overlap with the link, then it is determined whether or not there is a relating link (step S29). If there is the relating link, then it is determined whether such link is a link of a high-order hierarchy or a link of a low-order hierarchy (S210). If it is determined by the compared result of the relating link that such link is the link of the high-order hierarchy, then it is added to a high-order close link in a hierarchical fashion (step S211). If it is determined that such link is the link of the low-order hierarchy, then it is added to a low-order close link in a hierarchical fashion (step S212). While FIG. 6 shows the flowchart in which the node (concept) and the link (relation) are judged separately, the present invention is not limited thereto and parallel processing such as multi-task processing and time-division multiplexing processing may be carried out.

FIG. 7 is a flowchart showing actions of the information generation stage mainly composed of the verifying unit 6 and the information generating unit 7 shown in FIG. 1. As shown in FIG. 1, if it is determined by verifying inquiry input or some request input with the knowledge stored in the knowledge base that the verified result is partly coincident with the above knowledge, then control enters a thinking stage for generating new knowledge. Specifically, as shown in FIG. 7, a node and a link having a semantic connection are retrieved from the knowledge base in response to the inquiry or the request (step S31). First, the node is retrieved (step S32). If a relating node is found out (step S32), then only a unit in which the relating node was discovered is searched (step S33). When this relating node is retrieved, it is important to take direction relative to the link into consideration. That is, in the case of an example of "cat eats fish", "cat" and "fish" have directional relative to "eats". The reason for this is that "cat" can eat "fish" but "fish" cannot eat "cat".

After the node was searched, a link is retrieved (step S34). Also in this case, only the unit in which a relating link was stored is retrieved (step S35). Then, based upon relating link information, control enters the inference stage (step S36) and analogical reasoning (step S37), inductive inference (step S38) and abduction (step S39) and the like are executed. FIG. 7 shows the above-described three typical inferences and it is needless to say that other inferences such as association may be contained in actual practice. As a result, if some new node or link is formed, then it is to be noted that information is generated (step S310). If neither relating node nor the relating link is found out after the nodes and links have been retreived, then this inquiry cannot be judged. Then, judgment is not executed any further and control is ended.

Next, a flowchart of evaluation/judgment stage will be described with reference to FIG. 8. First, generated information results are labeled and these labeled information results are referred to at every item of knowledge and concept and relevant relation accumulated in the knowledge base 4 (step S41). Then, it is determined whether or not the referred result satisfied the inquiry request (step S42). If the request is satisfied, then generated knowledge is determined as nominated knowledge (step S43). If the request is not satisfied, then other results are retrieved (step S44) and the knowledge base 4 is referred to repeatedly.

Next, the first nominated knowledge is sequenced in accordance with the request standard with reference to knowledge accumulated in the knowledge base 4 (step S45). Then, it is determined whether or not a satisfaction degree of a target necessary condition is maximum (step S46). Then, final decision is made (step S47) and a judged result is outputted through an external output apparatus, not shown, such as the display apparatus and the printing apparatus. Also, the judged result is accumulated in the knowledge base 4 as new knowledge.

Subsequently, a flowchart of a knowledge generating stage will be described with reference to FIG. 9. First, when new information is generated, it is determined whether or not a node should be increased (step S51). If it is determined that the node should be increased, then the newly generated node is integrated with the portion with the relating node and stored (step S52). If it is determined that the node need not be increased, then it is determined whether or not a link should be increased (step S53). If it is determined that the link should be increased, the newly generated link is integrated with the portion with the relating link and stored (step S54). That is, unit integration storage is executed as the node or link. Thus, knowledge can be increased in the knowledge 4 as new knowledge.

As set forth above, according to the present invention, it becomes possible for the computer to understand semantic contents described and expressed through the semantic structure of information by structuring various meanings that information has. Further, as advanced function, it becomes possible to realize analysis of object, idea, evaluation, problem-solving and decision-making and the like by compounding these semantic contents. Thus, it is possible to realize the learning/thinking machine and a learning/thinking method which can surpass a human brain in speed, accuracy and capacity.

A super-brain type computer system for alleviating a computational complexity in order to solve an NP complete problem required when a specific hardware arrangement is realized will be described below.

First, a schematic arrangement and operations of the super-brain type computer system according to the present invention will be described.

FIG. 17 is a block diagram showing an overall arrangement of the super-brain type computer system.

As shown in FIG. 17, this computer system is composed of a central management computer 61 and a cell computer 1 (62-1), a cell computer 2 (62-2), ... a cell computer N (62-N). The central management computer 61, the cell computer 1 (62-1), the cell computer 2 (62-2), ... the cell computer N (62-N) are coupled so as to communicate with each other.

The central management computer 61 stores therein only addresses of the cell computer 1 (62-1), the cell computer 2 (62-2), ... the cell computer N (62-N) so that it is able to input questions to the cell computer 1 (62-1), the cell computer 2 (62-2), ... the cell computer N (62-N) and that it is also able to output answers from the respective cell computers in response to the inputted questions.

Each knowledge (concept, word) is stored in the cell computer 1 (62-1), the cell computer 2 (62-2), ... the cell computer N (62-N) one by one and connection information of semantic relation of each knowledge is stored therein. There are provided almost approximately a hundred thousand, that is, 100 to one hundred million ($10^2$ to $10^8$) of the cell computer 1 (62-1), the cell computer 2 (62-2), ... the cell computer N (62-N) in response to an object and a target and there are provided the cell computer of which number is equal to a quantity of knowledge equal to or larger than a quantity of knowledge stored in the human brain.

When a question is inputted to the central management computer 61, the central management computer 61 transmits questions to all of the cell computer 1 (62-1), the cell computer 2 (62-2), ... the cell computer N (62-N). First, as a presupposing operation, a cell computer having a connection of a semantic relation with knowledge (concept and word) stored therein in response to the inputted question is selected from the cell computer 1 (62-1), the cell computer 2 (62-2), ... the cell computer N (62-N) and thereby coupled to the central management computer dynamically.

For example, when a question is Q1 "Is there any path to return from node A in steps N (within three steps)?", only the cell computer connected from the cell computer corresponding to the node A in a triangular loop fashion, and other more than four cell computers coupled in a loop fashion are placed in the unsuitable state. At that time, the cell computer that is placed in the unsuitable state returns state information, indicative of the fact that it has nothing to do with this question, to the questioner. Only the cell computer which is placed in the processing target state returns an answer to the question.

When a question is Q2 "Any node has loop-like path?", only the cell computer coupled in a loop-like fashion is placed in the processing target state. Then, other cell computers coupled in a tree-like fashion are all placed in the unsuitable state. At that time, the cell computer that is placed in the unsuitable state returns state information, indicative of the fact that it has nothing to do with the question, to the questioner. Then, only the cell computer that is placed in the processing target state returns an answer to the central management computer. If all cell computers are connected in a tree-like fashion and there is no cell computer connected in a loop-like fashion, an answer to the question is not formed and the central management computer 61 returns an answer indicative of the absence of such loop to the questioner.

When a question is Q3 "Is there a tree-like path?", the cell computer coupled in a loop-like fashion and which has no tree-like path transmits state information, indicating that it has no tree, to the central management computer 61, and only the cell computer connected in a tree-like fashion returns an answer indicating that only it has to do with the question, to the central management computer 61.

When a question is Q4 "Is it a loop-like, tree-like intermediate concept? That is, is there a path connected to a high-order or low-order concept?", loop-like and tree-like end (high-order and low-order) cell computers are sequentially placed in the unsuitable state. At that time, the cell computer that is placed in the unsuitable state returns state information, indicating the fact that it has nothing to do with the question, to the central management computer 61. Then, only the remaining cell computer with the intermediate concept stored therein and which is placed in the suitable state returns the answer to the central management computer 61.

Here, the cells that are placed in the processing target state contain cells which result from removing the cells in the unsuitable state from all cells and which have a possibility that they will be placed in the suitable state.

In this manner, the cell computers which do not have direct or indirect connection to the question are placed in the unsuitable state and only the cell computer which has the connection relating to the question is placed in the processing target state, whereby only the cell computer having the semantic connection can think as if it were a human's brain cell. Thus, the NP complete problem can be solved.

Next, arrangements and operations of the central management computer 61 and the cell computers 62-1 to N of the super-brain type computer system which can operate as described above will be described in detail. For convenience' sake, the central management computer 61 will be referred to as a hub and the cell computers 62-1 to N will be referred to as cells hereinafter.

FIG. 18 is a functional block diagram showing the arrangement of the central management computer 61.

As shown in FIG. 18, when a question is inputted to a question input unit 71, a request condition analyzing unit 72 analyzes condition of question. Here, the inputted question corresponds to structured knowledge. To be concrete, the inputted question is structured so as to indicate knowledge and knowledge of its connection destination.

Based upon the analyzed request condition, a request condition processing target cell detecting unit 73 transmits the request condition to a whole cell 74 and it receives information indicative of the unsuitable state returned from the unsuitable cell 75 in response to this request condition. Thus, the request condition processing target cell detecting unit 73 detects a cell conforming to the request condition from cells which result from removing the unsuitable cell 75 from the whole cell 74.

A retrieval transmitting and receiving unit 76 continues to search only the detected suitable cell 77 and receives a search answer from the processing target cell 77. Then, a retrieval result analyzing unit 78 analyzes a retrieval result based upon the received retrieved answer.

A semantic understanding/information generating unit 79 executes semantic understanding and information generation from the analyzed retrieved result and generates new information. An output information converting unit 80 converts the thus generated new information into the requested output form.

A cell connection destination address memory unit 82 stores therein an address of a connection destination cell having a semantic connection based upon the thus generated new information. This information is updated sequentially. The retrieval transmitting and receiving unit 76 is able to further limit the retrieval target based upon the address of the connection destination cells to thereby execute retrieval again.

An answer output unit 81 outputs the thus generated new information in the requested output form. Here, the generated new information stored in the cell connection destination address memory unit 82 and the generated new information outputted from the answer output unit 81 are both structured knowledge.

The question input unit 71 and the answer output unit 81 of the above-mentioned hub are composed of a user interface for use with a portable remote terminal such as keys, a touch panel and a liquid-crystal panel.

Also, the request condition analyzing unit 72, the request condition processing target cell detecting unit 73, the retrieval result analyzing unit 78, the semantic understanding/information generating unit 79 and the output information converting unit 80 are comprised of control processors composed of portable remote terminal CPU, ROM and RAM and the like. As an operation system applied to the control processor, there can be used TRON which is a portable remote terminal OS in addition to OS for ordinary PC such as Windows and Linux. As the cell connection destination address memory unit 82, there is used a non-volatile memory such as a ROM.

Also, the request condition processing target cell detecting unit 73 and the search result transmitting and receiving unit 76 are comprised of communication units for use with a portable remote terminal.

While the hub may be constructed as a single component, a portable game machine and a mobile phone may serve as the above-mentioned function as well.

FIG. 19 is a functional block diagram showing the arrangement of the cell computer.

As shown in FIG. 19, a request condition processing target judging unit 92 determines whether or not its own cell becomes a target cell in response to request conditions transmitted from the hub 91 to all cells at the same time. When this request condition processing target is judged, it is judged by using judgment information which determines whether or not there is a connection destination cell.

An unsuitable reply/connection destination communicating unit 93 returns a signal announcing the unsuitable state to a hub 94 if its own cell is unsuitable for the request condition and it transmits a signal indicative of the processing target state to a hub 95 if its own cell is placed in the processing target for the request condition.

A retrieval receiving unit 97 receives retrieval information from the hub 96 if its own cell is placed in the processing target state for the request condition. A connection destination judging unit 98 determines by retrieving other connection destination cells that its own cell has information connection in response to the request condition whether or not retrieval can be executed at every request condition based upon retrieval information. When this retrieval is judged, it is executed by using information of the connection destination cell.

A retrieval answer unit 101 returns an answer of the retrieval to a hub 102. A knowledge memory unit 99 stores therein retrieval information and knowledge obtained based upon the answer of retrieval. The connection destination cell memory unit 100 stores therein a connection destination cell corresponding to obtained knowledge.

Here, the request condition processing target judging unit 92, the unsuitable reply/connection destination cell communicating unit 93, the retrieval receiving unit 97 and the retrieval answer unit 101 of the above-mentioned cell are comprised of communication units for use with a portable remote terminal.

Also, the request condition processing target judging unit 92, the unsuitable reply/connection destination cell communicating unit 93 and the connection destination judging unit 98 are comprised of control processors composed of a CPU, a ROM and a RAM for use with a portable remote terminal.

Also, as the knowledge memory unit 99 and the connection destination cell memory unit 100, there can be used a non-volatile memory composed of a ROM and the like.

While the cell may be constructed as a single component, a portable game machine and a mobile phone may serve as the above-mentioned function as well.

The super-brain type computer system comprised of the communication unit, the control unit and the memory unit according to the present invention can be realized by a cube of several tens centimeters square on the whole or a solid sphere with a radius of several tens centimeters if the hub and the cell are each constructed by a single component.

Further, when the hub and the cell are comprised of a portable game machine or a mobile phone, they can be realized by the whole of portable game machines and mobile phones existing in a range in which they can communicate with the computer system.

The central management computer 61 and the cell computers 62-1 to N having the above-mentioned arrangements are operated as follows. The following description will be made while it is being moved from the hub to the cells and from the cells to the hub in accordance with the sequential order of operations of the super-brain type computer system according to the present invention.

FIG. 20 is a flowchart showing request condition suitable cell detecting operations. FIG. 20 shows operations of the request condition processing target cell detecting unit 73 of the central management computer 61 (hub) shown in FIG. 18.

Referring to FIG. 20, when the request condition processing target cell detection is started (step S61), the request condition processing target cell detecting unit transmits retrieval information to all cells as request condition (step S62). Specifically, the request condition processing target cell detecting unit 73 of the hub transmits conditions such as a path with step number N, a loop-like path and a tree-like path to all cells as the request condition at the same time.

Next, the request condition processing target cell detecting unit of the hub receives the unsuitable state returned from each cell (step S63). To be concrete, the request condition processing target cell detecting unit 73 of the hub receives the unsuitable state returned from the unsuitable cell in response to the request condition.

Subsequently, the request condition processing target cell detecting unit detects the cell, which result from removing the unsuitable cell from all cell, as a processing target cell (step S64). Specifically, the request condition processing target cell detecting unit 73 detects the cell, which becomes the processing target in response to the request condition, from cells which result from removing the unsuitable cell 75 from all cell 74.

When the cell which becomes the processing target relative to the request condition is detected, the request condition processing target cell detecting unit 73 informs the retrieval transmitting and receiving unit 76 of the detected request condition processing target cell (step S64). Thus, the retrieval operation can be continued while the retrieval target is limited to the processing target cell.

FIG. 21 is a flowchart showing operations of a request condition conformity judgment start. FIG. 21 shows the operations of the request condition processing target judging unit 92 of the cell computer shown in FIG. 19.

First, when the request condition processing target judgment is started (step S71), the cell receives simultaneous information based on the request condition from the hub (step S72). Specifically, the request condition processing target judging unit 92 of the cell receives simultaneous retrieval information based on the request condition to the whole cell shown at the step S62 in FIG. 20.

Next, it is determined whether or not the request conditions are coincident. Specifically, it is determined by the request condition processing target judging unit 92 whether or not its own cell becomes the processing target in response to the request condition.

If it is determined at the step S73 that the request conditions are coincident, then control goes to the processing target state (step S75). Specifically, the request condition processing target judging unit 92 of the cell goes to the processing target state when its own cell becomes the processing target in response to the request condition.

If it is determined at the step S73 that the request conditions are not coincident, then it is determined whether or not its own cell is coincident with the request condition in relation to the connection destination cell (step S74). Specifically, it is determined by the request condition processing target judging unit 92 of the cell whether or not its own cell becomes the processing target in relation to the connection destination cell according to the request condition.

It is determined at the step S74 that its own cell is coincident with the request condition in relation to the connection destination cell, then control goes to a step S75, whereat control goes to the processing target state and its own cell is held at the processing target. Specifically, the request condition processing target judging unit 92 of the cell moves to the processing target state if its own cell becomes the processing target in relation to the connection destination cell in response to the request condition.

If it is determined at the step S74 that its own cell is not coincident with the request condition in relation to the connection destination cell, then control goes to the unsuitable state (step S76). Specifically, the request condition processing target judging unit 92 of the cell goes to the unsuitable state if its own cell is not suitable for the request condition in relation to the connection destination cell.

FIG. 22 is a flowchart showing operations of a connection destination cell state communication start. That is, FIG. 22 shows operations of the unsuitable reply/connection destination cell communicating unit 93 of the cell computer shown in FIG. 19.

First, when the connection destination cell state communication is started (step S81), it is determined whether or not its own cell is the request processing target (step S82). Specifically, it is determined by the unsuitable reply/connection destination cell communicating unit 93 whether or not a state signal indicating that its own cell is the processing target in response to the request condition is supplied from the request condition processing target judging unit 92.

If it is determined at the step S82 that its own cell is the request processing target, then the processing target state is transmitted to the connection destination cell (step S83). Specifically, the unsuitable reply/connection destination cell communicating unit 93 transmits information indicating that its own cell is set to the processing target state to the connection destination cell corresponding to the request condition. This operation is sequentially repeated and thereby the unsuitable reply/connection destination cell communicating unit and the connection destination cell may be communicated with each other.

Also, the unsuitable reply/connection destination cell communicating unit 93 returns the unsuitable state to the hub 94 if its own cell is unsuitable for the request condition.

FIG. 23 is a flowchart showing operations for retrieving the path having the step number N in the connection judgment based upon the request condition structure, that is, a flowchart for answering the above-mentioned question Q1 "Is there any path to return from node A by steps N (within three steps)?". FIG. 23 is a flowchart showing operations of the request condition processing target judging unit 92 and the connection destination judging unit 98 of the cell computer shown in FIG. 19.

First, when the operation for retrieving the path having the step numbers N in the connection destination judgment based on the request condition structure is started (step S91), it is determined by the connection destination judging unit 98 whether or not the node number is the node number N (step S92). That is, it is determined by the connection destination judging unit 98 whether or not there is the connection destination cell (node) at the node number N including its own cell (node).

If it is determined at the decision step S92 that the node number is the node number N, then the cell having the node number N is moved to the processing target state and it is held as the processing target (step S93). Specifically, it is determined by the request condition processing target judging unit 92 based on the information indicating that there is the connection destination cell (node) at the node number N that the node number N including its own cell (node) is the processing target state, and it transmits information through the unsuitable reply/connection destination cell communicating unit 93 to the hub such that these cells should be moved to the processing target state.

If it is determined at the decision step S92 that the node number is not N, then the cells having other node number other than the node number N are moved to the unsuitable state (step S94). Specifically, it is determined by the request condition processing target judging unit 92 based on the information indicative of the fact that there is no connection destination cell (node) at the node number N from the connection destination judging unit 98 that other node number including its own cell (node) is placed in the unsuitable state, and it transmits information through the unsuitable reply/connection destination cell communicating unit 93 to the hub such that these cells are moved to the unsuitable state. Also, the request condition processing target judging unit transmits information indicative of the unsuitable state to the hub.

FIG. 24 is a flowchart showing operations for retrieving the tree-like path in the connection destination judgment based on the request condition structure, that is, a flowchart for answering the above-mentioned question Q3 "Is there any tree-like path?" FIG. 24 is a flowchart showing operations of the request condition processing target judging unit 92 and the connection destination judging unit 98 of the cell computer shown in FIG. 19.

First, the tree-like path retrieval operation in the connection destination judgment based on the request condition is started (step S101) and retrieval of tree is executed (step S102). Specifically, the connection destination judging unit 98 retrieves the tree-like connection destination cell (node) including its own cell (node).

Next, it is determined whether or not its own cell is the end of the tree (step S103). Specifically, it is determined by the connection destination judging unit 98 whether or not the tree-like connection destination cell (node) including its own cell (node) is placed at the end of the tree. At that time, the connection destination judging unit 98 sequentially judges that the connection destination cell (node) of the end is placed at the end of the tree and that all of the tree-like connection cells (nodes) are all placed at the end of the tree.

If it is determined at the decision step S103 that its own cell is placed at the end of the tree, then the cell at the end is moved to the processing target state and it is held as the processing target (step S104). Specifically, the request condition processing target judging unit 92 judges based upon the information indicative of the fact that all of the tree-like connection destination cells (nodes) are all placed at the end from the connection destination judging unit 98 that the cell at the end is placed in the processing target state, and it transmits information through the unsuitable reply/connection destination cell communicating unit 93 to the hub such that these cells are to be moved to the processing target state.

Subsequently, the cells within the tree are moved to the processing target state and they are held at the processing target (step S105). Specifically, it is determined by the request condition processing target judging unit 92 that all tree-like connection destination cells (nodes) from the connection destination judging unit 98 are placed in the processing target state, and it transmits information through the unsuitable reply/connection destination cell communicating unit 93 to the hub such that these cells are to be moved to the processing target state.

Next, remaining cells within the loop are moved to the unsuitable state (step S106). Specifically, it is determined by the request condition processing target judging unit 92 that all remaining loop-like connection destination cells (nodes) which result from removing the tree-like connection destination cells (nodes) in the processing target state from the connection destination judging unit 98 are placed in the unsuitable state, and it transmits information through the unsuitable reply/connection destination cell communicating unit 93 to the hub such that these cells should be moved to the unsuitable state. Also, the request condition processing target judging unit transmits information indicative of the unsuitable state to the hub.

FIG. 25 is a flowchart showing the loop-like path retrieval operation in the connection destination judgment based upon the request condition structure, that is, a flowchart for generating an answer to the question Q2 "Is there loop-like path from this node?" FIG. 25 shows operations of the request condition processing target judging unit 92 and the connection destination judging unit 98 of the cell computer shown in FIG. 19.

First, the loop-like path retrieval operation in the connection destination judgment based upon the request condition structure is started (step S121), and the loop is retrieved by the connection destination judging unit 98 (step S122). Specifically, the connection destination judging unit 98 retrieves the loop-like connection destination cell (node) including its own cell (node).

Next, it is determined whether or not the cell is placed at the end (step S123). Specifically, it is determined by the connection destination judging unit 98 whether or not the tree-like connection destination cell (node) including its own cell (node) is placed at the end. At that time, it is sequentially determined by the connection destination judging unit 98 that the connection destination cells (nodes) at the end are placed at the end and it is determined that all tree-like connection destination cells (nodes) are placed at the end.

If it is determined at the decision step S123 that its own cell is placed at the end, then its own cell is moved to the unsuitable state (step S124). Specifically, the request condition processing target judging unit 92 determines based upon the information indicating that all tree-like connection destination cells (nodes) from the connection destination judging unit 98 are placed at the end that the cell at the end is placed in the unsuitable state and it transmits information through the unsuitable reply/connection destination cell communicating unit 93 to the hub such that these cells should be moved to the unsuitable state.

Next, in the request condition processing target judging unit 92, the cells within the tree are moved to the unsuitable state (step S125). Specifically, the request condition processing target judging unit 92 judges that all tree-like connection destination cells (nodes) from the connection destination judging unit 98 are placed in the unsuitable state and it transmits information through the unsuitable reply/connection destination cell communicating unit 93 to the hub such that these cells should be moved to the unsuitable state. Also, the request condition processing target judging unit transmits information indicative of the unsuitable state to the hub.

Subsequently, it is determined by the connection destination judging unit 98 whether or not the node number is the node number N (step S126). Specifically, it is determined by the connection destination judging unit 98 whether or not there is the connection destination cell (node) at the node number N including its own cell (node).

Here, the reason that the node number N is judged is that, since most of the knowledge connection destination is connected in a loop fashion, if only all loops are set to the processing target state, then control reaches the NP-complete problem and hence the later retrieval cannot be executed. Accordingly, in the loop retrieval, the node number N is judged at the same time. For example, if three factor rings are the target, the loop having more than four factor rings becomes unsuitable so that the retrieval targets can be decreased.

If it is determined at the decision step S126 that the node number is the node number N, then remaining cell within the loop are moved to the unsuitable state (step S127). Specifically, the request condition processing target judging unit 92 removes the tree-like connection destination cells (nodes) in the unsuitable state transmitted from the connection destination judging unit 98 and it also judged whether or not the node number is the node number N. Then, it judges that the remaining loop-like connection destination cells (nodes) having the node number N are set to the processing target state. Then, the request condition processing target judging unit transmits information through the unsuitable reply/connection destination communicating unit 98 to the hub so that these cells should be moved to the suitable state.

If it is determined at the decision step S126 that the node number is not the node number N, then the request condition processing target judging unit 92 moves the cells other than the cells having the node number N to the unsuitable state (step S128). Specifically, the request condition processing target judging unit 92 determines based on the information indicating that there is no connection destination cell (node) having the node number N from the connection destination judging unit 98 that other node number than the node number N including its own cell (node) is placed in the unsuitable state. Then, it transmits information through the unsuitable reply/connection destination cell communicating unit 93 to the hub such that these cells should be moved to the unsuitable state and it also transmits information indicative of the fact that these cell are placed in the unsuitable state to the hub.

FIGS. 23 to 25 show examples of the connection judgment based upon the request condition structure and it is possible that these examples may properly be combined in response to the request conditions upon use.

When an intermediate concept between the high-order concept and the low-order concept is retrieved, such retrieval can be executed while the connection destination cells (nodes) are being moved to the unsuitable state by the judgment of the end as described above. At that time, the retrieval can be carried out by using judgment such that if the high-order concept is unsuitable, then it is natural that the low-order concept should be unsuitable.

FIG. 26 is a flowchart showing a connection destination cell memory start operation. FIG. 26 shows operations of the connection destination judging unit 98 and the connection destination cell memory unit 100 of the cell computer shown in FIG. 19.

First, when the connection destination memory starting operation is started (step S131), it is determined by the connection destination judging unit 98 whether or not there is the connection destination (step S132). Specifically, it is determined by the connection destination judging unit 98 whether or not its own cell (node) has the connection destination cell (node).

If it is determined at the decision step S132 that there is the connection destination cell, then it is determined by the connection destination judging unit 98 whether or not the connection destination cell was already stored (step S133). Specifically, when the its own cell (node) has the connection destination cell (node), it is determined by the connection destination judging unit 98 whether or not the connection destination cell (node) was already stored in the connection destination cell memory unit 100.

If it is determined at the decision step S133 that the connection destination cell is not stored in the connection destination cell memory unit, then the connection destination judging unit 98 stores the address of the information connection destination cell and its information content to the connection destination cell memory unit (step S134). That is, the connection destination judging unit 98 stores the address of the information connection destination cell and information of the cell at its address in the connection destination cell memory unit 100.

If it is determined at the decision step S133 that they are stored in the connection destination cell memory unit, then it is determined whether or not the connection destination cell memory unit is updated (step S135). If the connection destination cell memory is updated, then the connection destination judging unit 98 updates the connection destination cell memory unit 100 by the address of the information connection destination cell and the information that the cell has. If the connection destination cell memory unit is not updated, then control goes to a step S135, whereat information of other cell is checked. That is, information of its own cell (node) and information of other cell (node) of connection destination are checked by the connection destination judging unit 98.

FIG. 27 is a flowchart showing connection destination retrieval starting operations. FIG. 27 is a flowchart showing operations of the unsuitable reply/connection destination cell communicating unit 93 and the connection destination judging unit 98 of the cell computer shown in FIG. 19.

First, when the connection destination cell retrieval operation is started (step S141), it is determined whether or not the cell within the loop is retrieved (step S142). That is, it is determined by the connection destination judging unit 98 whether or not the retrieval corresponding to the request condition is the retrieval for its own cell (node) and the connection destination cell (node) within the loop.

If it is determined at the decision step S142 that the retrieval is the retrieval within the loop, then the connection destination judging unit 98 retrieves the cells within the loop (step S143). Specifically, the connection destination judging unit 98 retrieves its own cell (node) and the connection destination cells (nodes) within the loop through the connection destination cell communicating unit 93.

If it is determined at the decisions step S142 that the cells within the loop are not retrieved, then it is determined whether or not the cells within the tree should be retrieved (step S144). Specifically, it is determined by the connection destination judging unit 98 whether or not the retrieval corresponding to the request condition is the retrieval for retrieving its own cell (node) and the connection destination cell (node) within the tree.

If it is determined at the decision step S144 that the cells within the tree should be retrieved, it is determined whether or not the connection destination cell has the connection destination cell (step S145). Specifically, it is determined by the connection destination judging unit 98 whether or not the connection destination cell (node) has the further connection destination cell within the tree of its own cell (node).

If it is determined at the decision step S145 that the connection destination cell has the further connection destination cell, then the previous retrieval within the tree is continued until the end of the further connection destination cell (step S146). Specifically, the connection destination judging unit 98 repeatedly retrieves its own cell (node) and the connection destination cell of the connection destination cell (node) within the tree until the end of the connection destination cell through the unsuitable reply/connection destination cell communicating unit 93.

FIG. 28 is a flowchart showing operations of the retrieval answer unit. FIG. 28 is a flowchart showing operations of the retrieval answer circuit 101 of the cell computer shown in FIG. 19.

First, when the operation of the retrieval answer circuit is started (step S151), it is determined by the retrieval answer circuit 101 based upon the result retrieved in response to the request condition whether or not its own cell (node) and the connection destination cell (node) are the direct connection destinations (step S152).

If it is determined at the decision step S152 that its own cell and the connection destination cell are the direct connection destination, then information of the retrieved result and the address of the direct connection destination cell are transferred to the hub (step S153). Specifically, based upon connection destination judgment information from the connection destination judging unit 98, the retrieval answer circuit 101 generate the retrieved result and transfers the information of the retrieved result and the address of the direct connection destination cell to the hub.

If it is determined at the decision step S152 that its own cell and the connection destination cell are not the direct connection destination, then it is determined whether or not its own cell and the connection destination cell are indirect connection destinations (step S154). Specifically, it is determined by the retrieval answer circuit 101 in response to the request condition whether or not its own cell (node) and the connection destination cell (node) are the indirect connection destinations.

If it is determined at the decision step S154 that its own cell and the connection destination cell are the indirect connection destinations, then information of the retrieved result and the address of the indirect connection cell are transferred to the hub (step S155). Specifically, based upon the connection destination judgment information from the connection destination judging unit 98, the retrieval answer circuit 101 generates the retrieved result and transfers the information of the retrieved result and the address of the connection destination cell to the hub.

Here, a knowledge memory unit 99 stores therein the retrieved information from the retrieval answer circuit 101 and knowledge obtained based upon the answer of the retrieval. A connection destination cell memory unit 100 stores therein the connection destination cell corresponding to the thus obtained knowledge. Thus, it is possible to avoid overlapping operations in similar retrievals.

FIG. 29 is a flowchart showing retrieval transmitting and receiving operations. FIG. 29 is a flowchart showing operations of the retrieval transmitting and receiving unit 76 of the central management computer 61 (hub) shown in FIG. 18.

First, when the retrieval transmitting and receiving operation is started (step S161), the retrieval transmitting and receiving unit 76 recognizes an address of a connection destination cell from the cell connection destination address memory unit 82 (step S162). Specifically, the retrieval transmitting and receiving unit 76 of the hub recognizes the address of the connection destination cell, which was already retrieved, from the cell connection destination address memory unit 82.

Next, the retrieval transmitting and receiving unit 76 of the hub recognizes a request condition processing target cell (step S163). Specifically, the retrieval transmitting and receiving unit 76 of the hub receives information of the request condition processing target cell from the request condition processing target cell detecting unit 73 at the step S65 in FIG. 20 and recognizes it.

Next, the retrieval transmitting and receiving unit 76 of the hub transmits retrieved information to the processing target cell having the connection destination and receives the retrieved result (step S164). Specifically, the retrieval transmitting and receiving unit 76 of the hub transmits the retrieved information to the processing target cell having the connection destination and receives the information of the retrieved results at the steps S153 and S154 in FIG. 28 and address of the direct or indirect connection destination cell.

FIG. 30 is a flowchart showing operations of retrieval result analysis. FIG. 30 is a flowchart showing operations of the retrieval result analyzing unit 78 of the central management computer 61 (hub) shown in FIG. 18.

First, when the operation of the retrieval result analysis is started (step S171), the retrieval result analyzing unit 78 in the hub collects all of retrieved results from the respective cells placed in the processing target state (step S172). Specifically, the retrieval result analyzing unit 78 in the hub collects all retrieved results from the respective cells in the processing target state from the retrieval transmitting and receiving unit 76.

Next, a structure (node number/loop/tree) corresponding to the request condition is analyzed by the retrieval result analyzing unit 78 (step S173). Specifically, the retrieval result analyzing unit 78 in the hub analyzes the retrieved result at every structure corresponding to the request condition, for example, at every node number/loop/tree.

Then, the retrieval result analyzing unit 78 in the hub transmits the analyzed result of every structure to the semantic understanding/information generating unit 79 (step S174).

FIG. 31 is a flowchart showing the semantic understanding/information generating operations. FIG. 31 is a flowchart showing operations of the semantic understanding/information generating unit 79 in the central management computer (hub) shown in FIG. 18.

First, the semantic understanding/information generating operations are started (step S181) and meaning of analyzed result at every structure is checked by the semantic understanding/information generating unit 79 in the hub (step S182). Specifically, the semantic understanding/information generating unit 79 in the hub checks the meaning of the retrieved result at every structure corresponding to the request condition, for example, at every node number/loop/tree.

Next, it is determined by the semantic understanding/information generating unit 79 in the hub based upon the retrieved result whether or not direct semantic understanding can be made (step S183).

If it is determined at the decision step S183 that the direct semantic understanding can be made, then since the direct semantic understanding can be made from the retrieved result, the semantic understanding/information generating unit 79 adds the generated meaning to the information of the retrieved result (step S184).

If it is determined at the decision step S183 that the direct semantic understanding cannot be made, then the semantic understanding/information generating unit 79 in the hub checks meaning analogous to the retrieved result at every structure corresponding to the request condition, for example, at every node number/loop/tree (step S185).

Next, it is determined by the semantic understanding/information generating unit 79 in the hub based on the retrieved result whether or not information can be generated from analogical reasoning (step S186). Specifically, the semantic understanding/information generating unit 79 in the hub executes analogical reasoning, inductive inference, association and the like to generate new information.

If it is determined at the decision step S186 that information can be generated by analogical reasoning, then the semantic understanding/information generating unit 79 in the hub adds the meaning of information generated from the retrieval result by analogical reasoning to the information of the retrieved result (step S187).

If it is determined at the decision step S186 that information cannot be generated, then the semantic understanding/information generating unit 79 in the hub repeatedly checks information of other cell from the retrieved result (step S188).

FIG. 32 is a flowchart showing output information conversion operations. FIG. 32 is a flowchart showing operations of the output information converting unit 80, the cell connection destination address memory unit 82 and the answer output circuit 81 in the central management computer (hub) shown in FIG. 18.

First, the output information converting unit 80 starts the output information conversion operation (step S191) and it converts structured information into expression corresponding to the request (step S192). Specifically, the output information converting unit 80 converts the thus generated and structured new information into the requested output form.

Next, the output information converting unit 80 in the hub stores the information structured based on the thus generated new information and the address of the connection destination cell having semantic connection with the thus generated and structured new information in the cell connection destination address memory unit 82 (step S193). Subsequently, the answer output unit 81 in the hub outputs the thus generated new information in the requested output form (step S194).

## Claims

**1.** In a learning/thinking machine including a knowledge basis composed of:

means for analyzing collected information and extracting a semantic relation in accordance with a plurality of rules; and
means for storing therein semantic contents as a knowledge structured so as to sufficiently express said semantic contents based on the extracted semantic relation, a learning/thinking machine based on a structured knowledge comprising:

means for generating new information by predetermined inference in response to an inquiry or request such that a knowledge structured based on said semantic relation may have new semantic content and relation;
means for evaluating generated new information;
means for judging sequencing of said evaluated result;
means for determining an optima solution based on a judged result;
an input unit for receiving an inquiry or request from the outside; and
verifying means for verifying said inquiry or request from the outside and said knowledge base, wherein if it is determined by said verifying means that said inquiry or request are completely coincident with said knowledge base, then understanding of such coincidence is transmitted to a central unit and if it is determined that said inquiry or request from the outside are partly coincident with said knowledge base, then information is generated by predetermined inference such that said knowledge structured based on said semantic relation may have new semantic relation and content.

**2.** A learning/thinking method comprising:

a knowledge input step for inputting inclusively collected data, information and knowledge;
a knowledge structuring step for analyzing information from said inputted data, information and knowledge, extracting a semantic relation in accordance with a plurality of rules and storing structured knowledge based on said extracted semantic relation;
an information generating step for generating new information by predetermined inference so that said knowledge structured based on said semantic relation has new semantic content and relation;
an evaluation judging step for evaluating said information generated new knowledge by verifying said information generated result and said knowledge base; and
an optimal solution deciding step for storing said evaluated/judged result and new information generated knowledge in said knowledge base to increase a knowledge;
said information generating step comprising:

a relating node retrieving step for retrieving only a unit in which a relating node is stored;
a relating link retrieving step for retrieving only a unit in which a relating link is stored; and
a step for executing inference by using any of at least analogical reasoning, inductive inference, abduction or association based on retrieved result of said relating node retrieving step or said relating link retrieving step.

**3.** In a learning/thinking method based on a structured knowledge according to claim 2, a learning/thinking method based on a structured knowledge **characterized in that** said evaluating and judging step comprises:

a step for evaluating new information generated knowledge item by item with reference to the knowledge that has already been stored in said knowledge base;
a step for determining whether or not said new generated knowledge satisfies an inquiry request, setting said knowledge as a nominated solution if said knowledge satisfies said request and searching and evaluating other results item by item if said knowledge does not satisfy said request;

a step for sequencing said nominated knowledge with reference to said knowledge base; and
a step for extracting/deciding nominated knowledge whose target necessary condition is optimum from sequenced nominated knowledge.

**4.** In a learning/thinking method based on a structured knowledge according to claim 2, a learning/thinking method based on a structured knowledge **characterized in that** said knowledge generating step comprises:

a step for determining whether or not new knowledge information generated at said information generating step and which is generated at said evaluating/deciding step as an optimal solution is increased as a new node;
a step for storing said new node in a unit integration memory if it is determined that said new information is increased as said new node;
a step for determining said generated new knowledge is increased as a link regardless of the increase of said node; and
a step for storing said new link in said unit integration memory if it is determined that said generated new knowledge is increased as said new link.

**5.** In a computer system in which a central management computer and a plurality of cell computers are coupled so as to communicate with each other, a computer system **characterized in that**:

said central management computer can store all addresses and names of said plurality of cell computer before it is being operated, said central management computer can input questions to all of said plurality of computer and said central management computer can output answers to questions;
all of said cell computers stores therein a knowledge structured so as to indicate each knowledge and its connection destination knowledge and all of said cell computers can access information of a connection destination of a semantic relation of each knowledge;
when a question is inputted, said question is transmitted from said central management computer to said plurality of cell computers, as a presupposing operation, said cell computer is changed to a processing target state or an unsuitable state based on connection information of a semantic relation relative to said question of knowledge each of said plurality of cell computers has; and
a cell computer having no semantic relation to said question is placed in the unsuitable state and transmits information indicative of said unsuitable state to said central management computer and said relating cell computer, only the cell computer having a connection of a semantic relation is placed in the processing target state, only said cell computer in said processing target state continues processing, said central management computer analyzes an answer from said cell computer in said processing target state and understands meaning in response to a question to thereby generate new information and said central management computer converts said generated new information into an output form corresponding to said question and outputs said converted information as an answer.

**6.** In a computer system according to claim 5, a computer system **characterized in that**:

said central management computer comprises:

a request condition analyzing unit for analyzing a condition of an inputted question when a question is inputted to said input unit;
a request condition processing target cell detecting unit for transmitting a request condition to all cell computers based on said analyzed request condition, receiving a reply of the unsuitable state from an unsuitable cell computer and detecting a processing target cell computer from all of said cell computers except said unsuitable cell computer in response to said request condition;
a retrieval transmitting and receiving unit for continuing to retrieve only said detected processing target cell computer, receiving a retrieval answer from said processing target cell computer and analyzing a retrieved result based on said received retrieval answer;
a semantic understanding/information generating unit for executing semantic understanding and information generation from said analyzed retrieved result to generate new information;
an output information converting unit for converting generated new information into a requested output form;
a cell connection destination address memory unit for storing therein an address of a connection destination cell computer having a semantic connection based on said generated new information in such a manner that said address can be updated sequentially; and

an answer output unit for outputting said generated new information in the requested output form.

**7.** In a computer system according to claim 5, a computer system **characterized in that**:

said plurality of cell computers comprises:

a request condition processing target judging unit for determining by using decision information indicative of the presence or absence of a connection destination cell computer whether or not its own cell computer becomes a processing target in response to the request condition simultaneously transmitted from said central management computer to all cell computers;
an unsuitable replay/connection destination cell communicating unit for returning an information indicative of an unsuitable state to said central management computer if its own cell computer is unsuitable for said request condition and transmitting information indicative of the processing target state to a connection destination cell computer if its own cell computer becomes a processing target in response to said request condition;
a retrieval receiving unit for receiving retrieval information from said central management computer if its own cell computer becomes the processing target in response to said request condition;
a connection destination judging unit for retrieving other connection destination cell computer which its own cell computer has information connection in response to said request condition and determining by using information of said connection destination cell computer whether or not retrieval based on retrieval information can be executed at every said request condition;
a retrieval answer unit for returning an answer of said executed retrieval to said central management computer;
a knowledge memory unit for storing knowledge obtained based on said retrieval information and said answer of retrieval such that said knowledge can be updated sequentially; and
a connection destination cell memory unit for storing a connection destination cell computer corresponding to said obtained knowledge such that said connection destination cell computer can be updated sequentially.

**8.** In a computer system according to claim 7, a computer system **characterized in that**:

said connection destination judging unit comprises:

step number N retrieving means for retrieving a path in which said request condition has a structure of a step number N (natural number);
tree-like path retrieving means for retrieving a path in which said request condition has a tree-like structure; and
loop-like path retrieving means for retrieving a path in which said request condition has a loop-like path to thereby judge a connection corresponding to said request condition structure.

**9.** In an information generating method using a computer system in which a central management computer and a plurality of cell computers are coupled so as to communicate with each other in which said central management computer stores therein only addresses of said plurality of cell computers before being operated, said central management computer can input a question to said plurality of cell computer and can output an answer to a question;

each of said plurality of cell computers stores therein each knowledge structured in such a manner as to indicate knowledge and knowledge of its connection destination and also stores therein connection destination information of a semantic relation of each knowledge, an information generating method comprises:

a step in which a question is transmitted from said central management computer to all of said plurality of cell computers when a question is inputted;
a step for changing the state into a processing target state or unsuitable state based upon connection information of a semantic relation relative to said question of a knowledge of each of said plurality of cell computers as presupposing operation;
a step in which a cell computer having no connection of a semantic relation to said question is placed in the unsuitable state to return information indicative of the unsuitable state to said central management computer and only a cell computer having a connection of a semantic relation is placed in the processing target state to return an answer to said central management computer;
a step in which said central management computer continues to output a question to only a cell computer in the processing target state; and

a step for generating new information by analyzing and understanding an answer from the cell computer in said processing target state, converting generated new information into an output form corresponding to a question and outputting converted output as an answer.

**10.** In an information generating method according to claim 9, an information generating method **characterized in that**:

said central management computer including:

a step for analyzing a condition of an inputted question by a request condition analyzing unit when a question is inputted to a question input unit;

a step for transmitting said request condition to all cell computers by a request condition processing target cell detecting unit based on said analyzed request condition, receiving an answer indicative of the unsuitable state from an unsuitable cell computer and detecting a cell computer, which becomes a processing target in response to the request condition, from said all cell computers excepting said unsuitable cell computer;

a process for continuing to effect the later retrieving operation on said detected processing target cell computer by a retrieval transmitting and receiving unit to receive a retrieval answer from said processing target cell computer;

a step for analyzing the retrieved result by a retrieved result analyzing unit based on said received detected retrieval answer;

a step for understanding meaning and generating information from said analyzed result by the semantic understanding/information generating unit;

a step for converting said generated new information into a requested output form by the output information converting unit;

a step for storing an address of a connection destination cell computer having a semantic connection based on said generated new information such that said address can be updated sequentially; and

a step for outputting said generated new information in the requested output form by the answer output unit.

**11.** In an information generation method according to claim 9, an information generation method **characterized in that**:

said plurality of cell computers includes:

a step in which it is determined at a request condition processing target judging unit by using judgment information indicative of presence or absence of a connection destination cell computer in response to request conditions simultaneously transmitted from said central management computer to all cell computers whether or not its own cell computer becomes a processing target;

a step in which an unsuitable state is returned to said central management computer if its own cell computer is unsuitable for said request condition and in which the processing target state is transmitted to the connection destination cell computer by the unsuitable reply/connection destination communicating unit if its own cell computer becomes a processing target for said request condition;

a step for receiving retrieval information from said central management computer by a retrieval receiving portion if its own cell computer become a processing target relative to said request condition;

a step for retrieving other connection destination cell computer which its own cell computer has an information connection in response to said request condition and in which it is determined at a connection destination judging unit by using information of said connection destination cell computer whether or not said retrieval based on said retrieval information can be executed for every said request condition;

a step for returning said retrieval answer to said central management computer by a retrieval answer unit;

a step for storing said retrieval information and a knowledge obtained based on an answer of a retrieval in a knowledge memory unit such that they can be updated sequentially; and

a step for storing a connection destination cell computer corresponding to said obtained knowledge in a connection destination cell memory unit such that it can be updated sequentially.

**12.** In an information generating method according to claim 11, an information generating method **characterized in that**:

said decision step of said connection destination judging unit includes:

a step for determining whether or not there is a connection destination cell computer at a node number N including its own cell computer in an operation for searching a path having a step number N (natural number) in a connection decision having a request condition structure;
a step for determining based on information indicative of the fact that there is a connection.destination cell computer at a node number N that cell computer including its own cell computer having said node number N are placed in the processing target state and in which information is transmitted through said unsuitable reply/connection destination cell communicating unit to said central management computer such that these cell computers are to be moved to the processing target state; and
a step in which it is determined based on information indicative of the fact that there is no connection destination cell computer at said node number N that cell computer including its own cell computer having other node number are placed in the unsuitable state, information is transmitted through said unsuitable reply/connection destination cell communicating unit to said central management computer such that these cell computers are to be moved to the unsuitable state and in which information indicative of said unsuitable state is transmitted to said central management computer.

13. In an information generating method according to claim 11, an information generating method **characterized in that**:

said decision step of said connection destination judging unit includes:

a step in which when a tree-like path including its own cell computer is retrieved in the operation for retrieving a tree-like path in a connection decision based on a request condition structure, it is determined whether or not a tree-like connection destination cell computer including its own cell computer is placed at the end, it is sequentially determined that cell computers at the end are placed at the end so that it is determined that all of tree-like connection destination cell computer are placed at the end;
a step in which it is determined based on information indicative of the fact that all tree-like connection destination cell computer are placed at the end that cell computers at the end are placed in the processing target state so that it is determined that all tree-like connection destination cell computers are placed at the processing target state and that information is transmitted through said unsuitable reply/connection destination cell communicating unit to said central management computer such that these cell computers are to be moved to the processing target state; and
a step in which it is determined that all remaining loop-like connection destination cell computers except tree-like connection destination cell computers in the processing target state are placed in the unsuitable state so that information is transmitted through said unsuitable reply/connection destination cell communicating unit to said central management computer such that these computers are to be moved to the unsuitable state and that information indicative of the unsuitable state is transmitted to said central management computer.

14. In an information generating method according to claim 11, an information generating method **characterized in that**:

said decision step of said connection destination judging unit includes:

a step in which when loop-like connection destination cell computer including its own cell computer are retrieved in the operation for retrieving a loop-like path in the connection decision based on the request condition structure, it is determined whether or not tree-like connection destination cell computers including its own cell computer are placed at the end, it is determined that connection destination cell computers at the end also are not belonging to a loop so that it is determined that all tree-like connection destination cell computers also are not belonging to the loop;
a step in which it is determined based on information indicative of the fact that all tree-like connection destination cell computers are placed at the end that cell computers at the end are placed in the unsuitable state so that it is determined that all tree-like connection destination cell computer are placed in the unsuitable state, information is transmitted through said unsuitable reply/connection destination cell communicating unit to said central management computer such that these cell computers are to be moved to the unsuitable state and in which information indicative of the unsuitable state is transmitted to said central management computer;
a step for determining whether or not there is a cell computer including its own cell computer at a node number N (natural number);
a step in which tree-like connection destination cell computer in the unsuitable state are removed, it is determined by further decision of the node number N that remaining loop-like connection destination cell computer having the node number N are placed at the processing target state and information is transmitted through said unsuitable reply/connection destination cell communicating unit to said central management computer so that these cell computers are to be moved to the processing target state; and
a step in which it is determined based on information indicative of the fact that there is no connection destination cell computer at the node number N that cell computers including its own cell computer having other node number are placed in the unsuitable state so that information is transmitted through said unsuitable reply/connection destination cell communicating unit to said central management computer such that these cell computers are to be moved to the unsuitable state and that information indicative of the unsuitable state is transmitted to said central management computer and adjacent cell computers.

**Amended claims under Art. 19.1 PCT**

**1.** amended) A learning/thinking machine based on a structured knowledge comprising:

means for extracting a semantic relation from collected information in accordance with a plurality of rules;
means for analyzing information based on the extracted semantic relation and in which a link indicates a semantic relation between a node and a node for indicating meaning so as to sufficiently express a semantic meaning, said node and said link have structure so as to exchange their roles and a knowledge expressed by said node and said link is stored;
means for generating new information according to predetermined inference by verifying a knowledge base in which knowledge structured based on said semantic relation is stored in response to an inquiry or request with a unit in which a relating node is stored;
means for evaluating generated new information;
means for judging sequencing of evaluated results;
means for deciding an optimal solution based on a judged result;
an input unit for receiving an inquiry or request from the outside; and
verifying means for verifying said inquiry or request from the outside with said knowledge base, wherein if it is determined by the verified result of said verifying means that said inquiry or request are completely coincident with said knowledge base, then understanding of such coincidence is transmitted to a central unit, if it is determined by the verified result of said verifying means that said inquiry or request are partly coincident with said knowledge base, then said knowledge base and said unit in which said relating node is stored are verified and said information generating means supplements insufficient information and generates information so that knowledge structured by said node and said link based on said semantic relation has new semantic content and new semantic relation.

**2.** (amended) A learning/thinking method based on a structured knowledge comprising:

a knowledge input step for inputting inclusively collected data, information and knowledge;
a knowledge structuring step in which a semantic relation is extracted from said inputted data, information and knowledge in accordance with a plurality of rules, meaning of information is analyzed based on said extracted semantic relation, a link indicates a semantic relation between a node and a node for indicating a meaning, said node and said link have structures so as to exchange their roles and structured knowledge expressed by said node and said link is stored;
an information generating step for generating new information by predetermined inference such that a knowledge structured by said node and said link based on said semantic relation has new semantic content and semantic relation;
a value judging step for evaluating and judging a new knowledge of generated information by verifying said information generated result with said knowledge base;
a knowledge increasing step for accumulating said evaluated/judged result and new information generated knowledge in said knowledge base to increase knowledge; and
an optimal solution deciding step for deciding and outputting an optimal solution in response to an inquiry or request from then outside, wherein said information generating step comprises:

a relating node retrieving step for retrieving only a unit in which a relating node is stored;
a relating link retrieving step for retrieving only a unit in which a relating link is stored; and
a step for executing inference by using at least any one of analogical reasoning, inductive inference, abduction and association based on a retrieved result of said relating node retrieving step or said relating link retrieving step.

**5.** (amended) In a computer system in which a central control computer and a plurality of cell computer are coupled so as to communicate with each other, a computer system **characterized in that**:

said central control computer stores therein only addresses of said plurality of cell computer before being operated, said central control computer can input a question to said plurality of cell computers and can output an answer to said question;
said plurality of cell computers have nodes each indicating meaning and a link indicating a semantic relation between the nodes, said node and said link have structures so as to exchange their roles and each cell computer stores therein information of one node or link and information of other cell computer storing therein a node or link having a connection of a semantic relation to said node or link in order to hold structured knowledge expressed by said node and said link;
when a question is inputted, said question is transmitted from said central control computer to all of said plurality of cell computer, as presupposing operation, said plurality of cell computers are changed to a processing target state or unsuitable state based on connection information of a semantic relation of a knowledge which each of said plurality of cell computers has relative to said question;
a cell computer having no semantic relation to said question is placed in the unsuitable state to return information indicative of the unsuitable state to said central control computer and only a cell computer having a connection of a semantic relation is placed in the processing target state to return an answer to said central control computer; and
said central control computer continues to output a question to only said cell computer placed in said processing target state, said central control computer analyze an answer from said cell computer in said processing target state and understands a meaning of said answer to generate new information, converts said generated new information into an output form corresponding to said question and outputs said converted information as an answer.

**9.** (amended) In an information generating method using a computer system in which a central control computer and a plurality of cell computers are coupled so as to communicate with each other, an information generating method **characterized in that**:

said central control computer stores therein only addresses of said plurality of cell computer before being operated, said central control computer can input a question to said plurality of cell computers and can output an answer to said question; and
said plurality of cell computers have nodes each indicating meaning and a link indicating a semantic relation between the nodes, said node and said link have structures so as to exchange their roles and each cell computer stores therein information of one node or link and information of other cell computer storing therein a node or link having a connection of a semantic relation to said node or link in order to hold structured knowledge expressed by said node and said link;
said information generating method comprises:

a step in which when a question is inputted, said question is transmitted from said central control computer to all of said plurality of cell computer;
a step in which as presupposing operation, said plurality of cell computers are changed to a processing target state or unsuitable state based on connection information of a semantic relation of a knowledge which each of said plurality of cell computers has relative to said question;
a step in which a cell computer having no semantic relation to said question is placed in the unsuitable state to return information indicative of the unsuitable state to said central control computer and only a cell computer having a connection of a semantic relation is placed in the processing target state to return an answer to said central control computer;
a step in which said central control computer continues to output a question to only said cell computer placed in said processing target state; and
a step in which said central control computer analyze an answer from said cell computer in said processing target state and understands a meaning of said answer to generate new information, converts said generated new information into an output form corresponding to said question and outputs said converted information as an answer.

**Statement under Art. 19.1 PCT**

Claim 1: This claim is replaced with claim of filed application.

Claim 2: This claim is replaced with claim of filed application.

Claim 3: This claim is not changed.

Claim 4: This claim is not changed.

Claim 5: This claim is replaced with claim of filed application.

Claim 6: This claim is not changed.

Claim 7: This claim is not changed.

Claim 8: This claim is not changed.

Claim 9: This claim is replaced with claim of filed application.

Claim 10: This claim is not changed.

Claim 11: This claim is not changed.

Claim 12: This claim is not changed.

Claim 13: This claim is not changed.

Claim 14: This claim is not changed.

*FIG. 1*

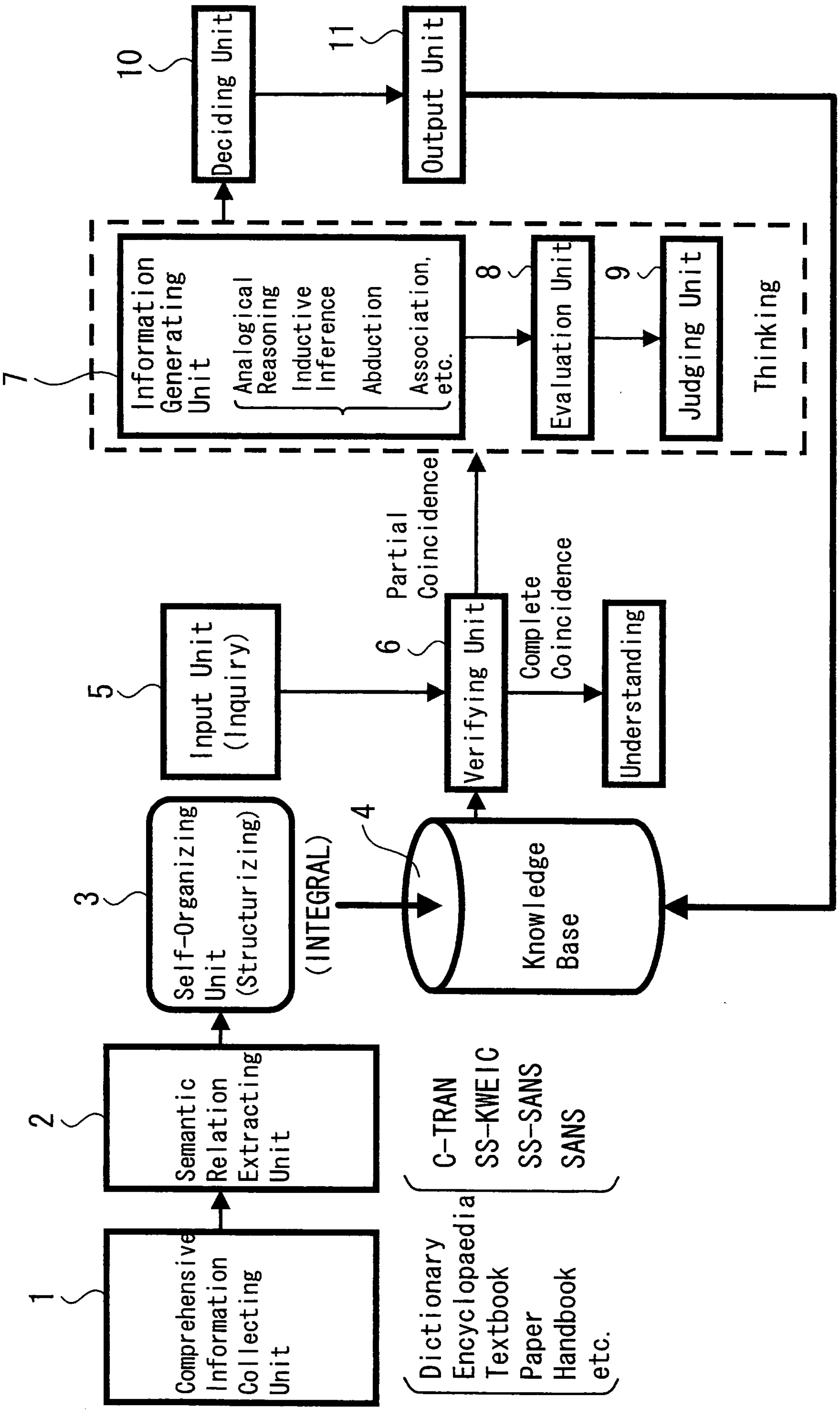
1
Comprehensive Information Collecting Unit
2
Semantic Relation Extracting Unit
3
Self-Organizing Unit (Structurizing)
(INTEGRAL)
4
Knowledge Base
5
Input Unit (Inquiry)
6
Verifying Unit
Partial Coincidence
Complete Coincidence
Understanding
7
Information Generating Unit
Analogical Reasoning
Inductive Inference
Abduction
Association, etc.
8
Evaluation Unit
9
Judging Unit
Thinking
10
Deciding Unit
11
Output Unit
Dictionary
Encyclopaedia
Textbook
Paper
Handbook
etc.
C-TRAN
SS-KWEIC
SS-SANS
SANS

FIG. 2

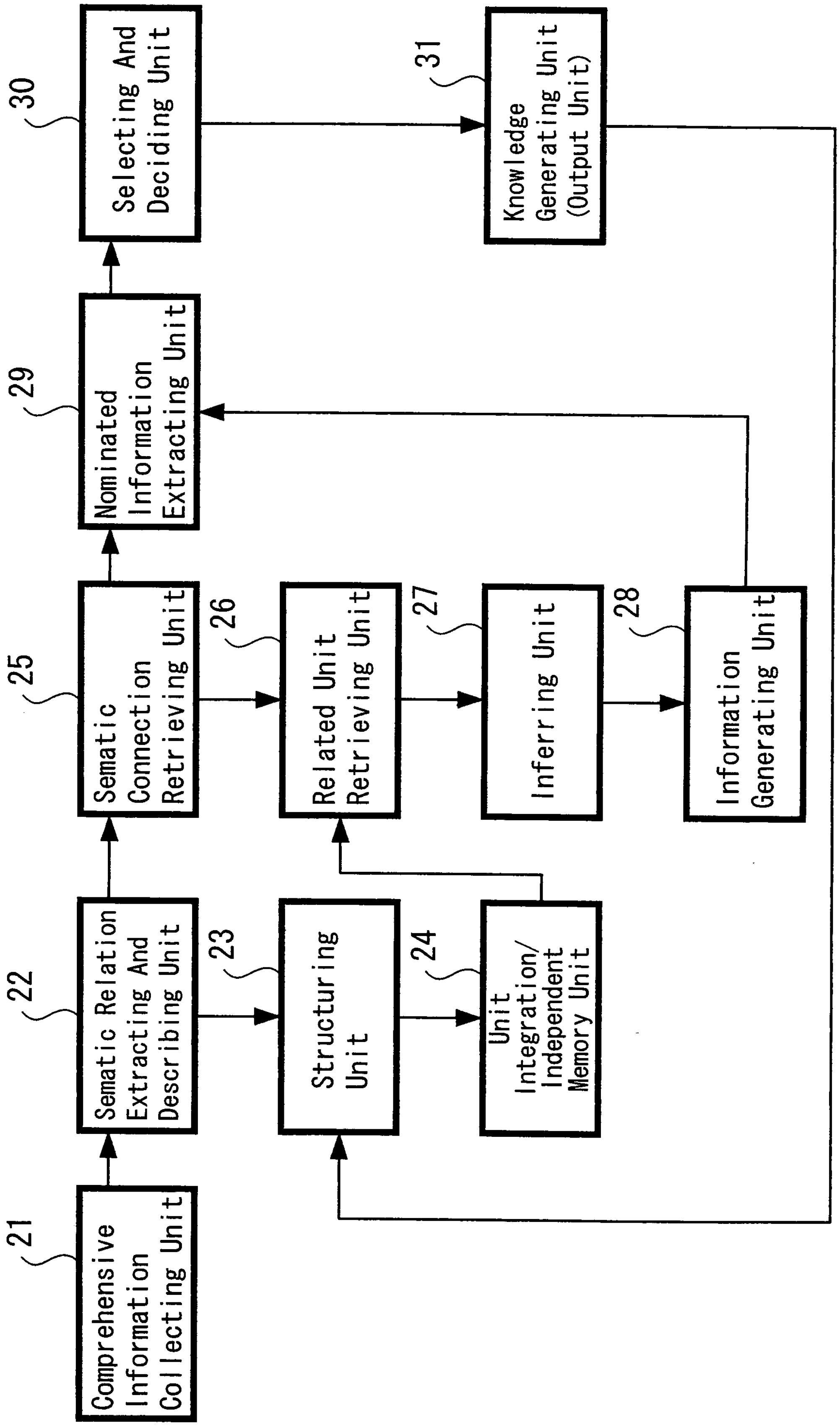
21
Comprehensive Information Collecting Unit
22
Sematic Relation Extracting And Describing Unit
23
Structuring Unit
24
Unit Integration/ Independent Memory Unit
25
Sematic Connection Retrieving Unit
26
Related Unit Retrieving Unit
27
Inferring Unit
28
Information Generating Unit
29
Nominated Information Extracting Unit
30
Selecting And Deciding Unit
31
Knowledge Generating Unit (Output Unit)

FIG. 3

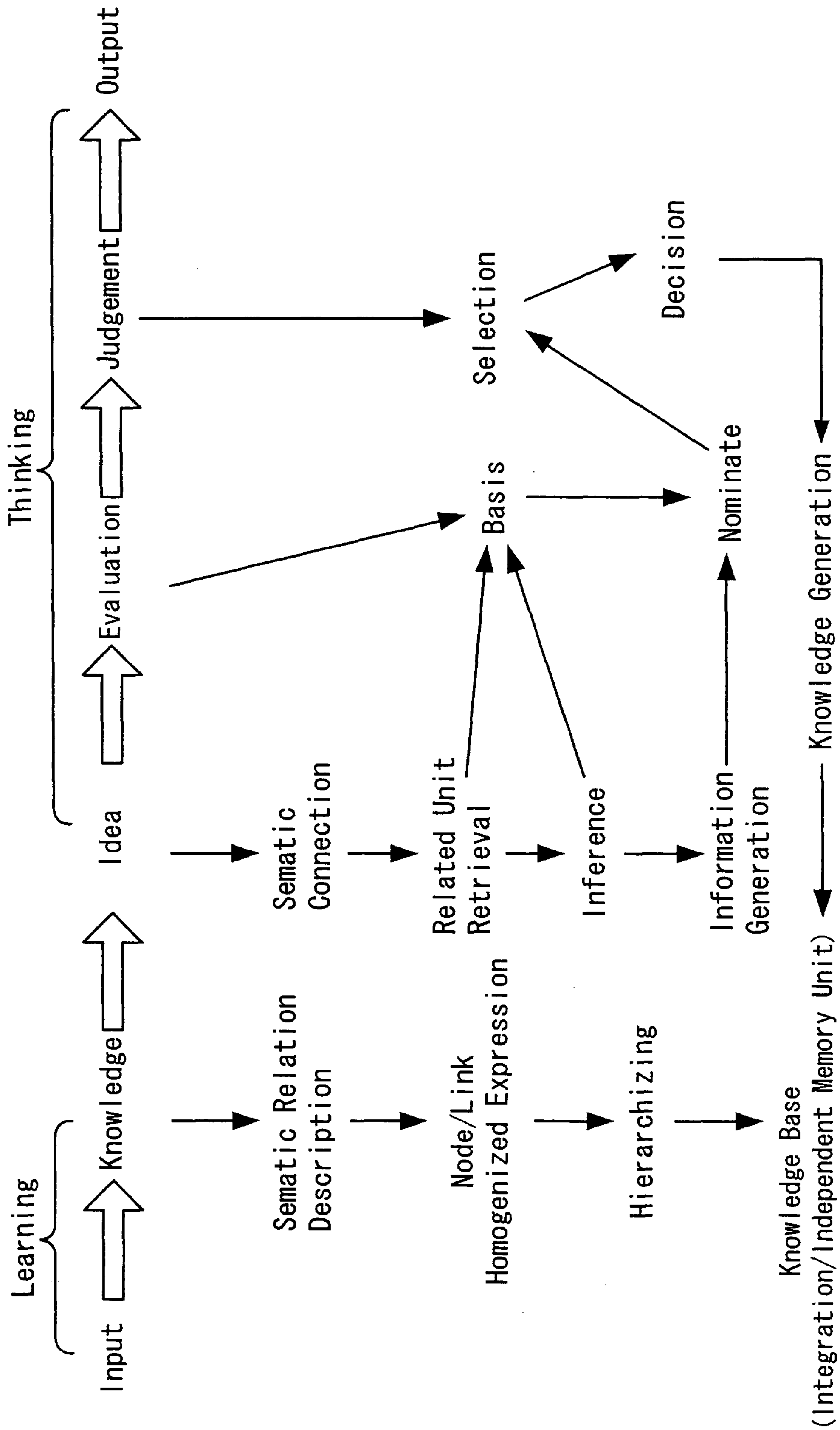
Learning
Thinking
Input
Knowledge
Idea
Evaluation
Judgement
Output
Sematic Relation Description
Node/Link Homogenized Expression
Hierarchizing
Knowledge Base (Integration/Independent Memory Unit)
Sematic Connection
Related Unit Retrieval
Inference
Information Generation
Basis
Nominate
Selection
Decision
Knowledge Generation

FIG. 4

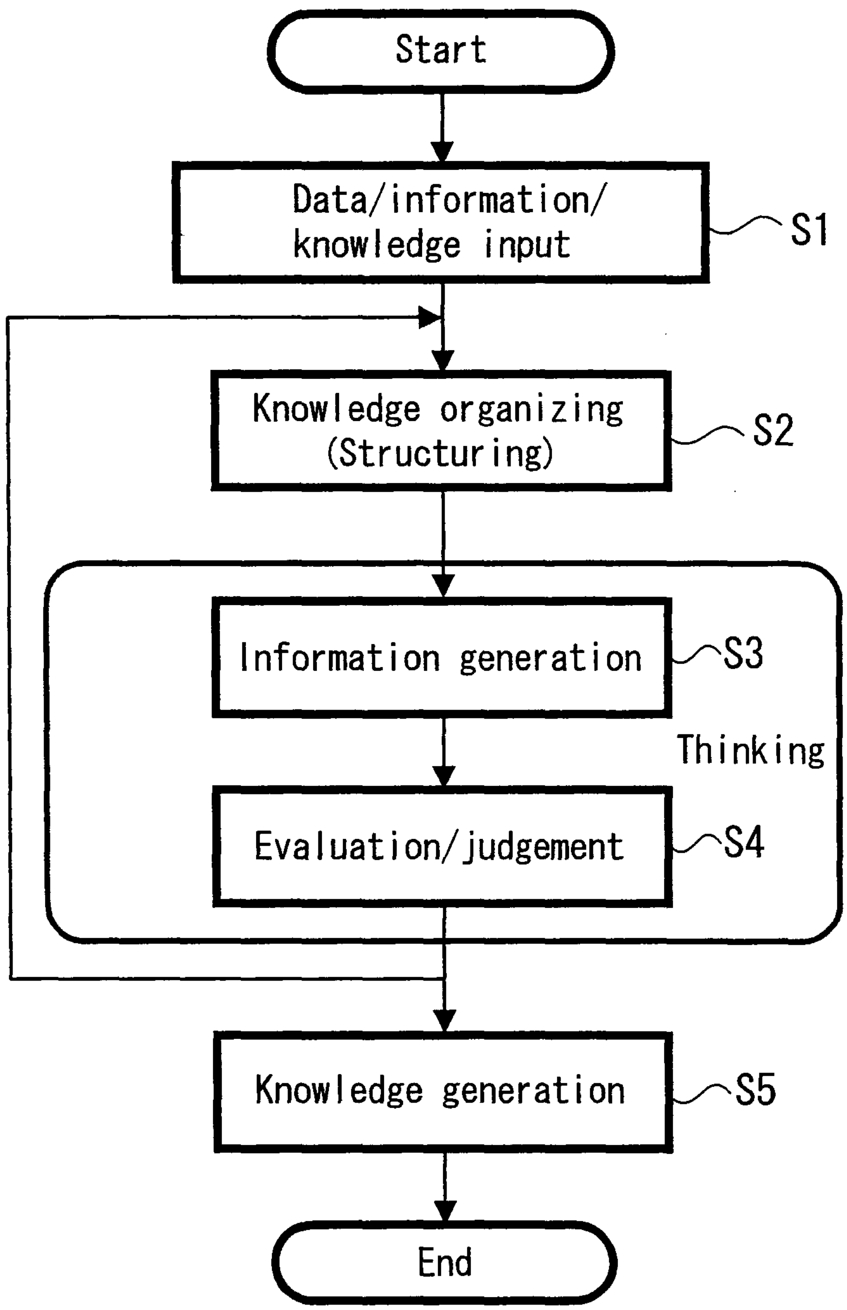
Start
Data/information/ knowledge input
S1
Knowledge organizing (Structuring)
S2
Information generation
S3
Thinking
Evaluation/judgement
S4
Knowledge generation
S5
End

FIG. 5

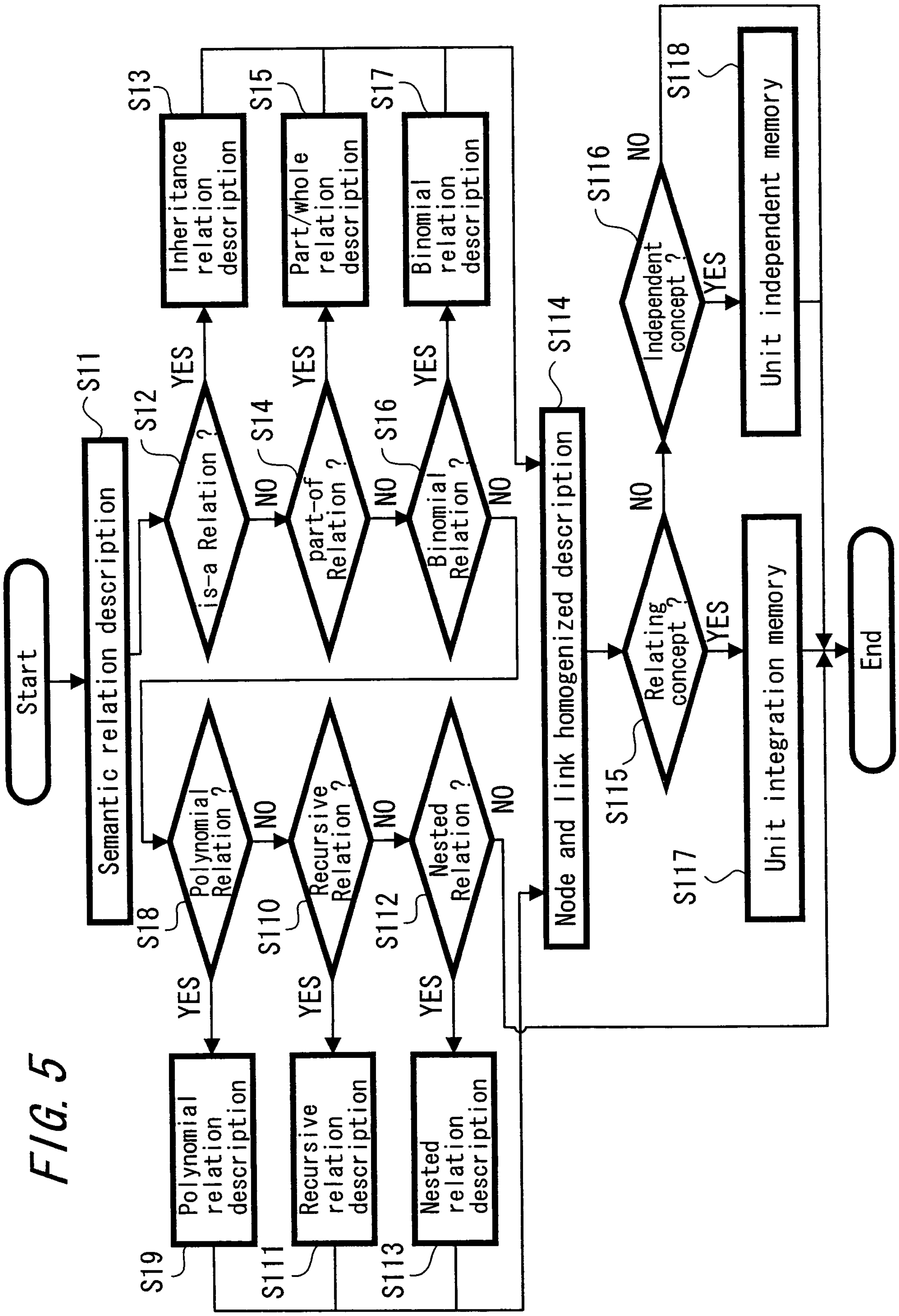
Start
Semantic relation description
S11
is-a Relation ?
S12
YES
NO
Inheritance relation description
S13
part-of Relation ?
S14
Part/whole relation description
S15
Binomial Relation ?
S16
Binomial relation description
S17
Polynomial Relation ?
S18
Polynomial relation description
S19
Recursive Relation ?
S110
Recursive relation description
S111
Nested Relation ?
S112
Nested relation description
S113
Node and link homogenized description
S114
Relating concept ?
S115
Independent concept ?
S116
Unit integration memory
S117
Unit independent memory
S118
End

FIG. 6

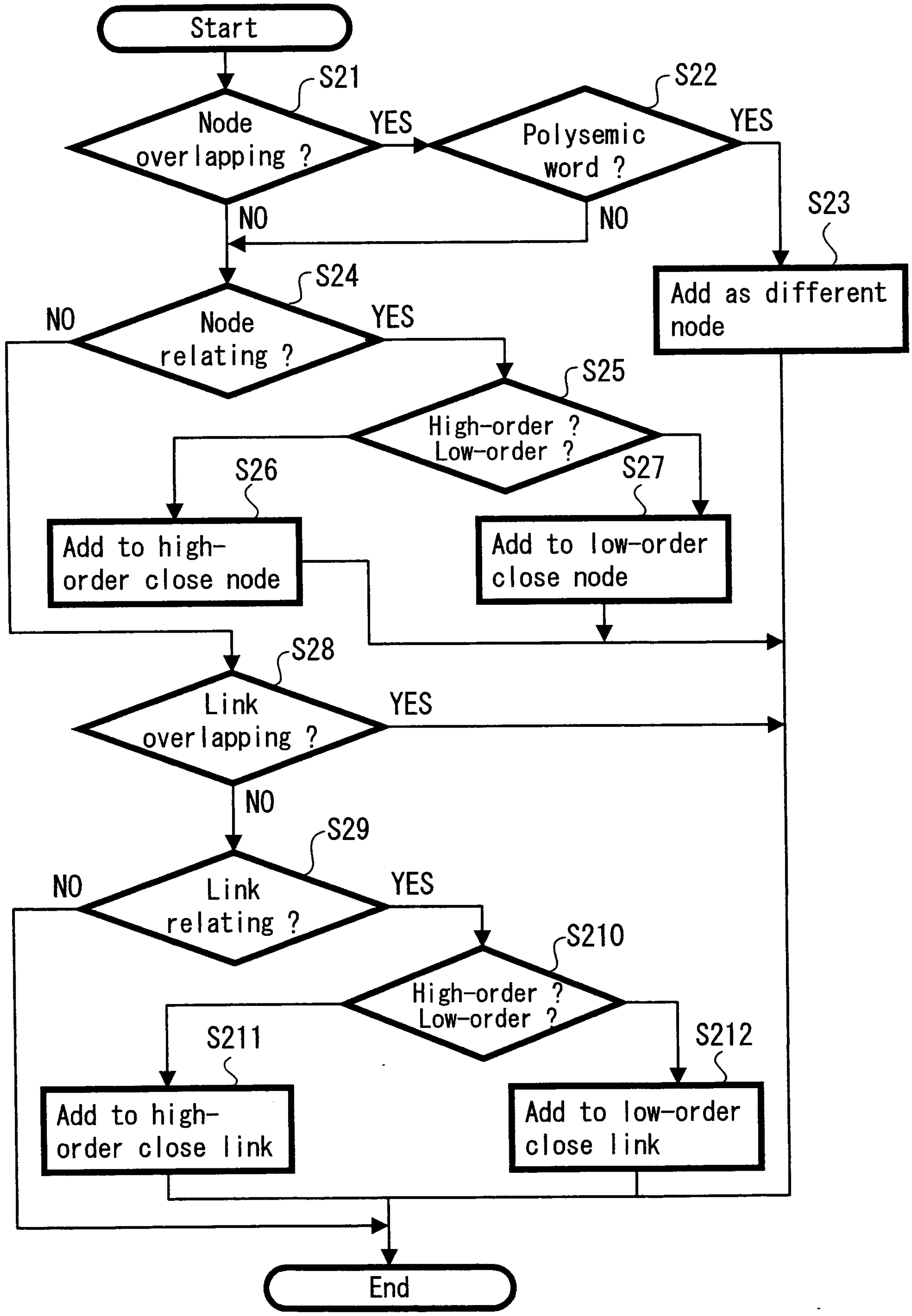
Start
S21
Node overlapping ?
YES
NO
S22
Polysemic word ?
YES
NO
S23
Add as different node
S24
Node relating ?
NO
YES
S25
High-order ? Low-order ?
S26
Add to high-order close node
S27
Add to low-order close node
S28
Link overlapping ?
YES
NO
S29
Link relating ?
NO
YES
S210
High-order ? Low-order ?
S211
Add to high-order close link
S212
Add to low-order close link
End

FIG. 7

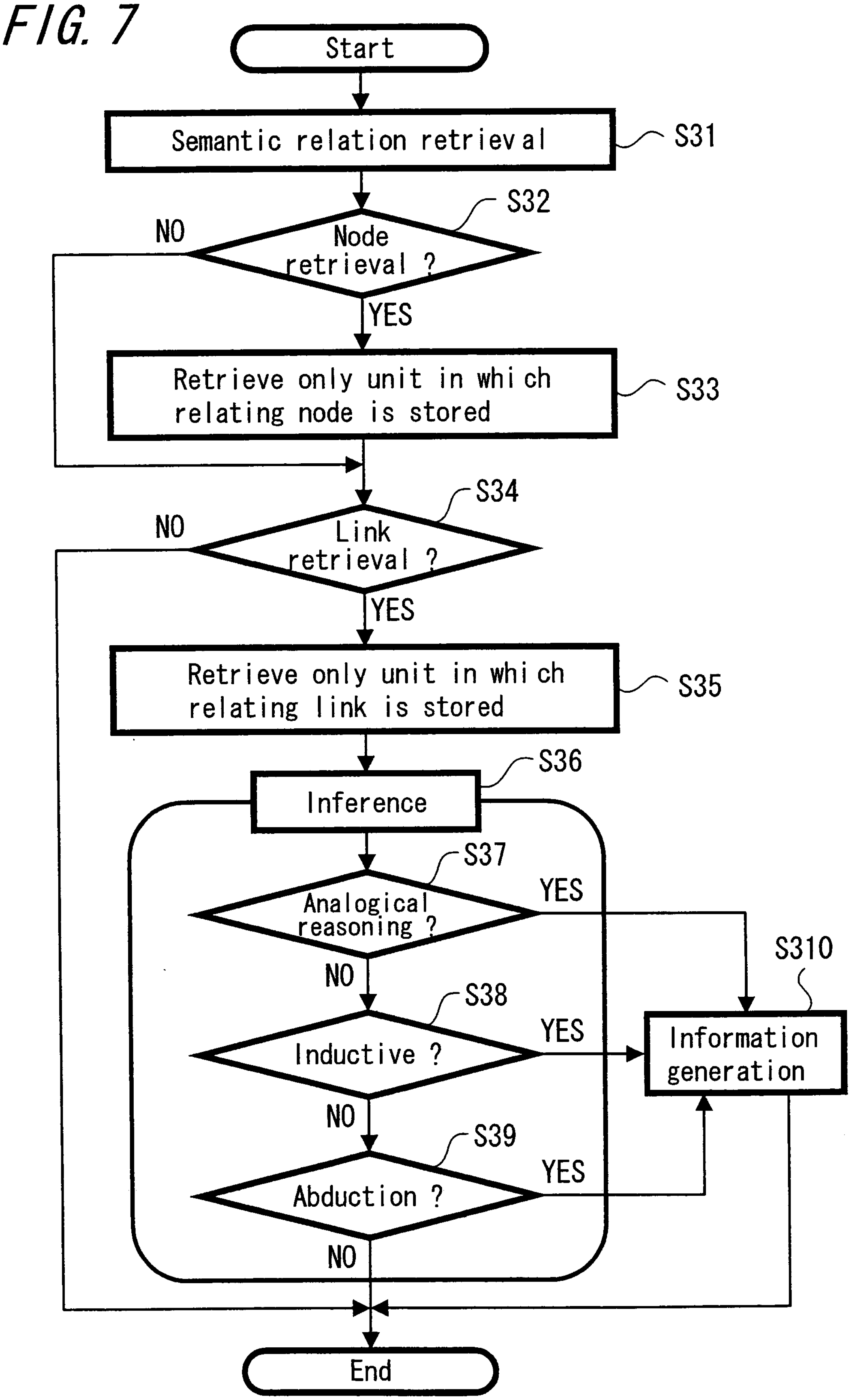
Start
Semantic relation retrieval
S31
Node retrieval ?
S32
NO
YES
Retrieve only unit in which relating node is stored
S33
Link retrieval ?
S34
NO
YES
Retrieve only unit in which relating link is stored
S35
Inference
S36
Analogical reasoning ?
S37
YES
NO
Inductive ?
S38
YES
NO
Abduction ?
S39
YES
NO
Information generation
S310
End

*FIG. 8*

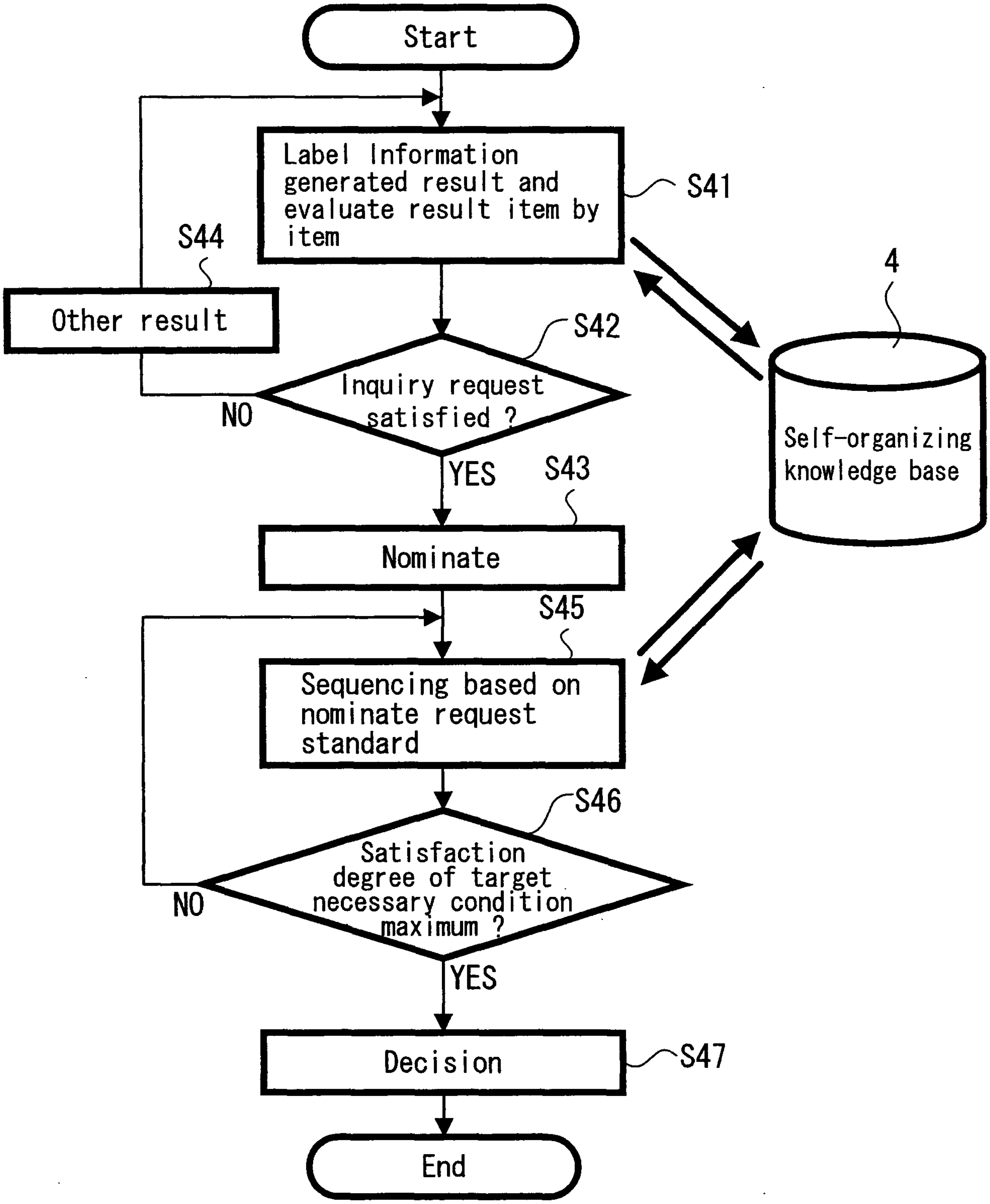
Start
Label Information generated result and evaluate result item by item
S41
S44
Other result
4
S42
Inquiry request satisfied ?
NO
YES
Self-organizing knowledge base
S43
Nominate
S45
Sequencing based on nominate request standard
S46
Satisfaction degree of target necessary condition maximum ?
NO
YES
Decision
S47
End

FIG. 9

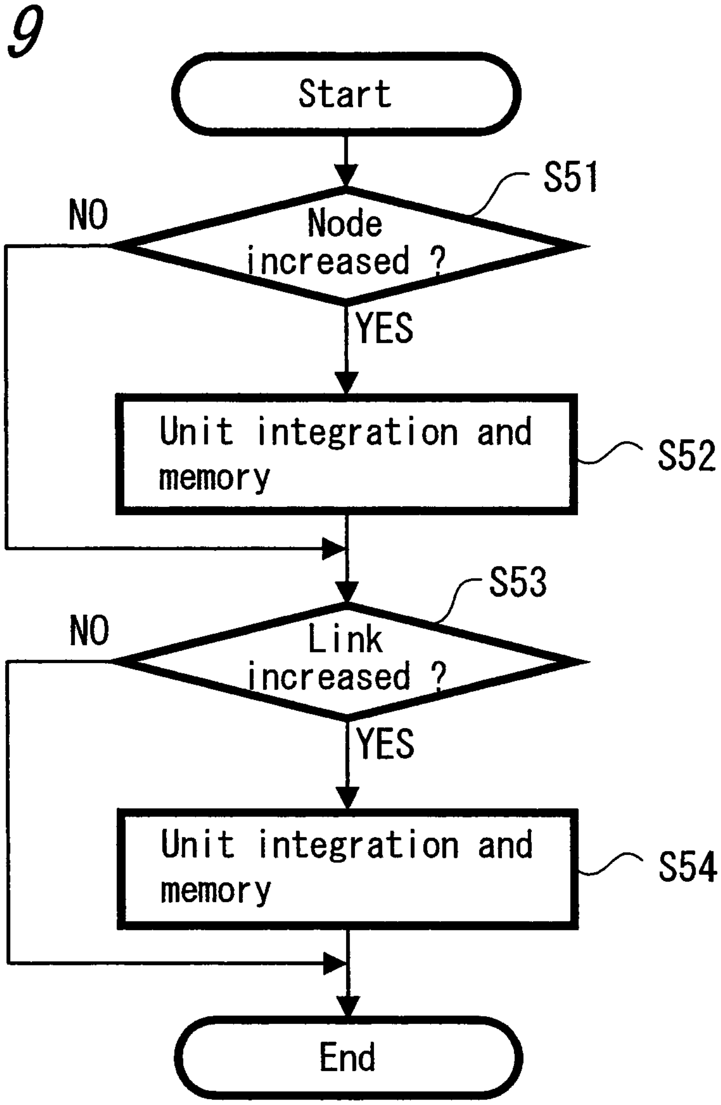
Start
S51
NO
Node increased ?
YES
Unit integration and memory
S52
S53
NO
Link increased ?
YES
Unit integration and memory
S54
End

FIG. 10

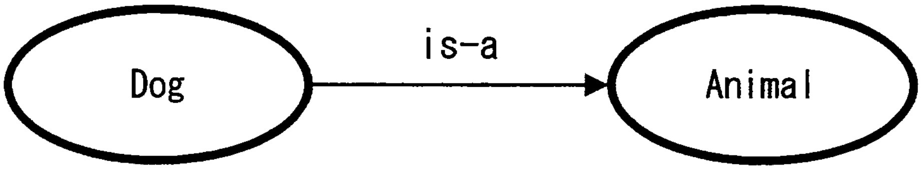
is-a
Dog
Animal

FIG. 11

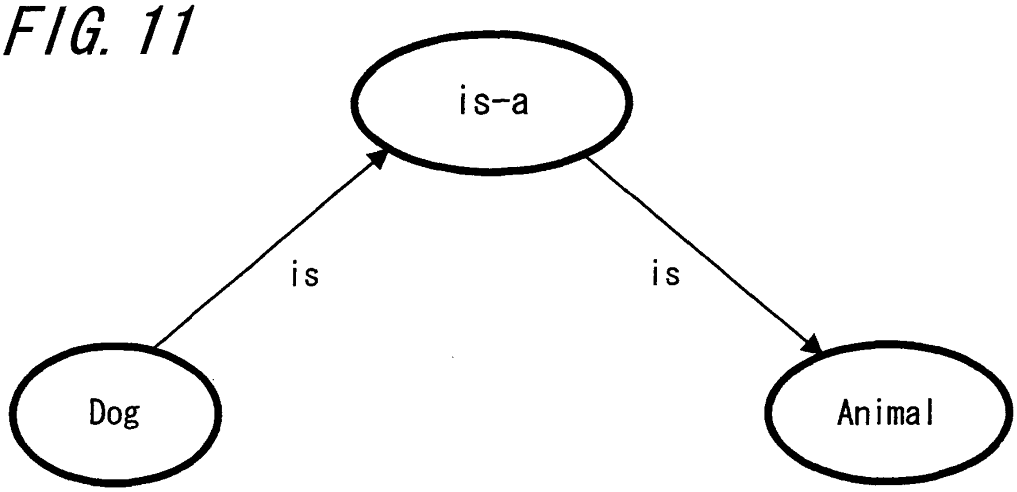
is-a
is
is
Dog
Animal

FIG. 12

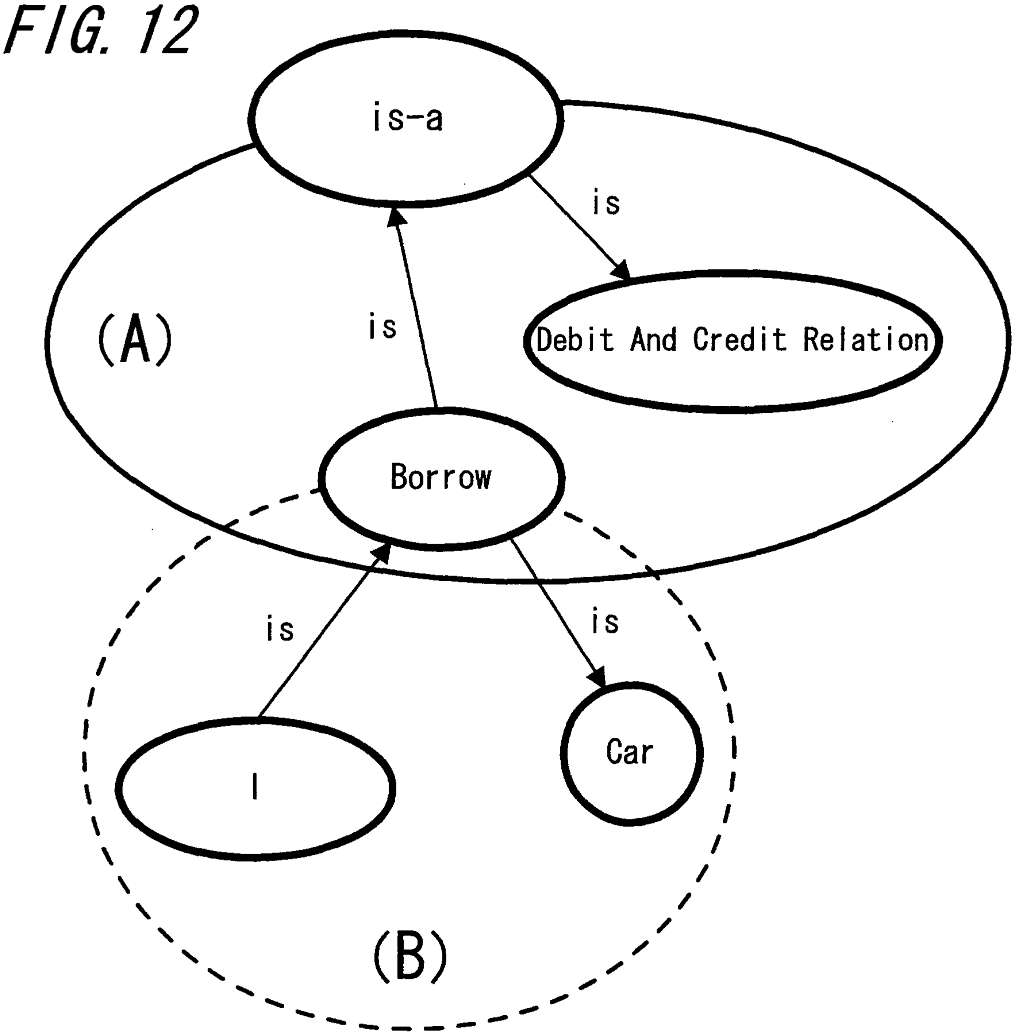
is-a
is
(A)
is
Debit And Credit Relation
Borrow
is
is
I
Car
(B)

FIG. 13

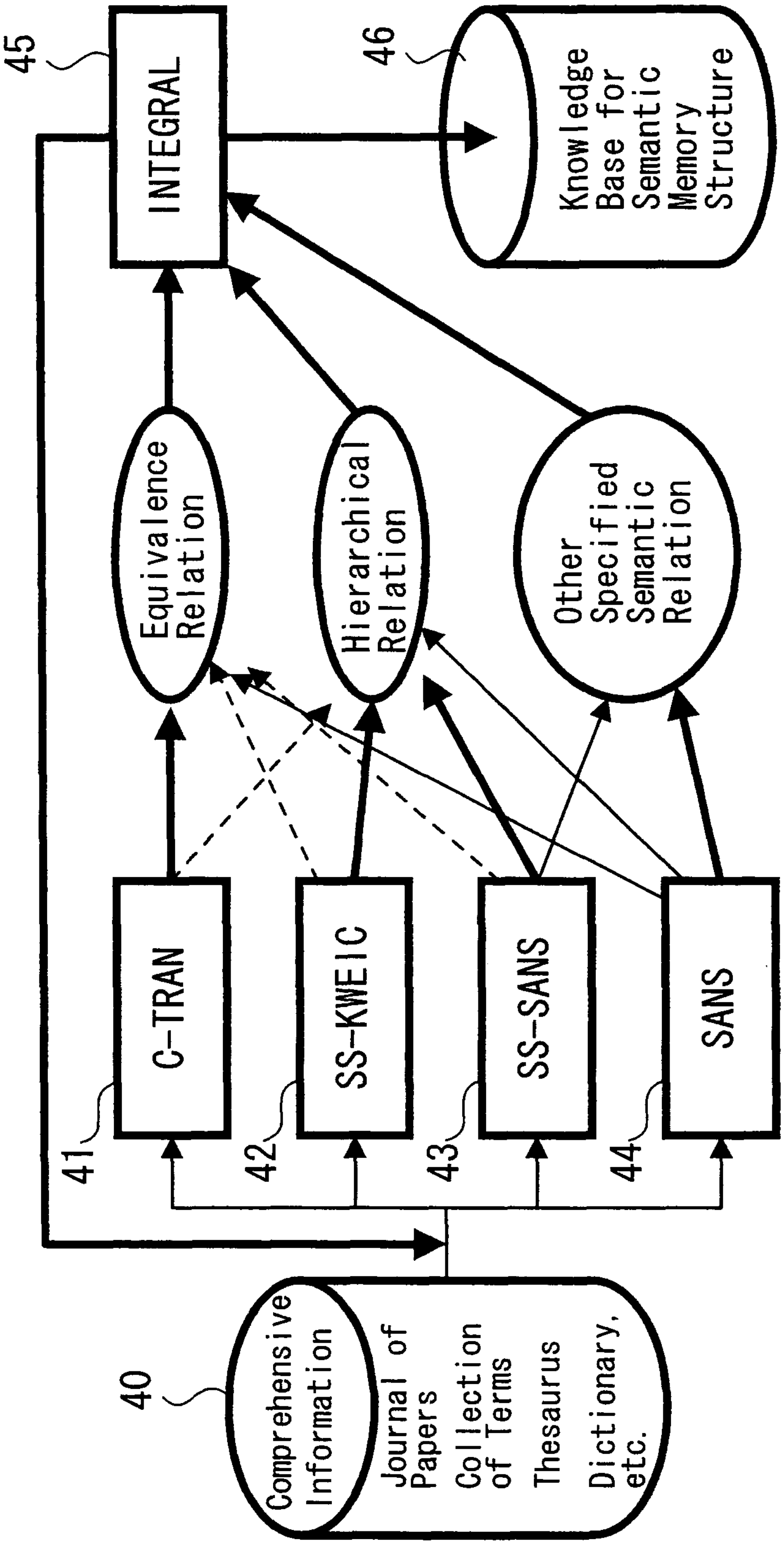
40
Comprehensive Information
Journal of Papers
Collection of Terms
Thesaurus
Dictionary, etc.
41
C-TRAN
42
SS-KWEIC
43
SS-SANS
44
SANS
Equivalence Relation
Hierarchical Relation
Other Specified Semantic Relation
45
INTEGRAL
46
Knowledge Base for Semantic Memory Structure

FIG. 14

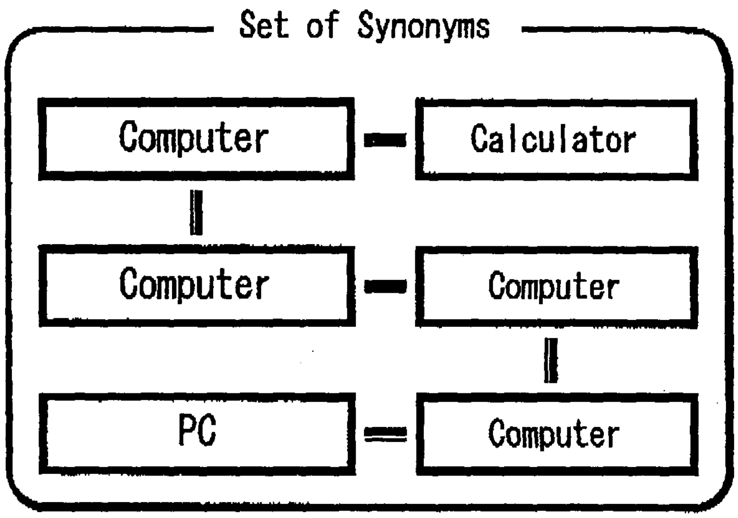


FIG. 15

| Words Before Being Decomposed | Words After Being Decomposed |
|---|---|
| System | System |
| Information System | Information System |
| Control System | Control System |
| Weather Information System | Weather Information System |
| Finance Information System | Finance Information System |

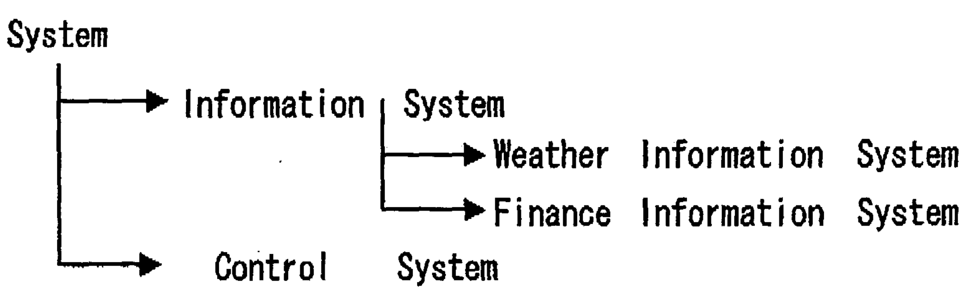

FIG. 16

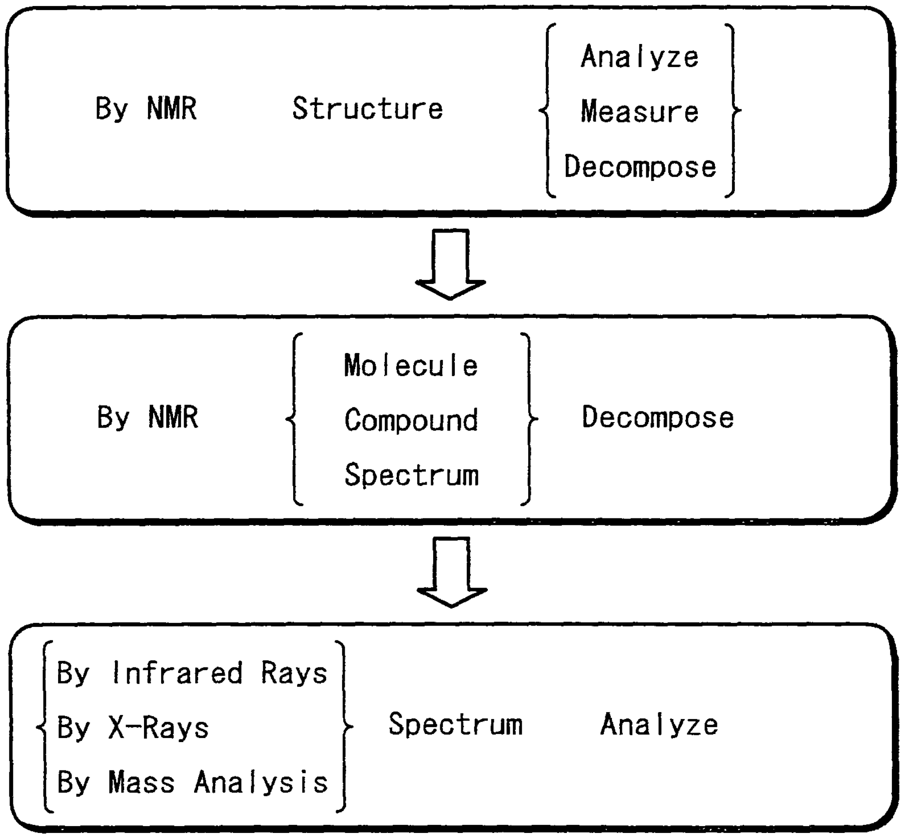
By NMR
Structure
Analyze
Measure
Decompose
By NMR
Molecule
Compound
Spectrum
Decompose
By Infrared Rays
By X-Rays
By Mass Analysis
Spectrum
Analyze

FIG. 17

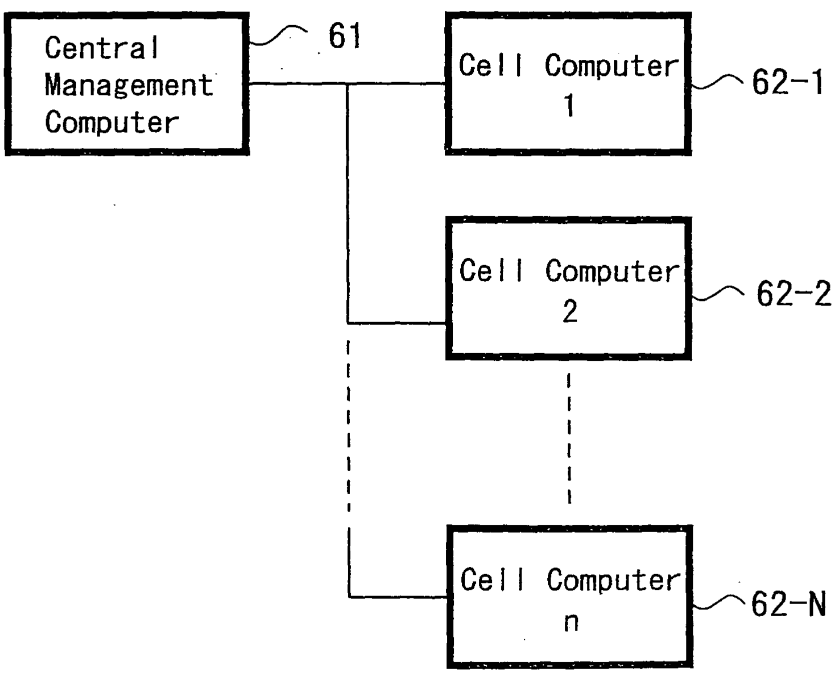
Central Management Computer
61
Cell Computer 1
62-1
Cell Computer 2
62-2
Cell Computer n
62-N

FIG. 18

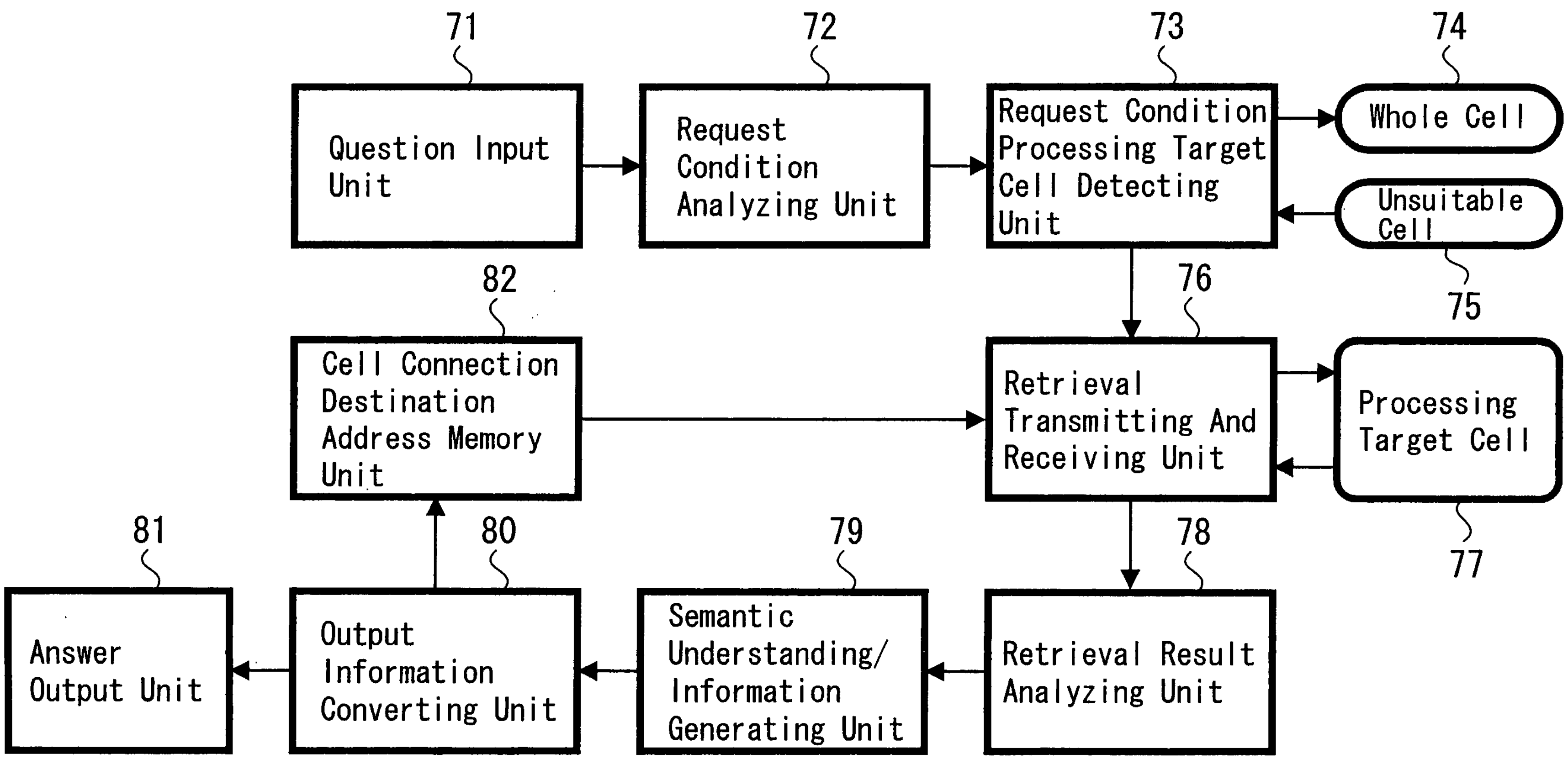
71
Question Input Unit
72
Request Condition Analyzing Unit
73
Request Condition Processing Target Cell Detecting Unit
74
Whole Cell
75
Unsuitable Cell
76
Retrieval Transmitting And Receiving Unit
77
Processing Target Cell
78
Retrieval Result Analyzing Unit
79
Semantic Understanding/ Information Generating Unit
80
Output Information Converting Unit
81
Answer Output Unit
82
Cell Connection Destination Address Memory Unit

FIG. 19

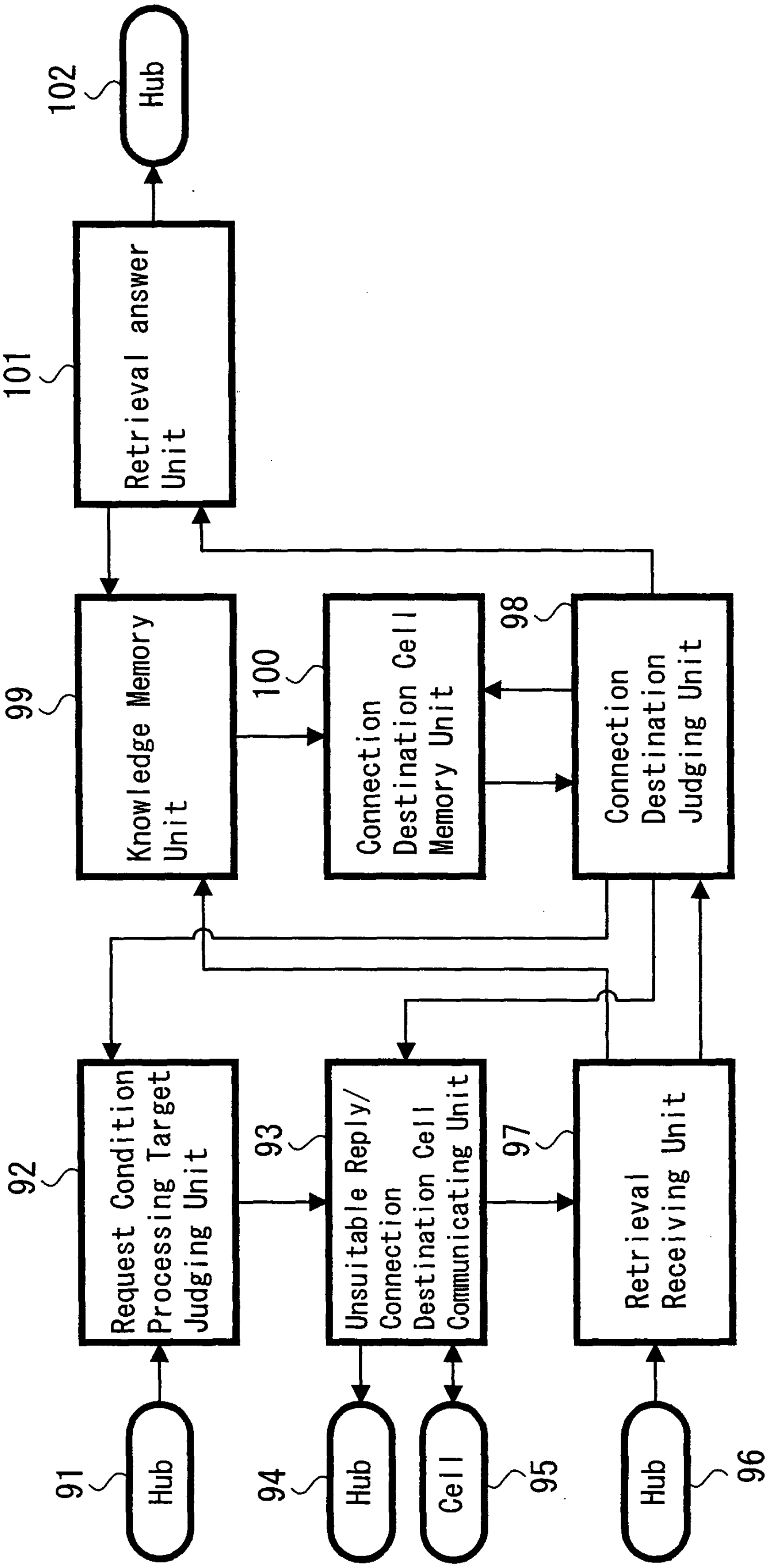
91
Hub
92
Request Condition Processing Target Judging Unit
93
Unsuitable Reply/ Connection Destination Cell Communicating Unit
94
Hub
95
Cell
96
Hub
97
Retrieval Receiving Unit
98
Connection Destination Judging Unit
99
Knowledge Memory Unit
100
Connection Destination Cell Memory Unit
101
Retrieval answer Unit
102
Hub

FIG. 20

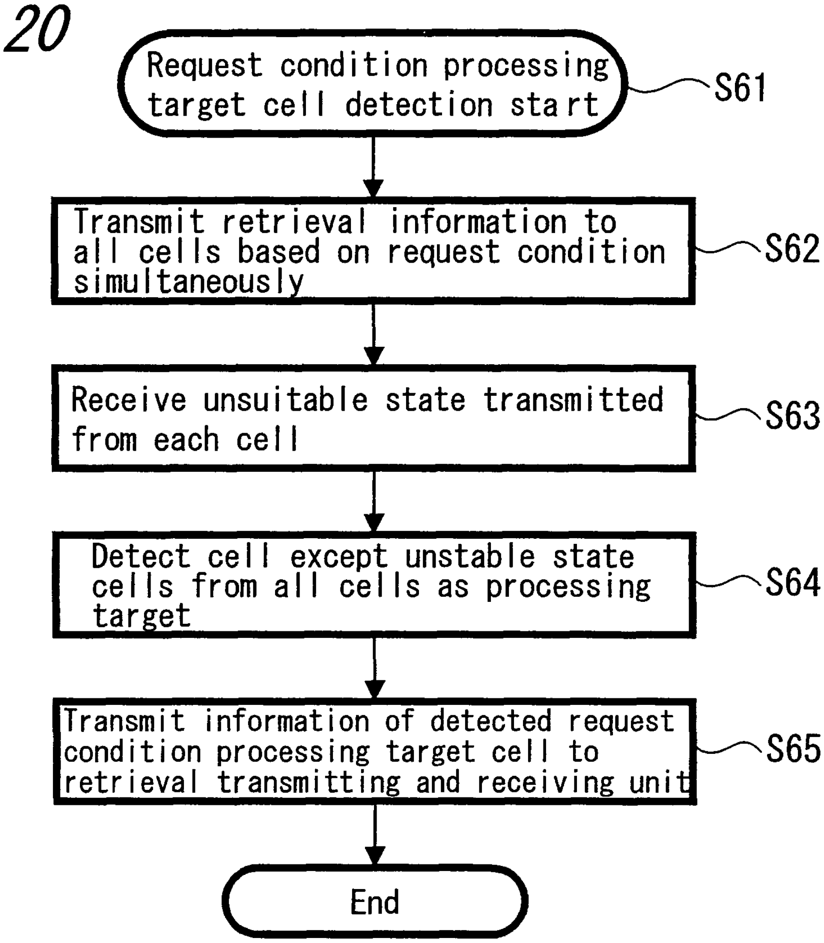
Request condition processing target cell detection start
S61
Transmit retrieval information to all cells based on request condition simultaneously
S62
Receive unsuitable state transmitted from each cell
S63
Detect cell except unstable state cells from all cells as processing target
S64
Transmit information of detected request condition processing target cell to retrieval transmitting and receiving unit
S65
End

FIG. 22

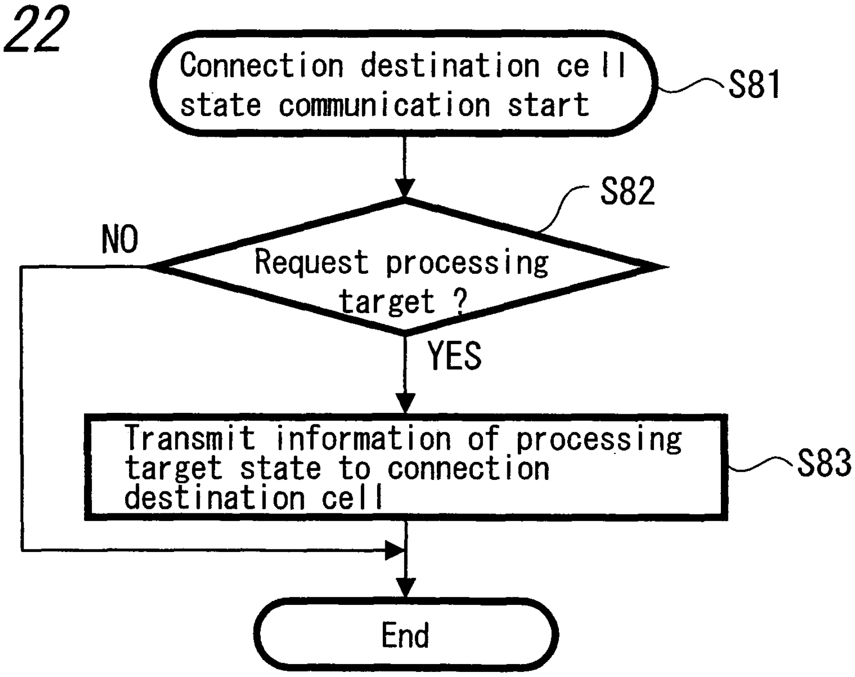
Connection destination cell state communication start
S81
S82
NO
Request processing target ?
YES
Transmit information of processing target state to connection destination cell
S83
End

FIG. 21

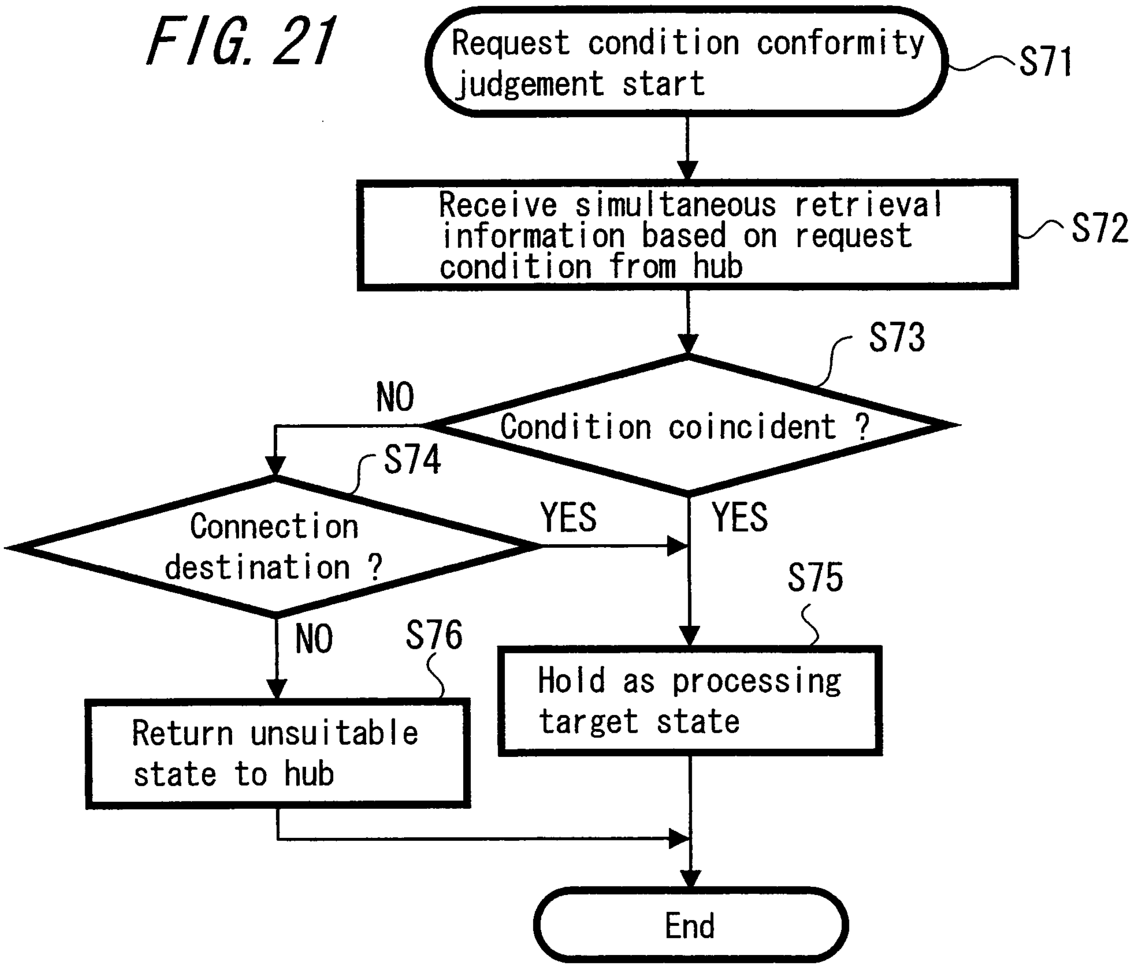
Request condition conformity judgement start
S71
Receive simultaneous retrieval information based on request condition from hub
S72
S73
NO
Condition coincident ?
S74
Connection destination ?
YES
YES
S75
NO
S76
Hold as processing target state
Return unsuitable state to hub
End

FIG. 23

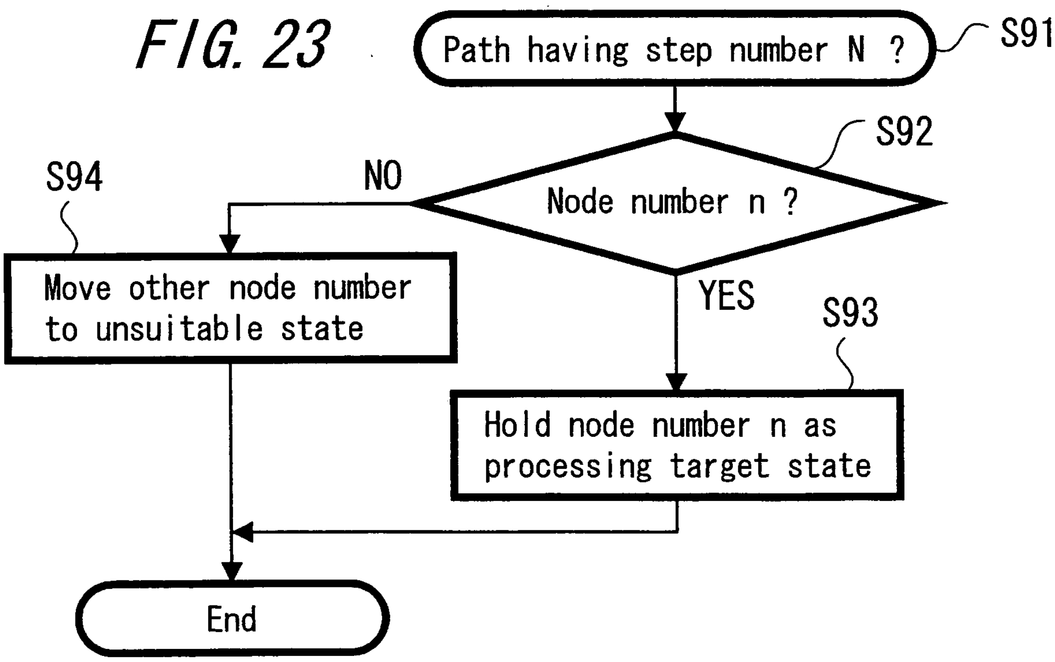
Path having step number N ?
S91
S92
S94
NO
Node number n ?
Move other node number to unsuitable state
YES
S93
Hold node number n as processing target state
End

FIG. 24

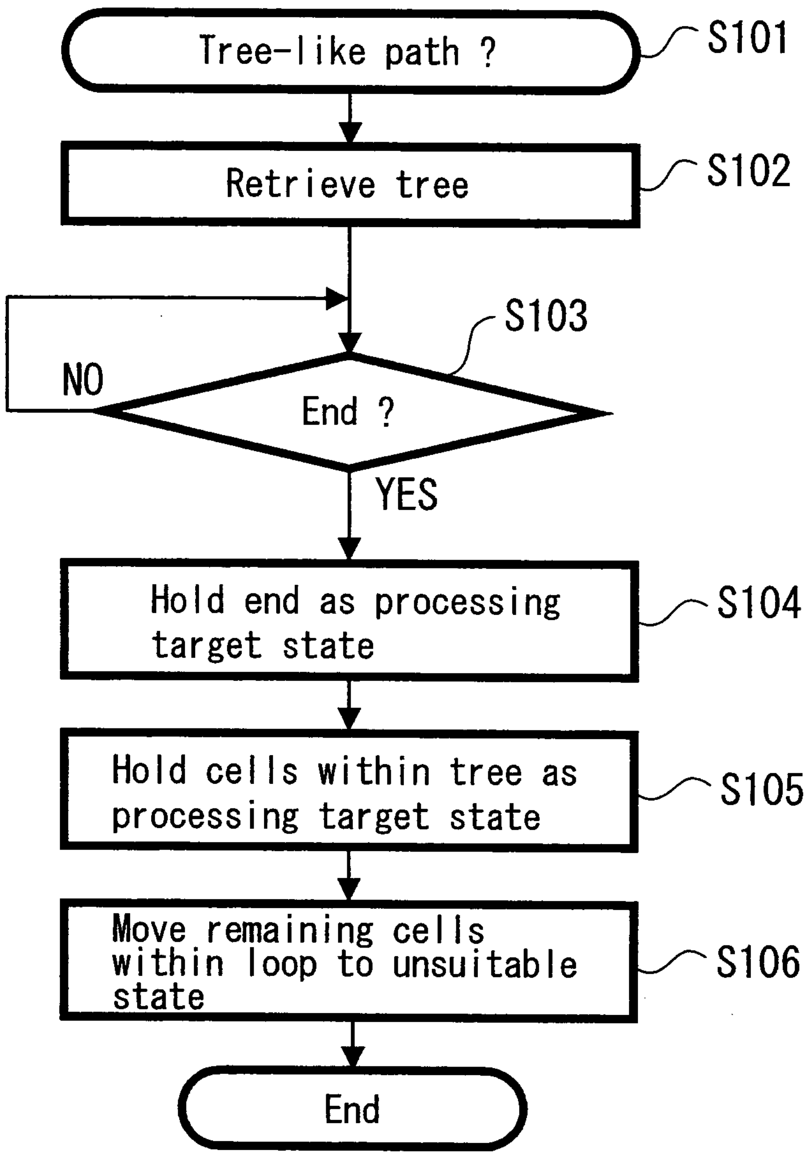
Tree-like path ?
S101
Retrieve tree
S102
S103
NO
End ?
YES
Hold end as processing target state
S104
Hold cells within tree as processing target state
S105
Move remaining cells within loop to unsuitable state
S106
End

FIG. 25

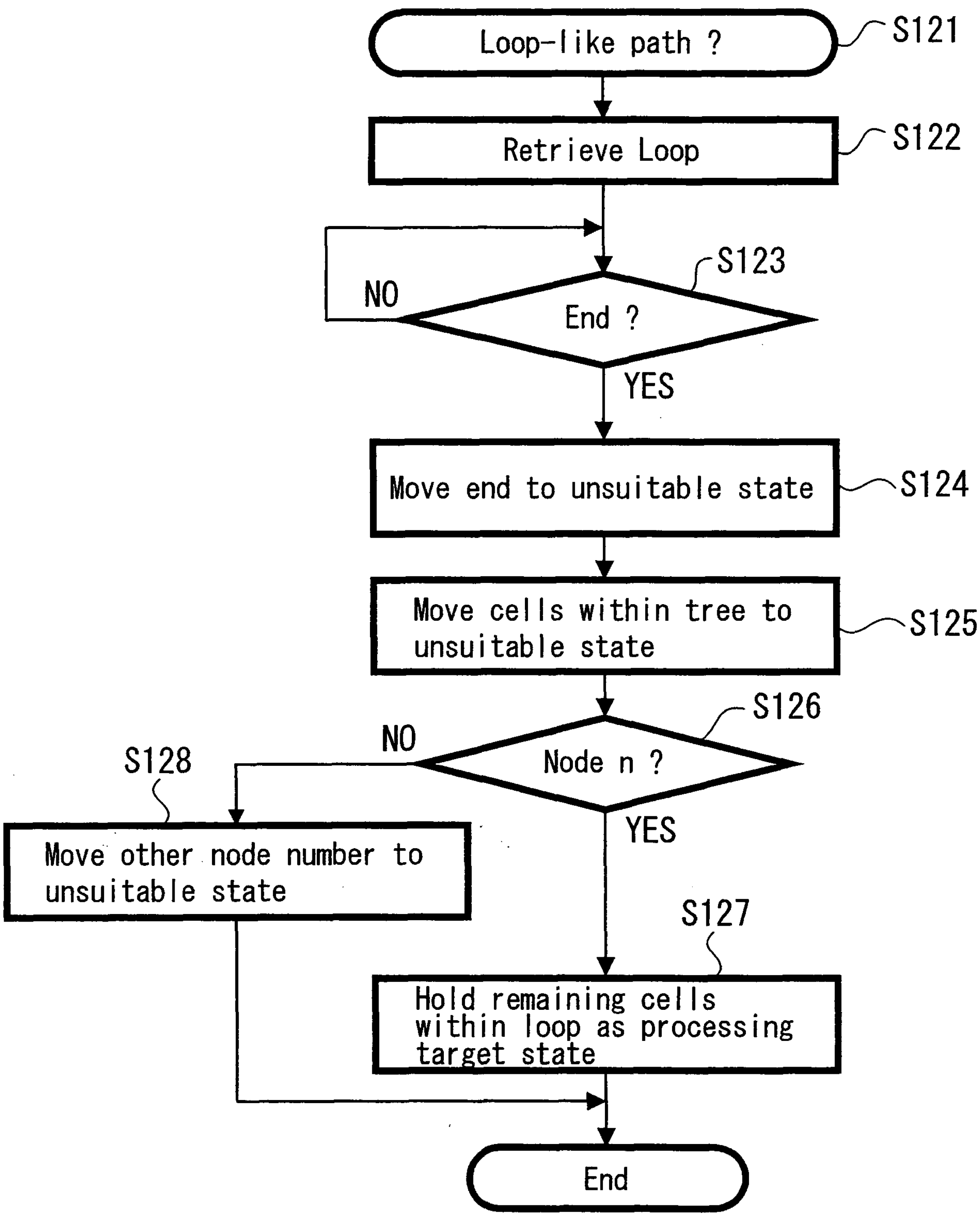
Loop-like path ?
S121
Retrieve Loop
S122
S123
NO
End ?
YES
Move end to unsuitable state
S124
Move cells within tree to unsuitable state
S125
S126
NO
Node n ?
S128
Move other node number to unsuitable state
YES
S127
Hold remaining cells within loop as processing target state
End

FIG. 26

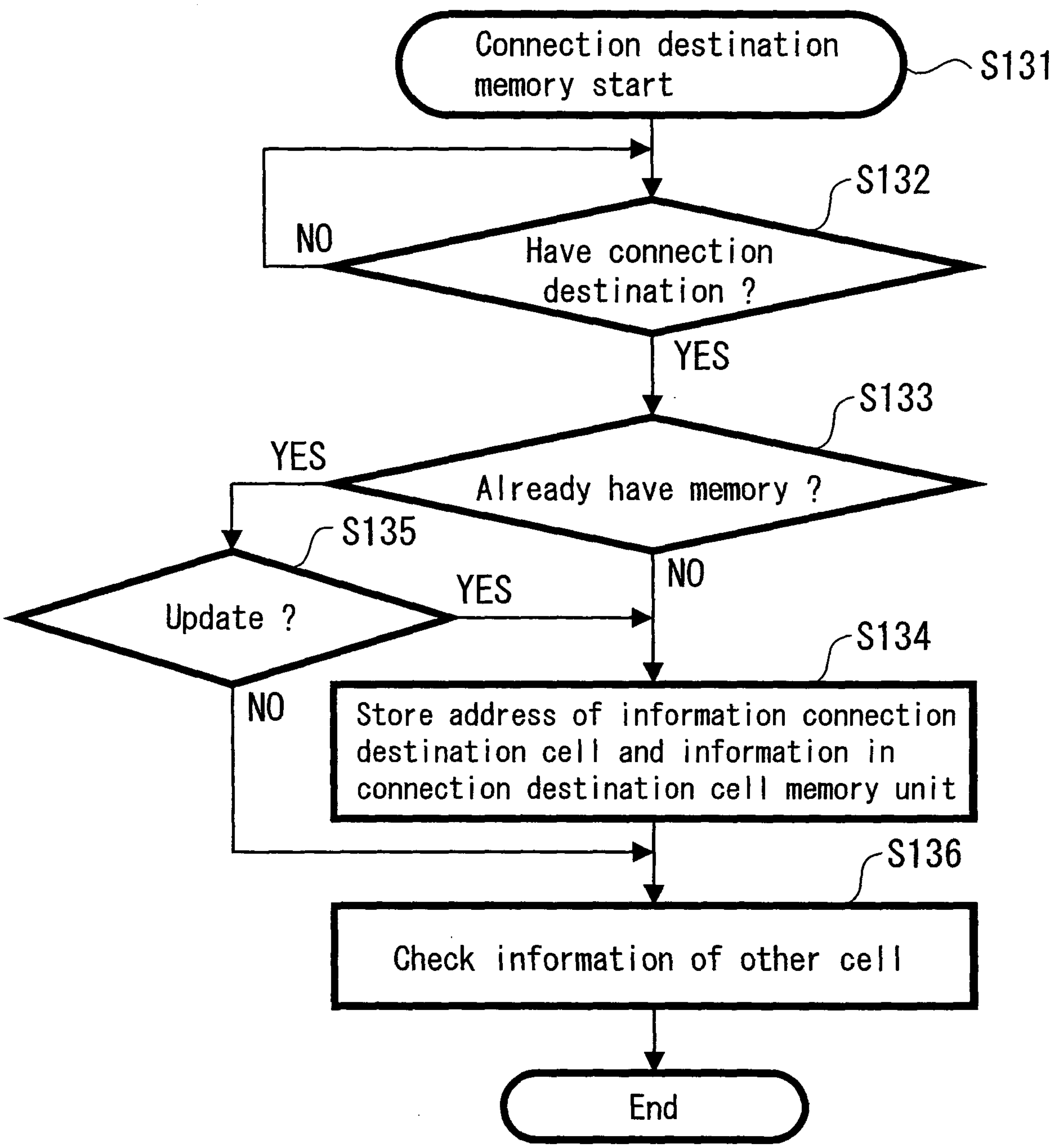
Connection destination memory start
S131
S132
NO
Have connection destination ?
YES
S133
YES
Already have memory ?
S135
Update ?
YES
NO
S134
NO
Store address of information connection destination cell and information in connection destination cell memory unit
S136
Check information of other cell
End

FIG. 27

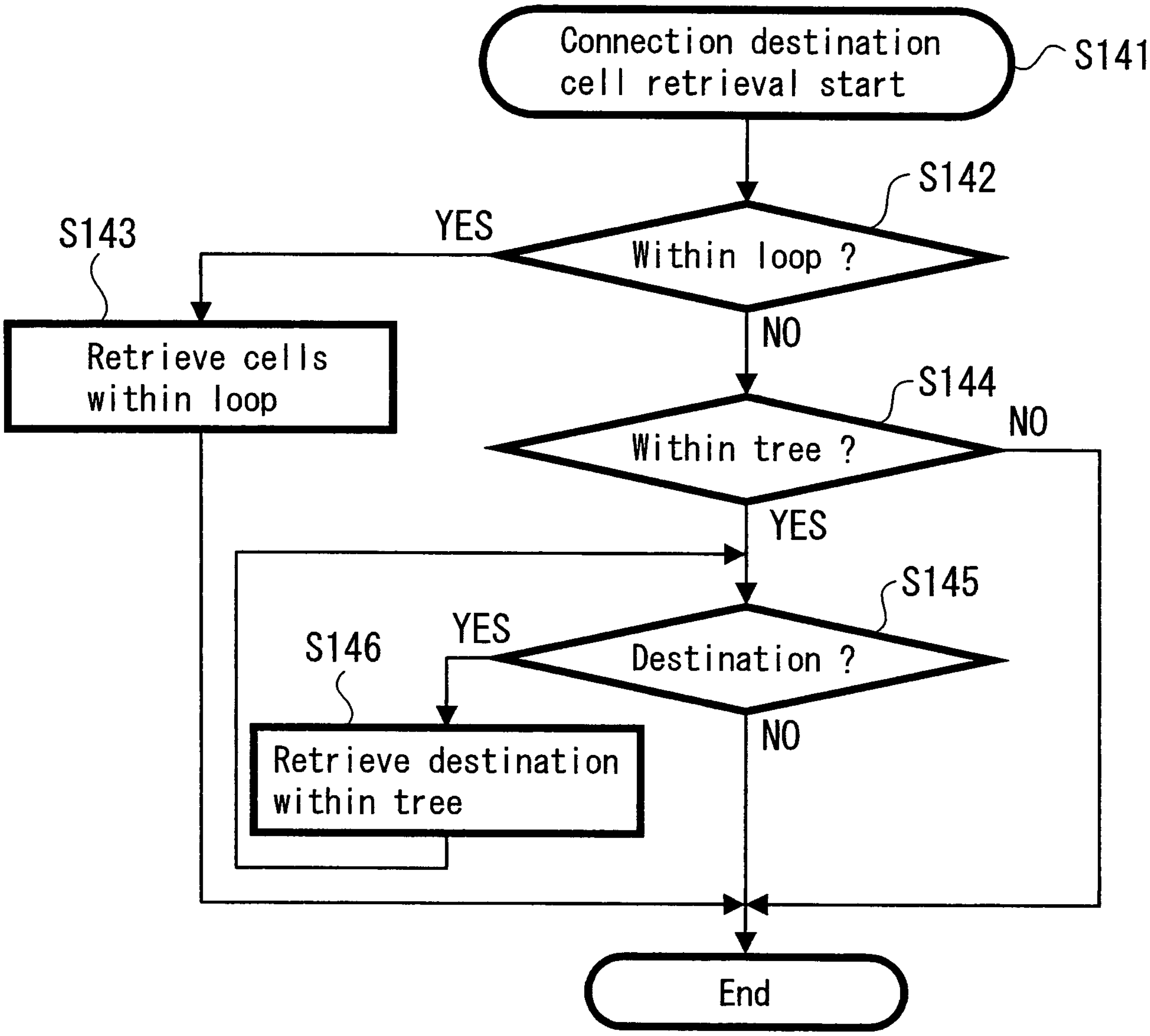
Connection destination cell retrieval start
S141
S142
Within loop ?
YES
S143
Retrieve cells within loop
NO
S144
Within tree ?
NO
YES
S145
Destination ?
YES
S146
Retrieve destination within tree
NO
End

FIG. 28

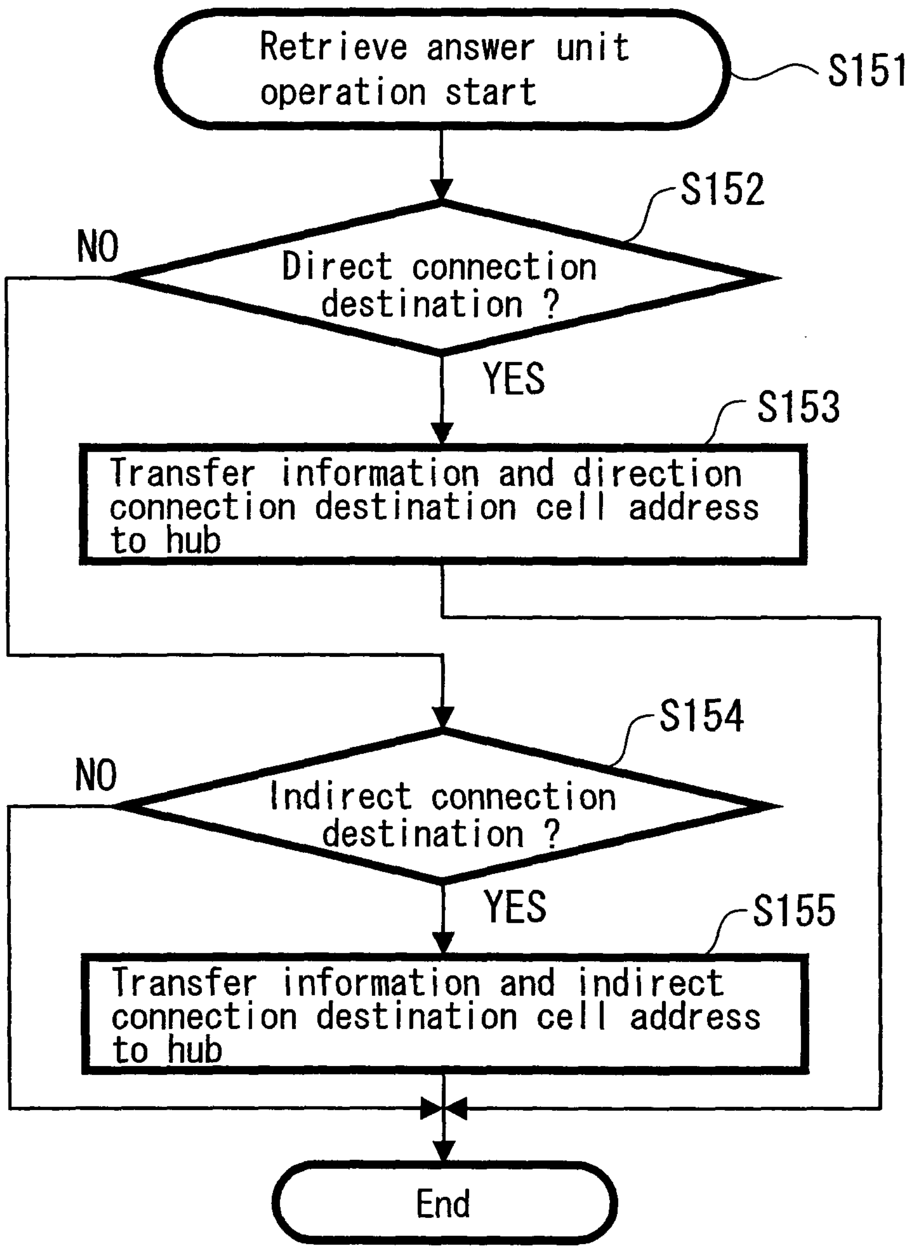
Retrieve answer unit operation start
S151
S152
NO
Direct connection destination ?
YES
S153
Transfer information and direction connection destination cell address to hub
S154
NO
Indirect connection destination ?
YES
S155
Transfer information and indirect connection destination cell address to hub
End

FIG. 29

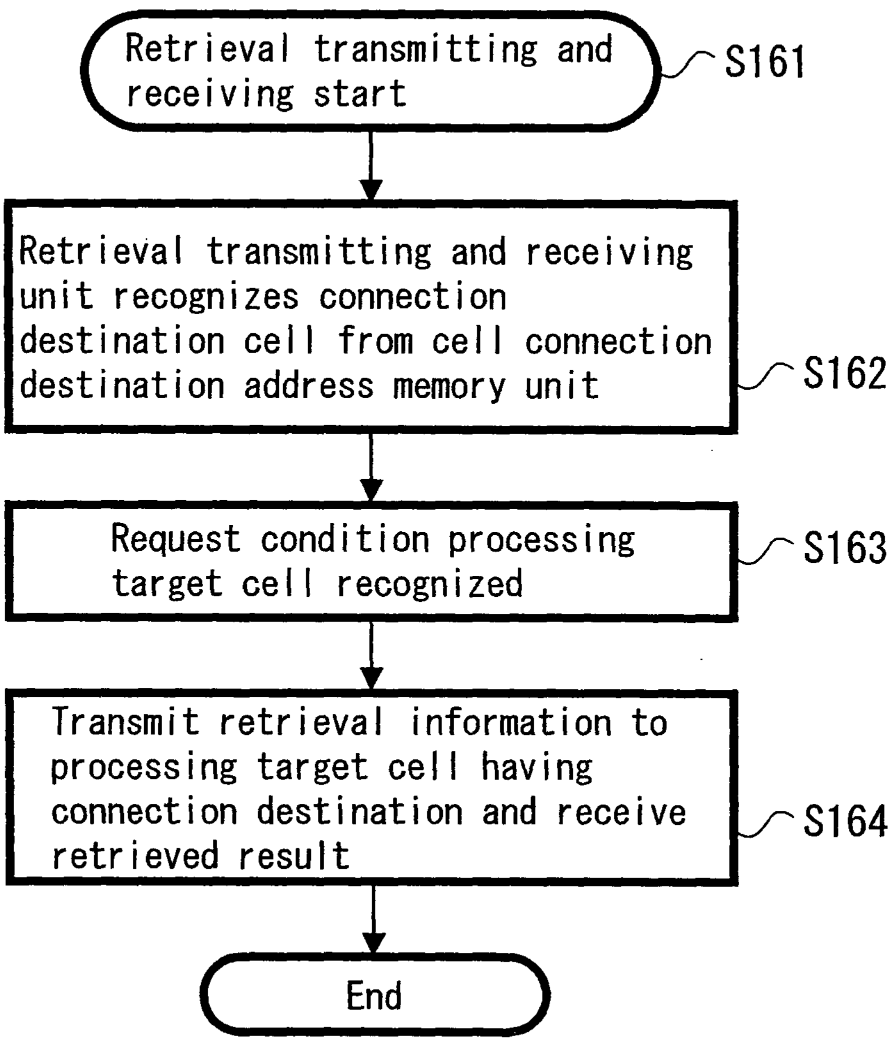
Retrieval transmitting and receiving start
S161
Retrieval transmitting and receiving unit recognizes connection destination cell from cell connection destination address memory unit
S162
Request condition processing target cell recognized
S163
Transmit retrieval information to processing target cell having connection destination and receive retrieved result
S164
End

FIG. 30

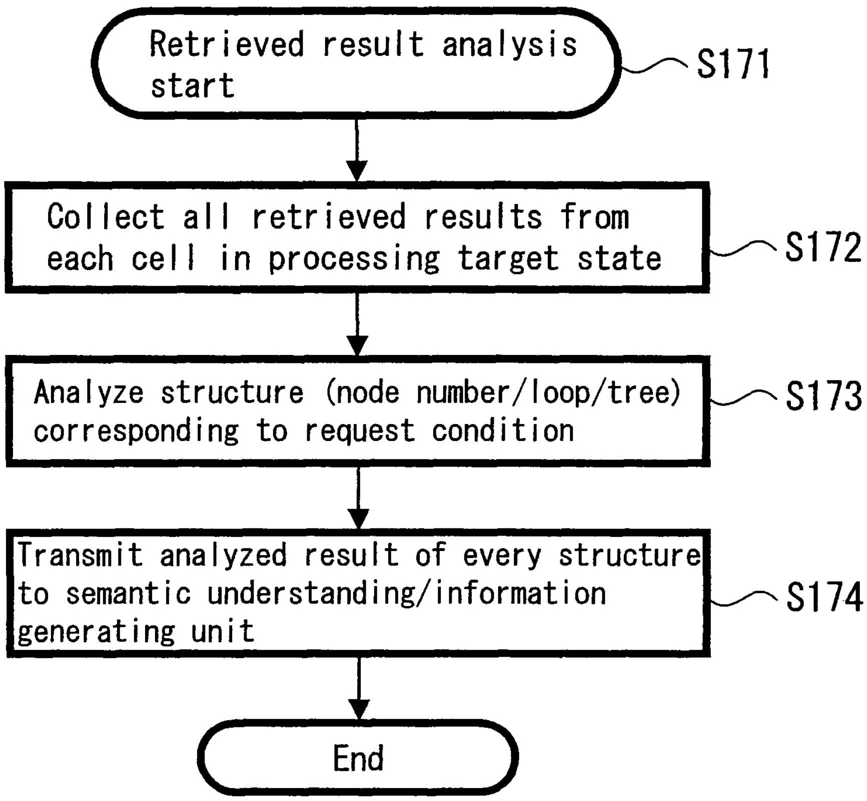
Retrieved result analysis start
S171
Collect all retrieved results from each cell in processing target state
S172
Analyze structure (node number/loop/tree) corresponding to request condition
S173
Transmit analyzed result of every structure to semantic understanding/information generating unit
S174
End

FIG. 32

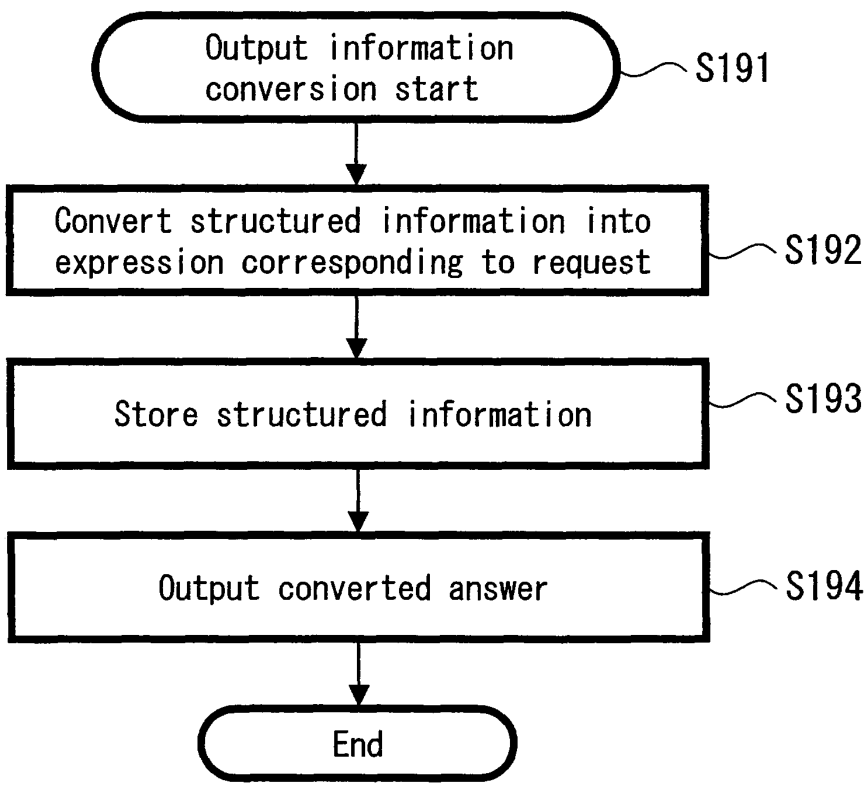
Output information conversion start
S191
Convert structured information into expression corresponding to request
S192
Store structured information
S193
Output converted answer
S194
End

FIG. 31

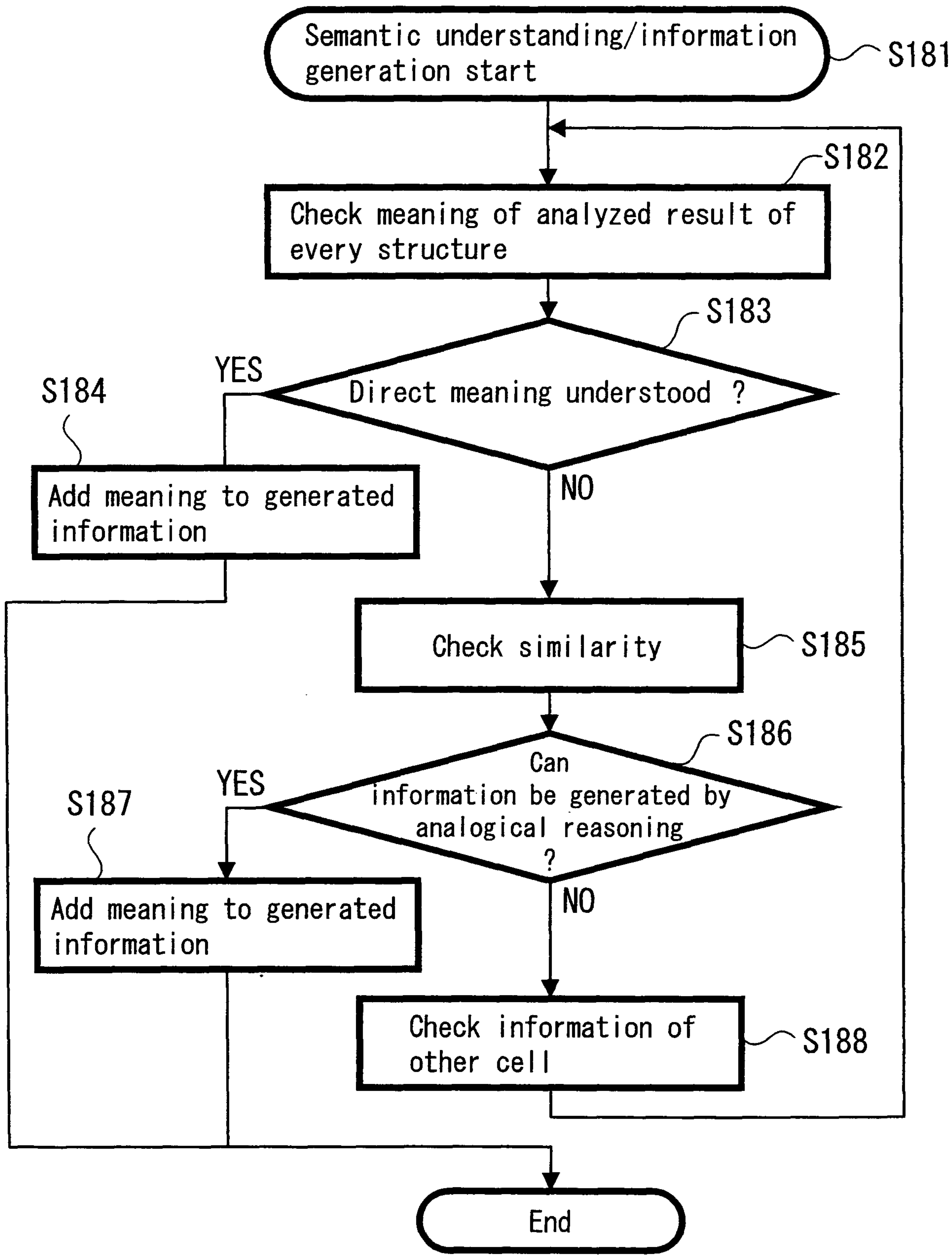
Semantic understanding/information generation start
S181
S182
Check meaning of analyzed result of every structure
S183
YES
S184
Direct meaning understood ?
Add meaning to generated information
NO
Check similarity
S185
S186
YES
S187
Can information be generated by analogical reasoning ?
Add meaning to generated information
NO
Check information of other cell
S188
End

DESCRIPTION OF REFERENCE NUMERALS

1, 21 ... comprehansive information collecting unit

2, 22 ... semantic relation extracting unit

3, 23 ... self-organizing (structuring) unit

4, 24 ... knowledge base (unit integration/independent memory unit)

5 ... input unit (inquiry unit)

6 ... verifying unit

7, 28 ... information generating unit

8 ... evaluating unit

9 ... judging unit

10 ... deciding unit

11, 31 ... output unit (knowledge generating unit)

61 ... central management computer

62 ... cell computer

71 ... question input unit

72 ... request condition analyzing unit

73 ... request condition processing target cell detecting unit

74 ... whole cell

75 ... unsuitable cell

76 ... retrieval transmitting and receiving unit

77 ... suitable cell

78 ... retrieval result analyzing unit

79 ... semantic understanding/information generating unit

80 ... output information converting unit

81 ... answer output unit

91 ... hub

92 ... request condition processing target judging unit

93 ... unsuitable reply/connection destination cell communicating unit

94 ... hub

95 ... cell

96 ... hub

97 ... retrieval receiving unit

98 ... connection destination judging unit

99 ... knowledge memory unit

100 ... connection destination cell memory unit

101 ... retrieval answer unit

102 ... hub

**INTERNATIONAL SEARCH REPORT**

International application No.
PCT/JP03/13327

A. CLASSIFICATION OF SUBJECT MATTER
Int.Cl$^7$ G06N5/00

According to International Patent Classification (IPC) or to both national classification and IPC

B. FIELDS SEARCHED

Minimum documentation searched (classification system followed by classification symbols)
Int.Cl$^7$ G06N5/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JOIS(JST FILE), Yuzuru FUJIWARA

C. DOCUMENTS CONSIDERED TO BE RELEVANT

| Category* | Citation of document, with indication, where appropriate, of the relevant passages | Relevant to claim No. |
|---|---|---|
| Y | Yuzuru FUJIWARA, "Johogaku Kisoron no Genjo to Tenbo", Journal of Japan Society of Information and knowledge, Vol.9, No.1, Japan, 23 April, 1999 (23.04.99), pages 13 to 29; full text; Figs. 1 to 5 | 1-14 |
| Y | JP 2002-132506 A (Kabushiki Kaisha Kokusai Denki Tsushin Kiso Gijutsu Kenkyusho), 10 May, 2002 (10.05.02), Full text; Figs. 1 to 13 (Family: none) | 1-14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 January, 2004 (16.01.04) | Date of mailing of the international search report<br>27 January, 2004 (27.01.04) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/13327

C (Continuation). DOCUMENTS CONSIDERED TO BE RELEVANT

| Category* | Citation of document, with indication, where appropriate, of the relevant passages | Relevant to claim No. |
|---|---|---|
| Y | MORIMOTO, T., KONDO, T., SUGITA, K., ISHIKAWA, D., IKEMURA, M., FUJIWARA, Y., "The Intelligent Method of Information Retrieval Based on Self Organized Knowledge Resources", Proceedings of the Second NTCIR Workshop Meeting on Evaluation of Chinese & Japanese Text Retrieval and Text Summarization, Tokyo Japan, March, 2001, p.5-129-5-135., full text; Figs. 1 to 5 | 1-14 |
| Y | Tadakiyo OU et al., "Ruisui Kino o Motsu Yuki Gosei Kenkyuyo Joho Base System", Information Processing Society of Japan Kenkyu Hokoku, Vol.92, No.54, Japan, 14 July, 1992 (14.07.92), pages 33 to 40; page 38; Fig. 6 | 1-4 |
| | JP 8-305729 A (Oki Electric Industry Co., Ltd.), 22 November, 1996 (22.11.96), | |
| Y | Full text; Figs. 1 to 12 | 8,12 |
| A | Same as the above (Family: none) | 2-7,9-11, 14 |
| | JP 2000-259648 A (Sharp Corp.), 22 September, 2000 (22.09.00), | |
| Y | Full text; Figs. 1 to 33 | 8,13 |
| A | Same as the above (Family: none) | 2-7,9-11, 14 |

Form PCT/ISA/210 (continuation of second sheet) (July 1998)

**INTERNATIONAL SEARCH REPORT**

International application No.
PCT/JP03/13327

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

The technical features common to claims 1-14 relate to means (step) for extracting meaning relationship, means (step) for storing structured knowledge, means (step) for generating new information, and means (step) for evaluating/judging the new knowledge. However, the search has revealed that these means (steps) are not novel and these common features cannot be special technical features. Accordingly, there exists no technical feature common to all the claims.

(Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest.
☒ No protest accompanied the payment of additional search fees.

Form PCT/ISA/210 (continuation of first sheet (1)) (July 1998)

**INTERNATIONAL SEARCH REPORT**

International application No.
PCT/JP03/13327

Continuation of Box No. II of continuation of first sheet(1)

Moreover, the technical feature common to claims 2-14 relates to that only the unit (cell computer) containing the related node is to be searched. However, claim 1 does not have this technical feature. Accordingly, there exists no common feature that can be considered as a special technical feature between the claim 1 and claims 2-14. Consequently, claim 1 and claims 2-14 do not satisfy the requirement of unity of invention.

Form PCT/ISA/210 (extra sheet) (July 1998)